# EUROPEAN PATENT APPLICATION

(11) **EP 3 952 493 A1**
(43) Date of publication of application: **09.02.2022**
(21) Application number: 20777745.9
(22) Date of filing: 24.03.2020
(51) Int. Cl.: H04W 64/00

(54) **COMMUNICATION SYSTEM, BASE STATION, AND HOST DEVICE**

(30) Priority: 27.03.2019 JP 2019060047
(71) Applicant: MITSUBISHI ELECTRIC CORPORATION, Chiyoda-ku Tokyo 100-8310 (JP)
(72) Inventor: SHIMODA Tadahiro, Tokyo 100-8310 (JP); MOCHIZUKI Mitsuru, Tokyo 100-8310 (JP); HASEGAWA Fumihiro, Tokyo 100-8310 (JP); SUZUKI Kuniyuki, Tokyo 100-8310 (JP); UCHINO Daichi, Tokyo 100-8310 (JP); NAKAMURA Kiyoshige, Tokyo 100-8310 (JP); FUKUI Noriyuki, Tokyo 100-8310 (JP)
(74) Representative: Sajda, Wolf E.
(86) International application number: PCT/JP2020/012912
(87) International publication number: WO 2020/196483

(57) **Abstract**

Provided is a radio communication technology with high reliability. A communication system includes a communication terminal, base stations performing radio communication with the communication terminal, and a host device of the base stations. A serving base station of the communication terminal or the host device selects, from among the base stations, a positioning base station transmitting a positioning signal for measuring a position of the communication terminal. The positioning base station transmits the positioning signal, and the communication terminal receives the positioning signal. The communication terminal, the serving base station, or the host device estimates the position of the communication terminal, based on a reception result of the positioning signal from the communication terminal, and a specific-precision positioning base station that can communicate with the communication terminal via direct waves is selected as the positioning base station when positioning precision required for positioning of the communication terminal is higher than or equal to specific precision (ST1450, ST1452, ST1453).

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

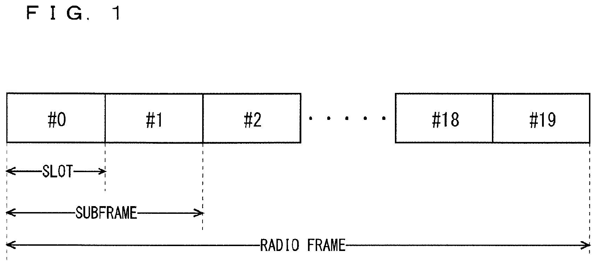

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgement (Ack) / negative acknowledgement (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS38.211 V15.2.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Furthermore, several new technologies have been studied in 3GPP. The example studies include the positioning using the 5G system (see Non-Patent Document 20 (3GPP R2-1817898) and Non-Patent Document 21 (3GPP RP-182862)), and the Time Sensitive Network (TSN, see Non-Patent Document 22 (3GPP RP-182090) and

### Non-Patent Document 23 (3GPP R2-1816690))

### Prior-Art Documents

### Non-Patent Documents

Non-Patent Document 1: 3GPP TS 36.300 V15.4.0
Non-Patent Document 2: 3GPP S1-083461
Non-Patent Document 3: 3GPP TR 36.814 V9.2.0
Non-Patent Document 4: 3GPP TR 36.912 V15.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V14.1.0
Non-Patent Document 11: 3GPP RP-172115
Non-Patent Document 12: 3GPP TS 37.340 V15.2.0
Non-Patent Document 13: 3GPP TS 38.211 V15.2.0
Non-Patent Document 14: 3GPP TS 38.213 V15.2.0
Non-Patent Document 15: 3GPP TS 38.214 V15.2.0
Non-Patent Document 16: 3GPP TS 38.300 V15.2.0
Non-Patent Document 17: 3GPP TS 38.321 V15.2.0
Non-Patent Document 18: 3GPP TS 38.212 V15.2.0
Non-Patent Document 19: 3GPP RP-161266
Non-Patent Document 20: 3GPP R2-1817898
Non-Patent Document 21: 3GPP RP-182862
Non-Patent Document 22: 3GPP RP-182090
Non-Patent Document 23: 3GPP R2-1816690
Non-Patent Document 24: 3GPP R1-1901483
Non-Patent Document 25: 3GPP TR22.804 V16.1.0
Non-Patent Document 26: 3GPP R3-185808
Non-Patent Document 27: 3GPP TS36.331 V15.3.0
Non-Patent Document 28: 3GPP R2-1817173
Non-Patent Document 29: 3GPP RP-182111
Non-Patent Document 30: 3GPP TS38.305 V15.2.0
Non-Patent Document 31: 3GPP TS23.032 V15.1.0
Non-Patent Document 32: 3GPP R2-1818221
Non-Patent Document 33: 3GPP TR 38.885 V1.0.0
Non-Patent Document 34: 3GPP TS38.413 V15.2.0
Non-Patent Document 35: 3GPP R2-1817107

### Summary

### Problems to be Solved by the Invention

The positioning using the 5G communication system (hereinafter may be referred to as the 5G system) has been studied in 3GPP. Examples of the study include the indoor positioning in a factory (see Non-Patent Document 21 (3GPP RP-182862)). The positioning with beams in the 5G system has been studied (see Non-Patent Document 24 (3GPP R1-1901483)). Since many obstacles such as shelves are placed in the indoor environment, there is a possibility that the base station and the UE communicate via reflected waves. This causes problems of an error in a direction of the UE when viewed from the base station, and increase in the positioning error.

To satisfy the Ultra-Reliable and Low Latency Communication (URLLC) requirements, support of the Time Sensitive Network (TSN) has been studied in 3GPP (see Non-Patent Document 22 (3GPP RP-182090)). The Time Sensitive Network requires clock synchronization between a plurality of UEs (see Non-Patent Document 25 (3GPP TR22.804 V16.1.0)). Clock synchronization between a base station and each UE has been studied as a method for synchronizing the clocks of a plurality of UEs (see Non-Patent Document 26 (3GPP R3-185808), Non-Patent Document 27 (3GPP TS36.331 V15.3.0), and Non-Patent Document 28 (3GPP R2-1817173)). Furthermore, support of not only broadcasts but also unicasts and groupcast in the sidelink (SL) communication in NR has been studied (see Non-Patent Document 29 (3GPP RP-182111)). Since none discloses a method on synchronization of the clocks between UEs using the SL, in the SL in NR, the UEs have a problem of failing to synchronize their clocks.

The various problems above may, for example, hinder high reliability.

In view of the problems, one of the objects of the present invention is to provide a radio communication technology with high reliability.

### Means to Solve the Problems

The present invention provides a communication system including: a communication terminal; a plurality of base stations configured to perform radio communication with the communication terminal; and a host device of the plurality of base stations, wherein one of a serving base station of the communication terminal and the host device selects, from among the plurality of base stations, a positioning base station that transmits a positioning signal for measuring a position of the communication terminal, the positioning base station transmits the positioning signal, the communication terminal receives the positioning signal, one of the communication terminal, the serving base station, and the host device estimates the position of the communication terminal, based on a reception result of the positioning signal from the communication terminal, and a specific-precision positioning base station that can communicate with the communication terminal via direct waves is selected as the positioning base station when positioning precision required for positioning of the communication terminal is higher than or equal to specific precision.

The present invention also provides a base station configured to perform radio communication with a communication terminal, wherein the base station selects a positioning base station that transmits a positioning signal for measuring a position of the communication terminal, and the base station selects, as the positioning base station, a specific-precision positioning base station that can communicate with the communication terminal via direct waves when positioning precision required for positioning of the communication terminal is higher than or equal to specific precision.

The present invention also provides a host device of a plurality of base station configured to perform radio communication with a communication terminal, wherein the host device selects, from among the plurality of base stations, a positioning base station that transmits a positioning signal for measuring a position of the communication terminal, and the host device selects, as the positioning base station, a specific-precision positioning base station that can communicate with the communication terminal via direct waves when positioning precision required for positioning of the communication terminal is higher than or equal to specific precision.

### Effects of the Invention

The present invention can provide a radio communication technology with high reliability.

The objects, features, aspects and advantages of the present invention will become more apparent from the following detailed description of the present invention when taken in conjunction with the accompanying drawings.

### Brief Description of Drawings

- FIG. 1: is a diagram illustrating the configuration of a radio frame for use in an LTE communication system.
- FIG. 2: is a block diagram showing the overall configuration of an LTE communication system 200 under discussion of 3GPP.
- FIG. 3: is a block diagram illustrating an overall configuration of a NR communication system 210 that has been discussed in 3GPP.
- FIG. 4: illustrates a structure of the DC to be performed by an eNB and a gNB that are connected to the EPC.
- FIG. 5: illustrates a structure of the DC to be performed by gNBs that are connected to the NG core.
- FIG. 6: illustrates a structure of the DC to be performed by the eNB and the gNB that are connected to the NG core.
- FIG. 7: illustrates a structure of the DC to be performed by the eNB and the gNB that are connected to the NG core.
- FIG. 8: is a block diagram showing the configuration of a user equipment 202 shown in FIG. 2.
- FIG. 9: is a block diagram showing the configuration of a base station 203 shown in FIG. 2.
- FIG. 10: is a block diagram showing the configuration of an MME.
- FIG. 11: is a block diagram illustrating a configuration of the 5GC.
- FIG. 12: is a flowchart showing an outline from a cell search to an idle state operation performed by a communication terminal (UE) in LTE communication system.
- FIG. 13: illustrates an example structure of a cell in an NR system.
- FIG. 14: is a sequence diagram illustrating an outline of operations for performing positioning of the UE in a plurality of steps according to the first embodiment.
- FIG. 15: is a sequence diagram illustrating the outline of operations for performing positioning of the UE in a plurality of steps according to the first embodiment.
- FIG. 16: is a sequence diagram illustrating the outline of operations for performing positioning of the UE in a plurality of steps according to the first embodiment.
- FIG. 17: is a sequence diagram illustrating operations when the LMF obtains information on a position of a base station according to the first embodiment.
- FIG. 18: is a sequence diagram illustrating another example of operations for performing positioning of the UE in a plurality of steps according to the first embodiment.
- FIG. 19: is a sequence diagram illustrating another example of operations for performing positioning of the UE in a plurality of steps according to the first embodiment.
- FIG. 20: is a sequence diagram illustrating another example of operations for performing positioning of the UE in a plurality of steps according to the first embodiment.
- FIG. 21: is a sequence diagram illustrating another example of operations for performing positioning of the UE in a plurality of steps according to the first embodiment.
- FIG. 22: is a sequence diagram illustrating another example of operations for performing positioning of the UE in a plurality of steps according to the first embodiment.
- FIG. 23: is a sequence diagram illustrating another example of operations for performing positioning of the UE in a plurality of steps according to the first embodiment.
- FIG. 24: illustrates an example where communication between the base station and the UE via direct waves is estimated from a combination of path losses and propagation delay according to the first modification of the first embodiment.
- FIG. 25: illustrates an example where communication between the base station and the UE via reflected waves is estimated from a combination of path losses and propagation delay according to the first modification of the first embodiment.
- FIG. 26: illustrates an outline of operations of transmitting the CSI-RS in combination with the PRS according to the second embodiment.
- FIG. 27: illustrates operations of the base station that performs positioning when sweeping beams in a beam coverage of a serving base station for communicating with the UE according to the first modification of the second embodiment.
- FIG. 28: illustrates an example where the serving base station notifies overlapping areas with a coverage of a serving beam among a plurality of predefined areas as information on the serving beam according to the first modification of the second embodiment.
- FIG. 29: is a conceptual diagram illustrating differences in radio propagation range between UEs that perform SL communication.
- FIG. 30: illustrates the first example sequence in performing a process of correcting clock synchronization according to the fourth embodiment.
- FIG. 31: illustrates the second example sequence in performing the process of correcting the clock synchronization according to the fourth embodiment.
- FIG. 32: illustrates the third example sequence in performing the process of correcting the clock synchronization according to the fourth embodiment.
- FIG. 33: is a conceptual diagram illustrating transmission timings of UEs that perform SL communication, with application of a conventional method.
- FIG. 34: illustrates the transmission timings of the UEs that perform the SL communication according to the fifth embodiment.
- FIG. 35: illustrates the transmission timings of the UEs that perform the SL communication according to the fifth embodiment.
- FIG. 36: illustrates slots for the SL communication according to the fifth embodiment.
- FIG. 37: illustrates an example sequence of a method for correcting the feedback timing with application of the method disclosed in the fourth embodiment, according to the fifth embodiment.
- FIG. 38: is a conceptual diagram illustrating states where the UEs that perform the SL communication move between two cells.
- FIG. 39: illustrates an example sequence of the HO during the SL communication (with application of a conventional method on HO processes during the SL communication).
- FIG. 40: illustrates the example sequence of the HO during the SL communication (with application of the conventional method on HO processes during the SL communication).
- FIG. 41: illustrates the example sequence of the HO during the SL communication (with application of the conventional method on HO processes during the SL communication).
- FIG. 42: illustrates the first example sequence of the HO during the SL communication according to the sixth embodiment.
- FIG. 43: illustrates the first example sequence of the HO during the SL communication according to the sixth embodiment.
- FIG. 44: illustrates the second example sequence of the HO during the SL communication according to the sixth embodiment.
- FIG. 45: illustrates the second example sequence of the HO during the SL communication according to the sixth embodiment.
- FIG. 46: illustrates a protocol structure when AS layers select the RAT according to the seventh embodiment.
- FIG. 47: illustrates a protocol structure when a V2X layer selects the RAT according to the seventh embodiment.
- FIG. 48: illustrates a protocol structure when the AS layers include a protocol stack for selecting and/or changing the RAT (RAT selection/RAT change) according to the seventh embodiment.
- FIG. 49: illustrates an example sequence for changing the RAT according to the seventh embodiment.
- FIG. 50: illustrates a protocol structure including the common PDCP having RAT common functions according to the first modification of the seventh embodiment.
- FIG. 51: illustrates an example sequence for changing the RAT according to the first modification of the seventh embodiment.
- FIG. 52: illustrates a protocol structure including the common RLC according to the first modification of the seventh embodiment.
- FIG. 53: illustrates a protocol structure when the PDCP in LTE performs PDCP duplication during operations in LTE and NR according to the second modification of the seventh embodiment.
- FIG. 54: illustrates a protocol structure when the PDCP in NR performs the PDCP duplication during operations in LTE and NR according to the second modification of the seventh embodiment.
- FIG. 55: illustrates a protocol structure when the common PDCP performs the PDCP duplication during operations in LTE and NR according to the second modification of the seventh embodiment.

### Description of Embodiments

### The First Embodiment

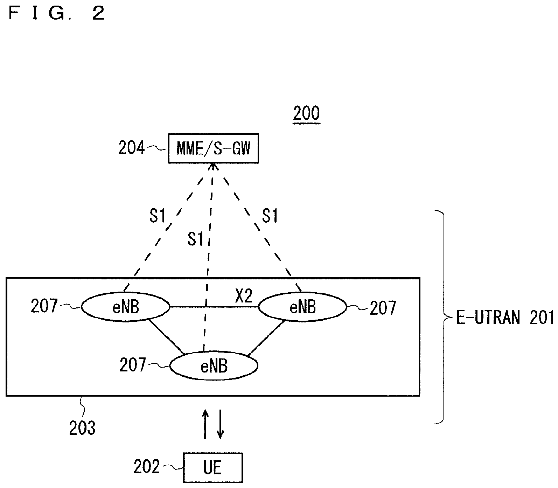

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC_CONNECTED.

In RRC _IDLE, public land mobile network (PLMN) selection, system information (SI) broadcast, paging, cell reselection, mobility, and the like are performed. In RRC CONNECTED, the user equipment has RRC connection and is capable of transmitting and receiving data to and from a network. In RRC_CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

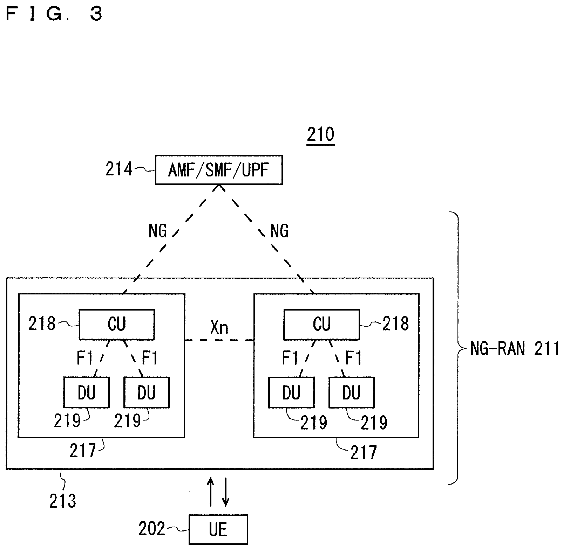

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NR base station (NG-RAN NodeB (gNB))") 213, and transmits and receives signals to and from the NR base station 213 via radio communication. Furthermore, the core network is referred to as a 5G Core (5GC).

When control protocols for the UE 202, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC CONNECTED, and RRC INACTIVE.

RRC_IDLE and RRC_CONNECTED are identical to those in LTE. In RRC INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

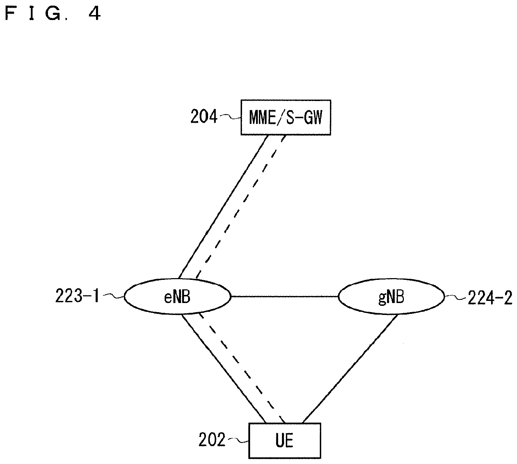

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

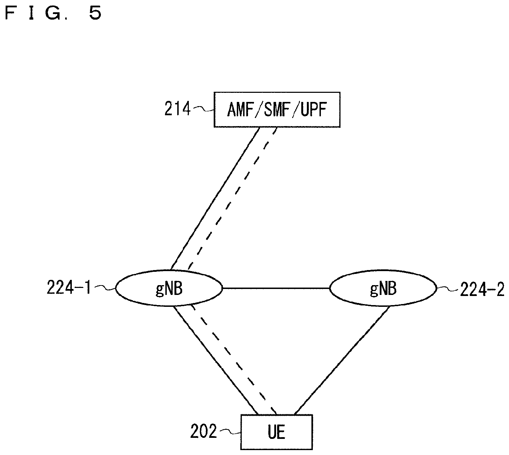

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

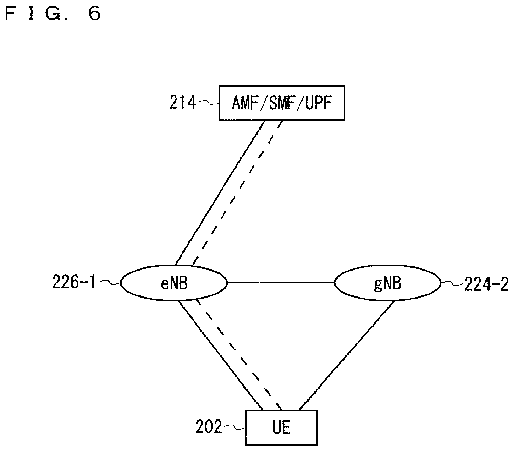

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

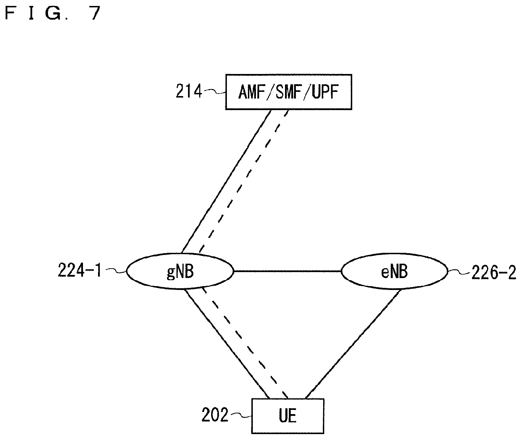

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

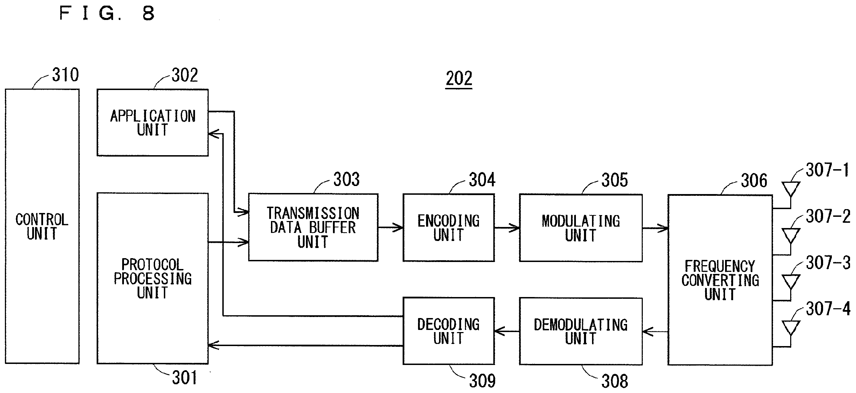

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction.

There may exist the data output from the transmission data buffer unit 303 directly to a modulating unit 305 without the encoding process. The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction.

Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

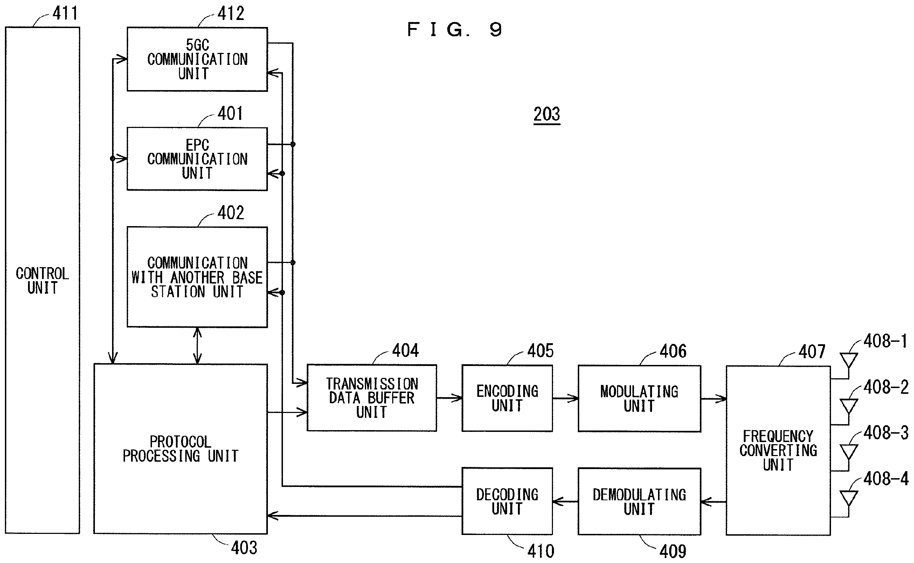

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station.

The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406. The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction.

Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401, and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

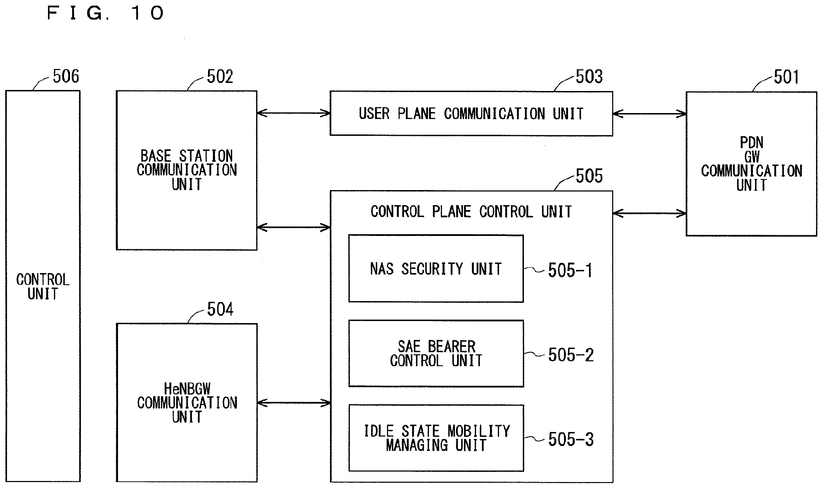

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface. In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility managing unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer. The idle state mobility managing unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility managing unit 505-3 may manage the CSG of the eNBs 207 to be connected to the MME 204a, CSG IDs, and a whitelist.

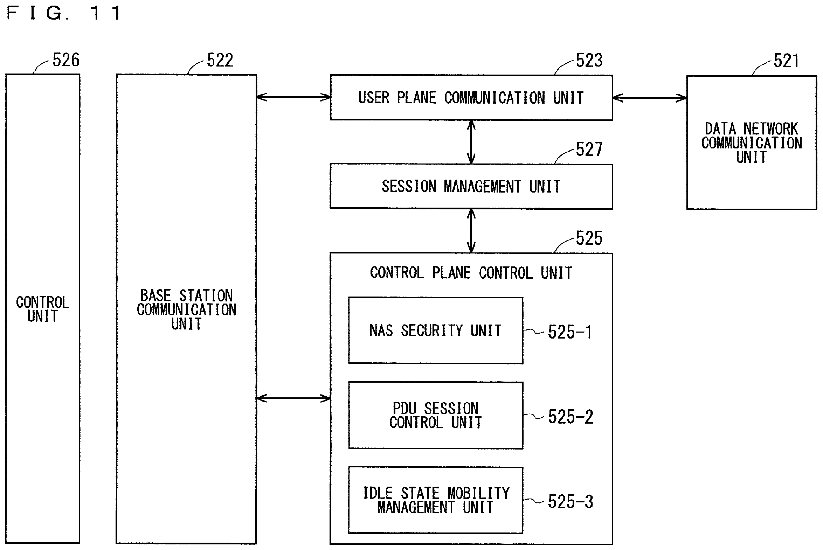

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data to a session management unit 527 through the user plane control unit 523. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility managing unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility managing unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

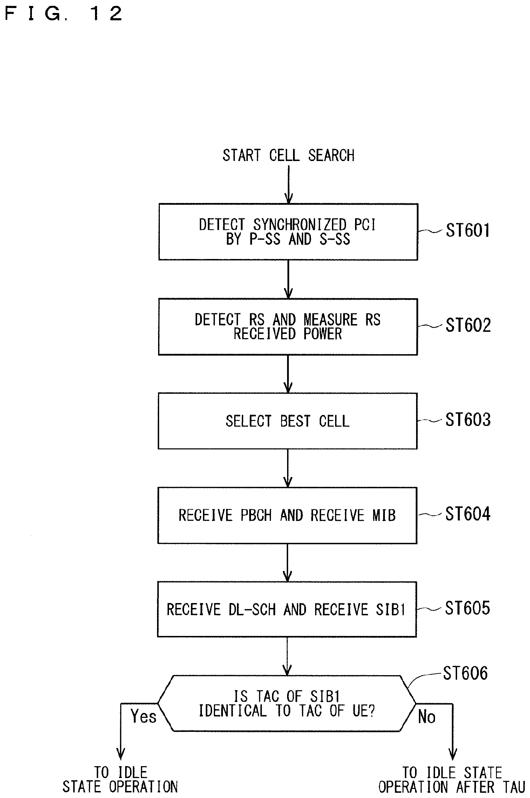

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP). The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB 1 contains a tracking area code (TAC).

In Step ST606, next, the communication terminal compares the TAC of the SIB 1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

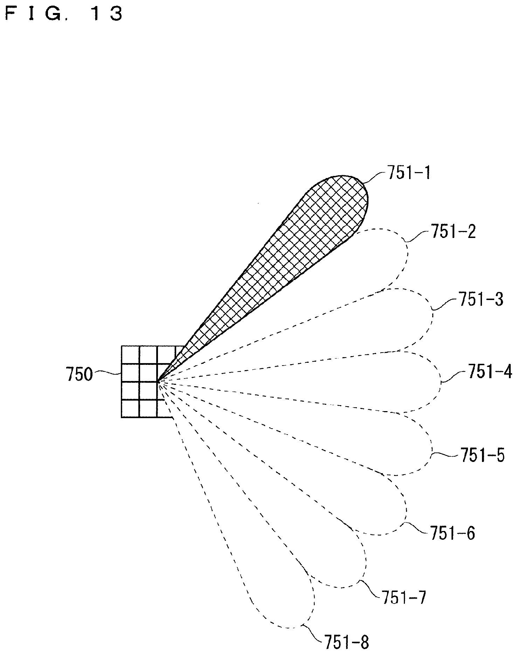

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

A Location Management Function (LMF) may be provided for the positioning using the 5G system. The LMF may control the positioning in the 5G system. The LMF may instruct the base station to perform positioning of the UE. The base station may instruct the UE to perform its positioning. As another example, the UE may request the LMF to perform positioning of its own UE. The base station may notify the request to the LMF.

The positioning protocol (e.g., LTE Positioning Protocol (LPP) or NR Positioning Protocol A (NRPPa)) disclosed in Non-Patent Document 30 (3GPP TS38.305 V15.2.0) may be used for the signaling between the Location Management Function (LMF) and the UE. Similar protocols may be used for the signaling between the LMF and the UE.

The positioning with beams may be performed in NR. The base station may determine a position of the UE, using a direction of a beam for the positioning of the UE and information on a distance between the base station and the UE. Furthermore, a plurality of base stations may perform the positioning in NR. For example, a plurality of base stations may perform the positioning with beams. The plurality of base stations may determine, as the position of the UE, an overlapping area of beam coverage areas used by the base stations.

The base stations may be Distributed Units (DUs) or TRPs. For example, each of the base stations may perform positioning, using a plurality of DUs or a plurality of TRPs.

The base station and the UE need to communicate via direct waves to perform high-precision positioning with beams. Since many obstacles such as shelves are placed in the indoor environment, there is a possibility that the base station and the UE communicate via reflected waves. This causes problems of an error in a direction of the UE when viewed from the base station, and increase in the positioning error.

The first embodiment discloses a method for solving the problems.

A base station in a position visible from the UE performs positioning. The position visible from the UE may be represented as a line-of-sight position from the UE. This representation is also applicable when, for example, a device other than the UE is used as a starting point. The base station may be a DU or a TRP (the same may apply to the following description). The base station may be, for example, a base station near the UE.

The positioning of the UE may be performed in a plurality of steps. The positioning of the UE may be performed, for example, in two steps or in three or more steps. Positioning types may be provided for the positioning performed in a plurality of steps. Examples of the types may include preliminary positioning and precise positioning.

Information on the positioning may be provided in each of the steps. The following (1) to (7) are disclosed as examples of the information provided in each of the steps.
(1) Positioning precision
(2) An entity that determines a positioning base station
(3) Information on, for example, a communication system for the positioning
(4) A positioning method
(5) A required time for the positioning
(6) Information on the number of base stations that perform positioning
(7) Combinations of (1) and (6) above

The positioning precision in (1) may be given, for example, in a predetermined unit (e.g., in meters). This can, for example, avoid the design complexity on notification of the positioning precision. As another example, a parameter representing required precision may be provided. Each value of the parameter may be associated with the required precision. This can, for example, reduce the bit size for notifying the positioning precision.

The entity that determines a positioning base station in (2) may be, for example, a serving gNB. This can, for example, reduce the amount of signaling for the positioning between a 5G core and the base station. As another example, the determining entity may be the LMF. This can, for example, reduce the amount of processing in the base station.

The information on a communication system for the positioning in (3) may be on, for example, the 5G system, the LTE system, the wireless LAN, or the Bluetooth (registered trademark). As another example, the information in (3) may be information indicating the positioning using, for example, a gravitational acceleration sensor, a speed sensor, or a sensor mounted on an NB-IoT device (e.g., an atmosphere pressure sensor), or information indicating the positioning using the GNSS. The UE may notify the information obtained by the sensor to a serving base station, the AMF, or the LMF. The measurement result of the sensor may be included in the RRC signaling, the NAS signaling, or the signaling of the LPP and/or the NRPPa. Inclusion of the information in (3) can, for example, increase the flexibility of positioning of the UE.

Information on the positioning method in (4) may include, for example, information indicating whether the positioning is performed with beams. Consequently, use of, for example, information indicating that the positioning is not performed with beams can accelerate the positioning. As another example, use of information indicating the positioning with beams can increase the precision of the positioning.

As another example, the information in (4) may include information indicating the positioning using Observed Time Difference Of Arrival (OTDOA) and/or Enhanced Cell ID (ECID) that are disclosed in Non-Patent Document 30 (3GPP TS38.305 V15.2.0), or information indicating whether a signal for the positioning is an uplink signal or a downlink signal. This can, for example, increase the flexibility of the positioning.

The required time for the positioning in (5) may be given, for example, in predetermined unit (e.g., in milliseconds). This can, for example, avoid the design complexity on notification of the required time for the positioning. As another example, a parameter representing the required time may be provided. Each value of the parameter may be associated with the required time. This can, for example, reduce the bit size for notifying the required time for the positioning.

The number of base stations to be used for positioning may be determined using the information in (6) in the communication system. For example, reduction in the number of base stations can accelerate the positioning. As another example, increase in the number of base stations can increase the precision of the positioning.

The information in (1) to (7) may be predefined in a standard. This can, for example, reduce the amount of signaling between the LMF and the base station. As another example, the LMF may determine the information. The LMF may notify the base station of the information. This enables, for example, flexible positioning. As another example, the AMF may determine the information. Since the AMF can determine, for example, the number of base stations to be used for positioning using load states of the base stations, the efficiency in the communication system can be increased. As another example, the base station may determine the information. The base station may be, for example, a serving base station. This can, for example, increase the flexibility of positioning and reduce the amount of signaling between the LMF and the base station. As another example, a base station different from the serving base station, for example, a base station provided for the positioning may determine the information. This can, for example, increase the efficiency in the communication system.

The information in (1) to (7) may be configured for each UE. For example, the positioning precision in (1) or the required time for the positioning in (5) may vary for each UE. This enables, for example, efficient positioning and saving of the resources in the communication system.

The preliminary positioning may be performed first in the communication system. The preliminary positioning may be, for example, positioning for estimating an approximate position of a positioning target UE (may be hereinafter referred to as a target UE). In the preliminary positioning, for example, a base station to which the target UE is connected (may be hereinafter referred to as a serving base station) may determine a base station that performs positioning. The base station that performs positioning may be, for example, a base station around the serving base station or a base station in a RAN Notification Area (RNA) to which the serving base station belongs. This can, for example, reduce the signaling between the base station and the 5G core system.

As another example, the LMF may select a base station that performs positioning. The LMF may select the base station using, for example, information on a position of the base station. As an example of using the information on the position of the base station, the LMF may select, as the base station that performs positioning, a base station in a section to which the serving base station belongs. The section may be, for example, an indoor room or an area separated by dividers in the room. Alternatively, the section may be, for example, defined per floor level of a building. For example, the LMF selects a base station in an edge and/or a corner of the room, so that a coverage of the preliminary positioning can be increased.

As another example, the AMF may select the base station that performs positioning. The AMF may select the base station using, for example, information on loads of base stations being served thereby. This can, for example, balance the loads in the communication system. Consequently, the stability in the communication system can be increased.

The serving base station may be used for the preliminary positioning. This enables, for example, effective signaling in the preliminary positioning. As another example, the serving base station need not be used for the preliminary positioning. This enables, for example, the serving base station to transmit and receive data to and from another UE. Consequently, the efficiency in the communication system can be increased.

The precise positioning may be performed in the communication system. The precise positioning may be performed, for example, after the preliminary positioning. In the precise positioning, the LMF may determine a base station that performs positioning. The LMF may determine, as the base station that performs positioning, a base station that can perform line-of-sight communication with the target UE (i.e., a base station that can communicate with the target UE via direct waves). The LMF may determine the base station using information on a position of an obstacle. This enables, for example, the positioning between the base station and the UE via direct waves. Consequently, the positioning precision can be increased.

Similarly to the preliminary positioning, the serving base station may be or need not be used for the precise positioning. This produces, for example, the same advantages as those of the preliminary positioning.

The LMF may instruct the serving base station of the target UE to perform positioning of the target UE. The instruction may include information indicating the preliminary positioning, information on a positioning base station, or information for identifying the target UE. The LMF may notify the serving base station of the instruction through the AMF

The information on the positioning base station included in the instruction may be information indicating that the serving base station is an entity that determines the positioning base station. The serving base station may determine the positioning base station, using the information. The positioning base station may be, for example, a base station in a neighborhood of the serving base station, a base station in a RAN Notification Area (RNA) to which the serving base station belongs, an eNB, or a gNB. This enables, for example, the serving base station to flexibly select the positioning base station.

As another example, the information on the positioning base station may be information for identifying the positioning base station. For example, the serving base station need not perform a process of determining the positioning base station. This can reduce the amount of processing in the serving base station.

[and ] The serving base station may notify the base station that performs positioning of the instruction received from the LMF. The serving base station may give the notification through, for example, an interface between the base stations (e.g., the Xn interface). The notification may include the information for identifying the target UE, information on the frequency and/or time resources of a positioning signal for the positioning of the UE, or information on a code sequence of the positioning signal. Examples of the positioning signal may include a downlink PRS, an SS block, an uplink DM-RS, and the CSI-RS. Further, the examples of the positioning signal may include an uplink PRS, the SRS, the PRACH.

The serving base station may determine the information on the frequency and/or time resources of the positioning signal and/or the code sequence of the positioning signal. This can, for example, increase the flexibility on the configuration of the positioning signal. As another example, the LMF may determine the information and notify the serving base station of the information. This can, for example, avoid the complexity on the configuration of the positioning signal.

The base station that performs positioning may configure the positioning, using the information. The base station may notify the serving base station of the completion of the configuration. The serving base station may instruct the UE to receive the positioning signal. The serving base station may issue the instruction, for example, via the RRC dedicated signaling (e.g., RRC reconfiguration (RRCReconfiguration)). As another example, the serving base station may issue the instruction, for example, via the RRC common signaling, e.g., using the system information. The RRC common signaling may be used, for example, when the serving base station simultaneously instructs a plurality of UEs to perform positioning. This enables, for example, prompt issuance of the instructions to the plurality of UEs.

The serving base station may transmit the instruction to each of the UEs, after the base station notifies the serving base station of the completion of the configuration. The instruction may include information on the base station to be used for positioning, information on the positioning signal, for example, the information on the frequency and/or time resources of the signal, and/or information on the code sequence of the positioning signal. The serving base station may give the information on the positioning signal for each base station to be used for positioning.

For example, when the base station to be used for positioning cannot configure the positioning signal, the serving base station may notify the UE of the instruction except for information on the base station that cannot configure the positioning signal and/or information on the configuration of the positioning signal to be used by the base station. This can, for example, prevent a variance on the configuration of the positioning signal between the UE, the serving base station, and the base station that performs positioning. Consequently, the stability in the communication system can be increased.

The instruction to be transmitted from the serving base station to the UE may include the information on the frequency and/or time resources of the positioning signal, the information on the code sequence of the positioning signal, or information on the base station that performs positioning. The instruction may include combined information of some of these. The information on the base station that performs positioning may include an identifier of the base station, or information on the transmission timing of the base station. The information on the transmission timing of the base station may be, for example, information of the base station on a frame offset for the serving base station. Inclusion of the information on the frame offset in the instruction enables, for example, the UE to establish downlink synchronization without receiving a synchronization signal (e.g., an SS block) transmitted from the base station. This can accelerate the positioning.

Upon receipt of the instruction, the UE may configure the positioning. The UE may notify the serving base station of the completion of the configuration for the positioning. The UE may give the notification, for example, via the RRC dedicated signaling (e.g., RRC reconfiguration completion (RRCReconfigurationComplete)). The serving base station may notify the base station that performs positioning of the completion of the configuration in the UE. The serving base station may notify the base station that performs positioning via the signaling in the interface between the base stations (e.g., the Xn interface). Upon receipt of the notification, the base station that performs positioning may transmit and/or receive the positioning signal to and from the UE. For example, after the UE completes the configuration of the positioning signal, the base station that performs positioning can transmit the positioning signal. This can increase the use efficiency of the frequency, time, and/or code resources for the positioning.

The UE may receive or transmit the positioning signal, with the configuration included in the instruction to be transmitted from the serving base station.

The UE may report a reception result of the positioning signal to the serving base station. The serving base station may estimate the position of the UE, using the result. The serving base station may transmit information on the estimated position to the LMF. The serving base station may transmit the information through the AMF.

The LMF may determine a base station to be used for the precise positioning. The LMF may make the determination, for example, using a result of the preliminary positioning. The LMF may determine, for example, a base station in a line-of-sight position from the UE as the base station to be used for the precise positioning. The LMF may obtain, in advance, information on a propagation environment, for example, information on an obstacle. This can, for example, increase the precision of the positioning of the UE.

The LMF may instruct the base station that performs positioning to perform positioning of the target UE. The instruction may include information indicating the precise positioning, information for identifying the target UE, or information on the configuration of the positioning signal. The LMF may issue the instruction to the base station through the AMF.

The LMF may determine beams that the base station uses for the positioning. The LMF may make the determination, for example, using a result of the preliminary positioning. The LMF may include information on the beams in the information on the configuration of the positioning signal and notify the serving base station of the information. This can, for example, reduce the amount of processing on control of the positioning to be performed by the serving base station.

As another example, the LMF may instruct the serving base station to perform positioning of the UE. The instruction may include information indicating the precise positioning, or information similar to that for instructing the preliminary positioning.

Besides, the signaling for the precise positioning may be the same as that for the preliminary positioning. This can, for example, avoid the design complexity in the communication system.

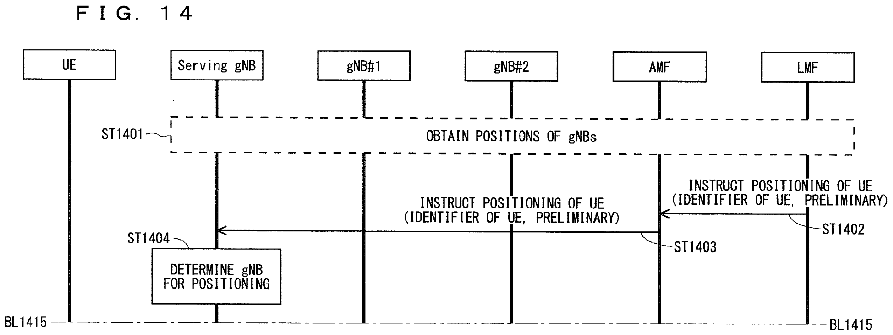

FIGS. 14 to 16 illustrate an outline of operations for performing positioning of the UE in a plurality of steps. FIGS. 14 to 16 are connected across locations of borders BL1415 and BL1516. FIGS. 14 to 16 illustrate an example of performing positioning of the UE in two steps, specifically, an example of performing the preliminary positioning in the first step and the precise positioning in the second step. In the example of FIGS. 14 to 16, the serving gNB and the gNB #1 perform positioning of the UE in the first step, and the serving gNB and the gNB #2 perform positioning of the UE in the second step. In the example of FIGS. 14 to 16, the serving gNB determines a base station that performs the positioning in the first step, and the LMF determines a base station that performs the positioning in the second step.

In a procedure ST1401 in FIG. 14, the LMF obtains information on positions of the serving gNB, the gNB #1, and the gNB #2.

In Steps ST1402 to ST1441 in FIGS. 14 to 16, the positioning in the first step is performed.

In Steps ST1402 and ST1403 in FIG. 14, the LMF instructs the serving gNB to perform positioning of the UE through the AMF. Step ST1402 indicates notification of the instruction from the LMF to the AMF, and Step ST1403 indicates notification of the instruction from the AMF to the serving gNB. The positioning protocol (e.g., LTE Positioning Protocol (LPP) or NR Positioning Protocol A (NRPPa)) may be used for the instruction in Steps ST1402 and ST1403.

The instruction in Steps ST1402 and ST1403 may include information indicating the preliminary positioning. As another example, the instruction may include information indicating the positioning in the first step. As another example, the instruction may include information on the base stations obtained by the LMF in the procedure ST1401. This enables, for example, the serving gNB to estimate the position of the UE.

In Step ST1404 in FIG. 14, the serving gNB determines a base station to be used for positioning, using the instruction notified in Step ST1403. The serving gNB may determine the base station to be used for positioning, using the preliminary positioning as a positioning type included in the instruction notified in Step ST1403. Alternatively, the serving gNB may determine the base station to be used for positioning, using the instruction as an instruction of the positioning in the first step. The base station may be, for example, a gNB adjacent to its own gNB or a gNB belonging to the same RNA as its own gNB. As another example, the base station may be an LTE base station (eNB). In the example of FIGS. 14 to 16, the serving gNB determines to use the gNB #1 and its own gNB for positioning.

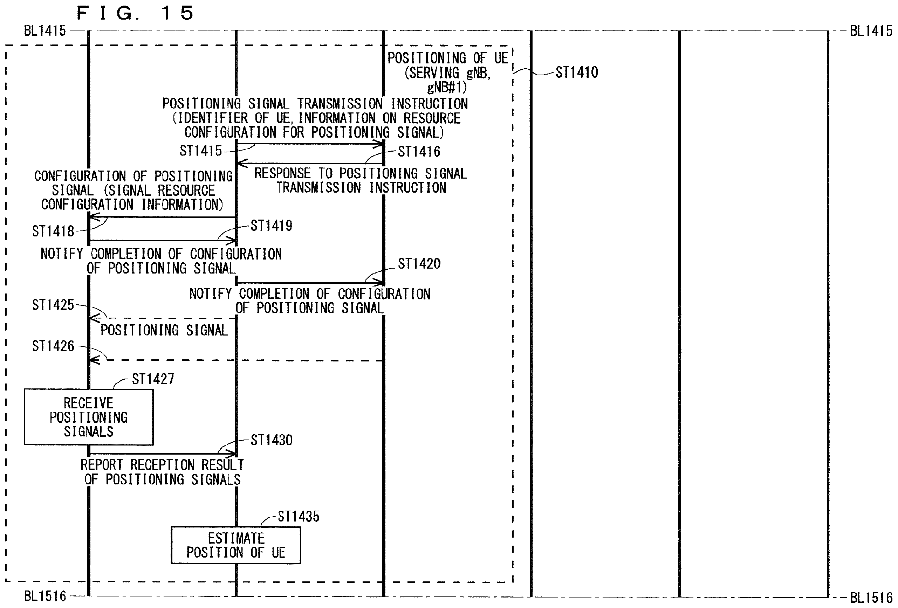

In a procedure ST1410 in FIG. 15, positioning of the UE is performed.

In Step ST1415 in FIG. 15, the serving gNB instructs the gNB #1 to perform positioning of the UE. The serving base station may give the instruction, for example, through the interface between the base stations (e.g., the Xn interface). The instruction may include information on the target UE. The information may be, for example, an identifier of the target UE, or information on a configuration of time resources and/or frequency resources for a positioning signal to be transmitted to the target UE (e.g., a positioning reference signal (PRS)). The gNB #1 configures transmission of the positioning signal to the target UE, using the information obtained in Step ST1415. In Step ST1416, the gNB #1 notifies the serving gNB of completion of the configuration.

In Step ST1418 in FIG. 15, the serving gNB instructs the UE to receive the positioning signal. The instruction may include the information on the base station to be used for positioning (e.g., an identifier of the base station), or information on the configuration of time resources and/or frequency resources of the positioning signal to be transmitted to the UE (e.g., a positioning reference signal (PRS)). The information on the configuration may be information on a configuration of a positioning signal to be transmitted by each base station for positioning. In the example of FIGS. 14 to 16, the instruction may include information on a configuration of a positioning signal to be transmitted by each of the serving gNB and the gNB #1. The UE configures reception of the positioning signals from the serving gNB and the gNB #1, using the information obtained in Step ST1418. In Step ST1419, the UE notifies the serving gNB of completion of the configuration instructed in Step ST1418. In Step ST1420, the serving gNB notifies the gNB #1 of the completion of the configuration in the UE.

In Step ST1425 in FIG. 15, the serving gNB transmits the positioning signal to the UE. In Step ST1426, the gNB #1 transmits the positioning signal to the UE. In Step ST1427, the UE receives the positioning signals transmitted in Step ST1425 and ST1426.

In Step ST1430 in FIG. 15, the UE reports, to the serving gNB, the reception result of the positioning signals in Step ST1427. The UE may give the report, for example, via the RRC signaling or the signaling under the positioning protocol. In Step ST1435, the serving gNB estimates the position of the UE, using the reception result.

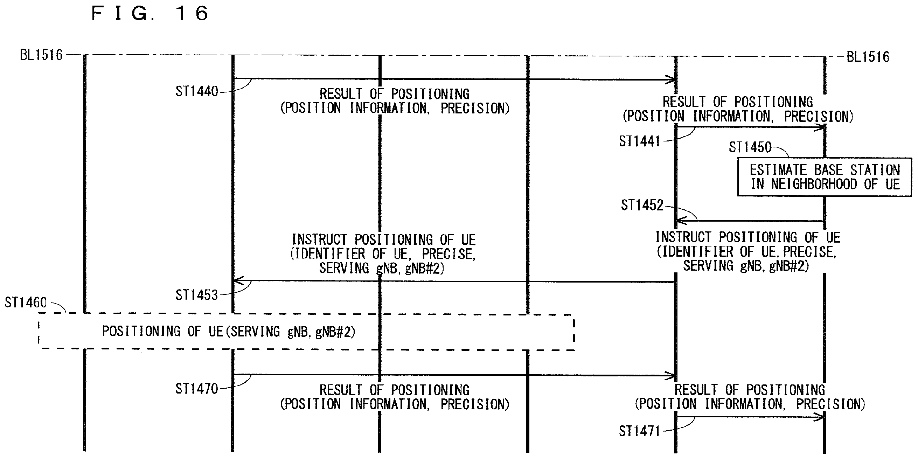

In Steps ST1440 and ST1441 in FIG. 16, the serving gNB reports the result of the estimated position of the UE to the LMF through the AMF. Step ST1440 indicates notification of the report from the serving gNB to the AMF, and Step ST1441 indicates notification of the report from the AMF to the LMF. The reports in Steps ST1440 and ST1441 may include information indicating a result of the preliminary positioning. The positioning protocol (e.g., LTE Positioning Protocol (LPP) or NR Positioning Protocol A (NRPPa)) may be used for the reports in Steps ST1440 and ST1441. The result of the estimated position of the UE that is included in the reports in Steps ST1440 and ST1441 may include information on the position of the UE or information on the precision of the position. Information on the result of the estimated position of the UE may be, for example, information on a universal Geographical Area Description (GAD) shape disclosed in Non-Patent Document 31 (TS23.032 V15.1.0). The protocols in Steps ST1403 and ST1402 may be used for the reports in Steps ST1440 and ST1441, respectively. Through Step ST1441, the LMF obtains information on the position of the UE.

In Steps ST1450 to ST1471 in FIG. 16, the positioning in the second step is performed.

In Step ST1450 in FIG. 16, the LMF determines a base station to be used for the positioning in the second step. The LMF may make the determination, for example, using the information on the position of the UE obtained in Step ST1441, or the information on the positions of the serving gNB, the gNB #1, and the gNB #2 obtained in the procedure ST1401. In the example of FIG. 16, the LMF determines to use the serving gNB and the gNB #2 for the positioning in the second step.

In Steps ST1452 and ST1453 in FIG. 16, the LMF instructs the serving gNB to perform positioning of the UE through the AMF. Step ST1452 indicates notification of the instruction from the LMF to the AMF, and Step ST1453 indicates notification of the instruction from the AMF to the serving gNB. The positioning protocol (e.g., LTE Positioning Protocol (LPP) or NR Positioning Protocol A (NRPPa)) may be used for the instructions in Steps ST1452 and ST1453.

The instructions notified in Steps ST1452 and ST1453 in FIG. 16 may include information indicating the precise positioning. As another example, the instructions may include information on the base stations obtained by the LMF in the procedure ST1401. This enables, for example, the serving gNB to estimate the position of the UE.

The instructions notified in Steps ST1452 and ST1453 in FIG. 16 may include information on the target UE or information on the base station that performs positioning. In the example of FIG. 16, the information on the base station that performs positioning may include information on the serving gNB and the gNB #2. The serving gNB may understand, through Step ST1453, the gNB #2 and its own gNB as base stations that perform the precise positioning. This enables, for example, the serving gNB to promptly perform the precise positioning.

In a procedure ST1460 in FIG. 16, positioning of the UE is performed. The procedure ST1460 may be a procedure obtained by reading the gNB #1 as the gNB #2 in the procedure ST1410. In the procedure ST1460 in FIG. 16, the serving gNB estimates the position of the UE.

In Steps ST1470 and ST1471 in FIG. 16, the serving gNB reports the result of the estimated position of the UE to the LMF through the AMF. Step ST1470 indicates notification of the report from the serving gNB to the AMF, and Step ST1471 indicates notification of the report from the AMF to the LMF. The reports in Steps ST1470 and ST1471 may include information indicating a result of the precise positioning. The positioning protocol (e.g., LTE Positioning Protocol (LPP) or NR Positioning Protocol A (NRPPa)) may be used for the reports in steps ST1470 and ST1471. The result of the estimated position of the UE that is included in the reports in Steps ST1470 and ST1471 may include the information on the position of the UE or the information on the precision of the position. Information on the result of the estimated position of the UE may be, for example, information on the universal Geographical Area Description (GAD) shape disclosed in Non-Patent Document 31 (TS23.032 V15.1.0). The protocols in Steps ST1403 and ST1402 may be used for the reports in Steps ST1470 and ST1471, respectively. Through Step ST1471, the LMF obtains the information on the position of the UE.

Although an example where the serving gNB instructs the gNB #1 to perform positioning of the UE in Step ST1415 in FIG. 15 is disclosed, the serving gNB may issue the instruction through the AMF. The serving gNB may issue the instruction through the AMF, for example, when the serving gNB and the gNB #1 belong to different RNAs or different Tracking Areas (TAs). This enables, for example, the serving gNB to notify the instruction of positioning of the UE to base stations belonging to different RNAs and/or different TAs.

Although FIG. 15 illustrates an example where the UE receives the downlink positioning signals, the UE may transmit uplink positioning signals. Examples of the uplink positioning signals may include the uplink PRS, the SRS, the PRACH, and the DM-RS. When the uplink signals are used for positioning, the positioning signal transmission instruction in Step ST1415 and the response to the positioning signal transmission instruction in Step ST1416 may be configuring a positioning signal and notification of the completion of the configuration of the positioning signal, respectively. Furthermore, the configuring of the positioning signal in Step ST1418 and the notification of the completion of the configuration of the positioning signal in Step ST1419 may be a positioning signal transmission instruction and a response to the positioning signal transmission instruction, respectively. Furthermore, the notification of the completion of the configuration of the positioning signal in Step ST1420 need not be performed. The positioning signals in Steps ST1425 and ST1426 may be signals to be transmitted from the UE to the serving gNB and the gNB #1. The serving gNB and the gNB #1 may receive the positioning signals in Step ST1427, instead of the UE. The gNB #1 may report, to the serving gNB, the reception result of the positioning signal in Step ST1430. The same may apply to the procedure ST1460 in FIG. 16. Transmission of the uplink positioning signals by the UE can, for example, reduce the amount of processing in the base stations.

The LMF may obtain information on the position of the base station in advance. The LMF may request the information on the position of the base station from the base station. In response to the request, the base station may notify the LMF of the position of its own base station.

The base station may perform positioning of its own base station. In response to the aforementioned request, the base station may perform positioning of its own base station. The base station may perform the positioning, for example, using a positioning system such as the GNSS or in a method of using another base station. The other base station may be, for example, a base station in a known position.

The base station may broadcast information on the position of its own base station. The base station may give the broadcast, for example, using the SIB. Using the information, the UE and/or another base station may determine that the position of the base station is known, or obtain the position of the base station. For example, the UE and/or another base station may determine whether the position of the base station is known or unknown, using the presence or absence of the SIB including the information. This enables, for example, the UE and/or the other base station to promptly understand whether the position of the base station is known, and consequently promptly perform the positioning.

The base station may notify the LMF of information on the position of its own base station, even when the LMF does not request the information on the position from its own base station. The base station may notify the LMF of the information on the position of its own base station, when being connected to the LMF or with a predetermined period. The period may be defined, for example, in a standard, determined and notified to the base station by the LMF, determined and notified to the base station by the AMF, or determined by its own base station. For example, the base station notifies the LMF of information on the position of its own base station with a predetermined period, so that the LMF can obtain even a position of a moving base station.

The LMF may make the aforementioned request to a plurality of base stations. For example, the LMF may make the request simultaneously to base stations in the same RNA or in the same TA. The LMF may make the request through the AMF. The LMF may transmit the request to the AMF via one signaling. The AMF may notify a plurality of base stations of the instruction from the LMF. This can, for example, reduce the amount of signaling between the LMF and the AMF.

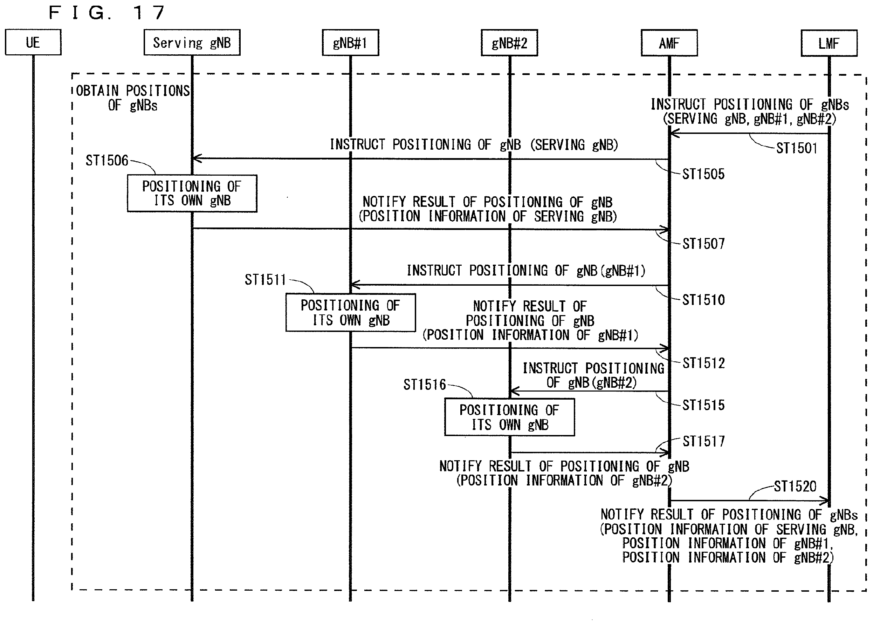

FIG. 17 illustrates a sequence of operations when the LMF obtains information on the position of the base station in the procedure ST1401 in the example of FIGS. 14 to 16. In the example of FIG. 17, the LMF obtains information on the positions of the serving gNB, the gNB #1, and the gNB #2.

In Step ST1501 of FIG. 17, the LMF notifies the AMF of a positioning instruction to each of the gNBs. The instructions notified in Step ST1501 may include information on the serving gNB, the gNB #1, and the gNB #2. The instructions notified in Step ST1501 may include information on the positioning precision of each of the gNBs. Through Step ST1501, the AMF obtains information on the positioning target base stations.

In Step ST1505 in FIG. 17, the AMF notifies the serving gNB of the positioning instruction received in Step ST1501. The notification in Step ST1505 may include information on the positioning precision of the serving gNB. In Step ST1506, the serving gNB performs positioning of its own gNB. In Step ST1507, the serving gNB reports, to the AMF, the result of the positioning of its own gNB.

Steps ST1510, ST1511, and ST1512 in FIG. 17 correspond to Steps ST1505, ST1506, and ST1507 performed between the AMF and the serving gNB, respectively. In Steps ST1510, ST1511, and ST1512 in FIG. 17, the AMF and the gNB #1 perform the processes in Steps ST1505, ST1506, and ST1507, respectively.

Steps ST1515, ST1516, and ST1517 in FIG. 17 correspond to Steps ST1505, ST1506, and ST1507 performed between the AMF and the serving gNB, respectively. In Steps ST1515, ST1516, and ST1517 in FIG. 17, the AMF and the gNB #2 perform the processes in Steps ST1505, ST1506, and ST1507, respectively.

In Step ST1520 in FIG. 17, the AMF reports the results of the positioning of the base stations notified from the serving gNB, the gNB #1, and the gNB #2 in Steps ST1507, ST1512, and ST1517, respectively.

In the example in FIG. 17, the AMF may be capable of processing the signaling under the positioning protocol. Specifically, the AMF may be capable of terminating the signaling under the positioning protocol. This saves, for example, the LMF from notifying each base station of the positioning instruction through the AMF and/or the positioning target base station from reporting the positioning result to the LMF through the AMF, as many as the number of the base stations. This can, for example, reduce the amount of signaling between the LMF and the AMF.

Although FIG. 17 illustrates the example where the AMF can process the signaling under the positioning protocol, the AMF need not process the signaling under the positioning protocol. For example, the LMF may notify each base station of the positioning instruction through the AMF as many as the number of the base stations. The positioning target base station may notify the positioning result to be reported to the LMF through the AMF as many as the number of the base stations. This can, for example, avoid the design complexity of the AMF.

Although FIG. 17 illustrates the example where the LMF instructs the serving gNB, the gNB #1, and the gNB #2 to perform positioning, the LMF may simultaneously instruct a plurality of base stations to perform positioning. The plurality of base stations may be, for example, base stations in the same RNA or in the same TA. This enables, for example, issuance of the positioning instructions to the plurality of base stations with less amount of signaling.

Although FIG. 17 illustrates the example where each base station performs positioning of its own base station in response to the positioning instruction from the LMF to the base station, the base station may perform the positioning of its own base station without the instruction. The same may apply to DUs and/or TRPs. For example, when a new base station/DU/TRP is installed, the base station/DU/TRP may perform its own positioning. The base station/DU/TRP may notify the LMF of the result of the positioning. This enables, for example, the LMF to promptly obtain the position of the base station/DU/TRP. Consequently, the positioning can be promptly performed in the communication system. The base station/DU/TRP may notify the AMF of the result of the positioning. For example, the signaling for the NG SETUP REQUEST disclosed in Non-Patent Document 34 (3GPP TS38.413 V15.2.0) may include the result of the positioning.

The serving base station may determine the time, frequency, and/or code resources for the positioning signal, using information on whether the positioning is preliminary positioning or precise positioning. For example, the serving base station may change a density of REs allocated to the PRS, between the preliminary positioning and the precise positioning. As another example, the serving base station may vary the number of slots and/or a period to which the PRS is allocated or the frequency of the slots, between the preliminary positioning and the precise positioning. This enables, for example, efficient use of the resources for the positioning signal. The LMF may determine the resources. This can, for example, avoid the design complexity on control of the positioning.

The AMF may be capable of processing the signaling under the positioning protocol. Specifically, the AMF may be capable of terminating the signaling under the positioning protocol. This saves, for example, the LMF from notifying each base station of the positioning instruction through the AMF and/or the positioning target base station from reporting the positioning result to the LMF through the AMF, as many as the number of the base stations. This can, for example, reduce the amount of signaling between the LMF and the AMF

Although the example where the serving gNB estimates the position of the UE is described, the target UE may estimate its own position. The processes for performing positioning of its own UE may correspond to the signaling for the serving base station to perform positioning. For example, the UE may have functions of the LMF. This can, for example, reduce the amount of signaling in the communication system.

The serving base station may notify the UE of a positioning instruction. The serving base station may notify the UE of the positioning instruction instead of notification of an instruction for receiving the positioning signal. The positioning instruction from the serving base station to the UE may include information on the position of the base station to be used for positioning. The UE may perform positioning of its own UE, using the information.

The base station that performs positioning may notify the serving base station of information on the position of its own base station. The base station may, for example, include the information in notification indicating the completion of the configuration for positioning, and give the notification. The serving base station may request information on the position of the base station that performs positioning from the base station.

When notifying an instruction received from the LMF, the serving base station may include, in the instruction, information on the entity that performs positioning or information on whether the positioning is preliminary positioning or precise positioning. The base station that performs positioning may determine whether it is necessary to notify the serving base station of information on the position of its own base station, using the information on the entity that performs positioning and/or the information on whether the positioning is preliminary positioning or precise positioning. For example, the serving base station need not determine whether information on the position of the positioning target base station is necessary. This can avoid the complexity in designing the serving base station.

As another example, the LMF may notify the serving base station of information on the position of the base station to be used for positioning. For example, the serving base station need not determine whether information on the position of the positioning target base station is necessary. This can avoid the complexity in designing the serving base station.

The UE may perform positioning of its own UE, using the information on the position of the base station that performs positioning. The UE may notify the serving base station of information on a result of an estimated position of its own UE. For example, the UE need not report reception results of a plurality of base stations to the serving base station. This can reduce the amount of signaling to be transmitted from the UE to the serving base station.

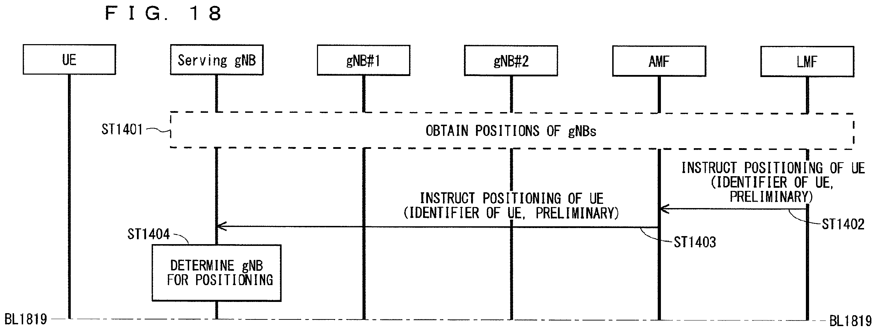

FIGS. 18 to 20 are sequence diagrams illustrating another example of the operations for performing positioning of the UE in a plurality of steps. FIGS. 18 to 20 are connected across locations of borders BL1819 and BL1920. FIGS. 18 to 20 illustrate an example where the target UE estimates its own position. FIGS. 18 to 20 illustrate an example of performing positioning in two steps of the preliminary positioning and the precise positioning, similarly to FIGS. 14 to 16. The serving gNB and the gNB #1 perform positioning of the UE in the first step, and the serving gNB and the gNB #2 perform positioning of the UE in the second step. In the example of FIGS. 18 to 20, the serving gNB determines a base station that performs the positioning in the first step, and the LMF determines a base station that performs the positioning in the second step, similarly to FIGS. 14 to 16. In FIGS. 18 to 20, the same step numbers are applied to the processes identical to those in FIGS. 14 to 16, and the common description thereof is omitted.

The procedure ST1401 and Steps ST1402 to ST1404 in FIG. 18 are identical to those in FIG. 14. In Steps ST1402 and ST1403, the LMF may include information on the positions of the gNBs #1 and #2 in the UE positioning instruction and notify the information, or notify the information without the inclusion.

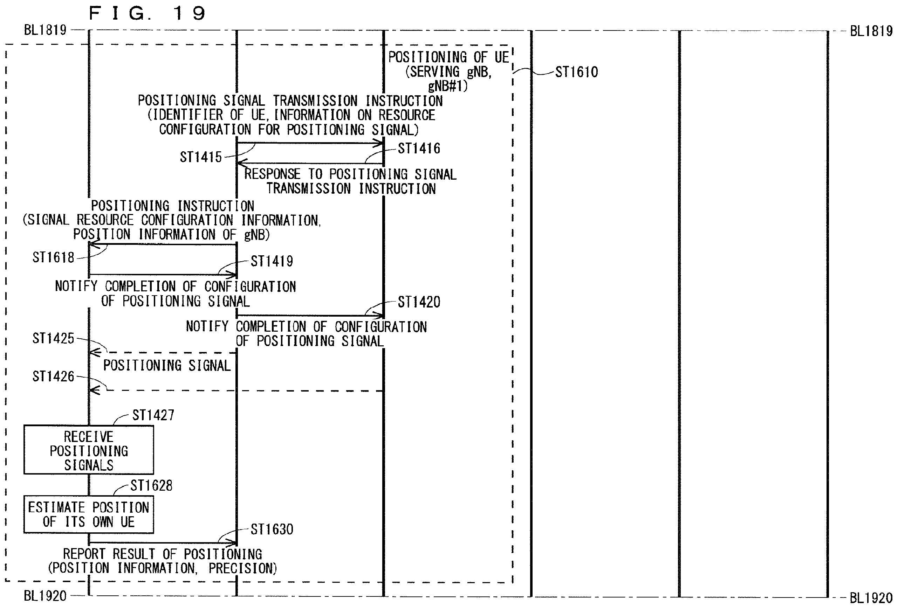

In a procedure ST1610 in FIG. 19, positioning of the UE is performed.

Steps ST1415 and ST1416 in FIG. 19 are identical to those in FIG. 15. In Step ST1415, the serving gNB may include a request for information on the position of the gNB #1 in an instruction for transmitting the positioning signal. In Step ST1416, the gNB #1 may include information on the position of its own gNB in a response to the instruction for transmitting the positioning signal and transmit the information to the serving gNB

In Step ST1618 in FIG. 19, the serving gNB instructs the UE to perform positioning of its own UE. The instruction may include information similar to that in Step ST1418 in FIG. 15, or information on the base station to be used for positioning. The information on the base station may include information for identifying the base station, or information on the position of the base station. In response to Step ST1618, the UE may configure reception of the positioning signals from the serving gNB and the gNB #1, or obtain information on the positions of the serving gNB and the gNB #1.

Steps ST1419 to ST1427 in FIG. 19 are identical to those in FIG. 15.

In Step ST1628 in FIG. 19, the UE estimates the position of its own UE, using the reception result of the positioning signals in Step ST1427 and the information on the positions of the serving gNB and the gNB #1. In Step ST1630, the UE reports the result of the estimated position of its own UE to the serving gNB.

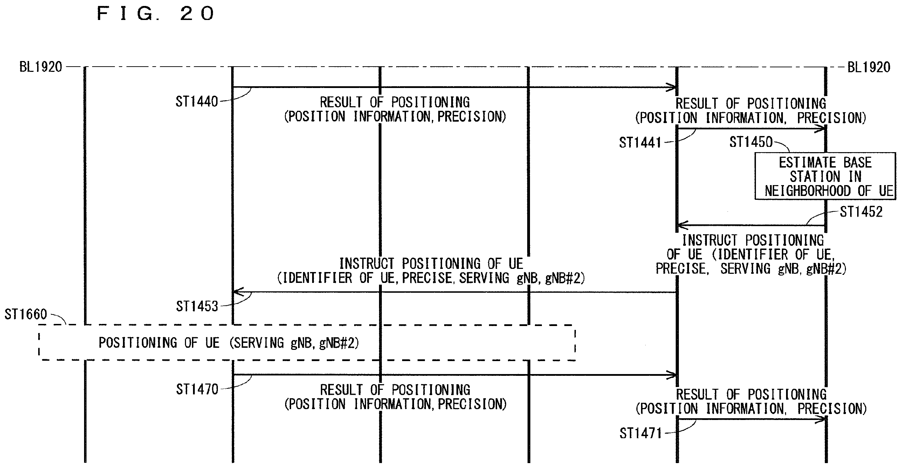

Steps ST1440 and ST1441 in FIG. 20 are identical to those in FIG. 16.

Steps ST1450 to ST1453 in FIG. 20 are identical to those in FIG. 16.

In a procedure ST1660 in FIG. 20, positioning of the UE is performed. The procedure ST1660 may be a procedure obtained by reading the gNB #1 as the gNB #2 in the procedure ST1610. In the procedure ST1660, the UE estimates the position of the UE.

Steps ST1470 and ST1471 in FIG. 20 are identical to those in FIG. 16.

As another example, the LMF may estimate the position of the target UE. The processes for performing positioning of its own UE may correspond to the signaling for the serving base station to perform positioning.

The serving base station may forward, to the LMF, the report of the reception result of the positioning signals transmitted from the UE. The serving base station may forward the report through the AMF. The serving base station may forward the report instead of notifying the LMF of information on the estimated position of the UE through the AMF. This can, for example, reduce the amount of processing in the gNB and the UE.

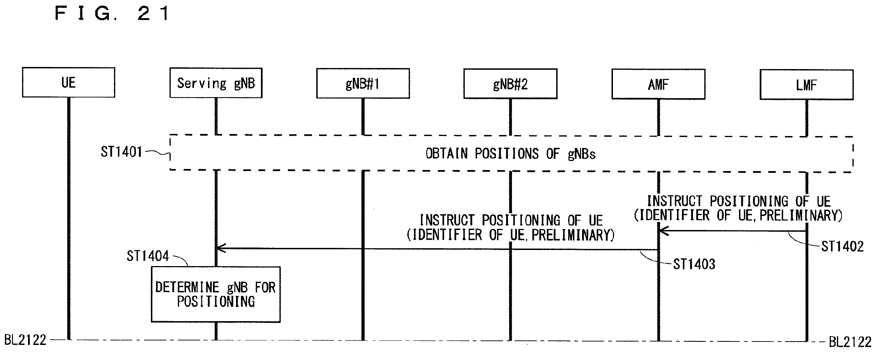

FIGS. 21 to 23 are sequence diagrams illustrating another example of the operations for performing positioning of the UE in a plurality of steps. FIGS. 21 to 23 are connected across locations of borders BL2122 and BL2223. FIGS. 21 to 23 illustrate an example where the LMF estimates the position of the target UE. FIGS. 21 to 23 illustrate an example of performing positioning in two steps of the preliminary positioning and the precise positioning, similarly to FIGS. 14 to 16. The serving gNB and the gNB #1 perform positioning of the UE in the first step, and the serving gNB and the gNB #2 perform positioning of the UE in the second step. In the example of FIGS. 21 to 23, the serving gNB determines a base station that performs the positioning in the first step, and the LMF determines a base station that performs the positioning in the second step, similarly to FIGS. 14 to 16. In FIGS. 21 to 23, the same step numbers are applied to the processes identical to those in FIGS. 14 to 16, and the common description thereof is omitted.

The procedure ST1401 and Steps ST1402 to ST1404 in FIG. 21 are identical to those in FIG. 14.

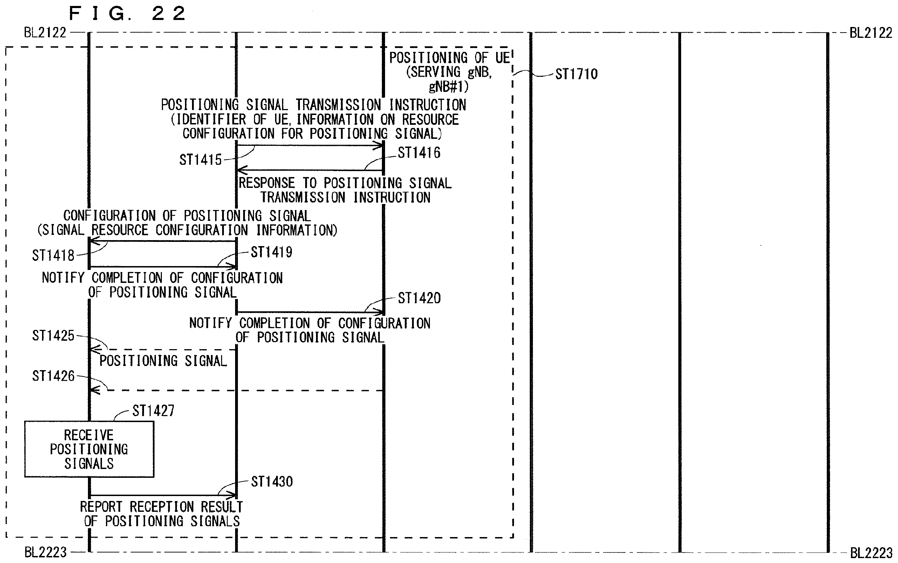

In a procedure ST1710 in FIG. 22, positioning of the UE is performed.

Steps ST1415 to ST1430 in FIG. 22 are identical to those in FIG. 15.

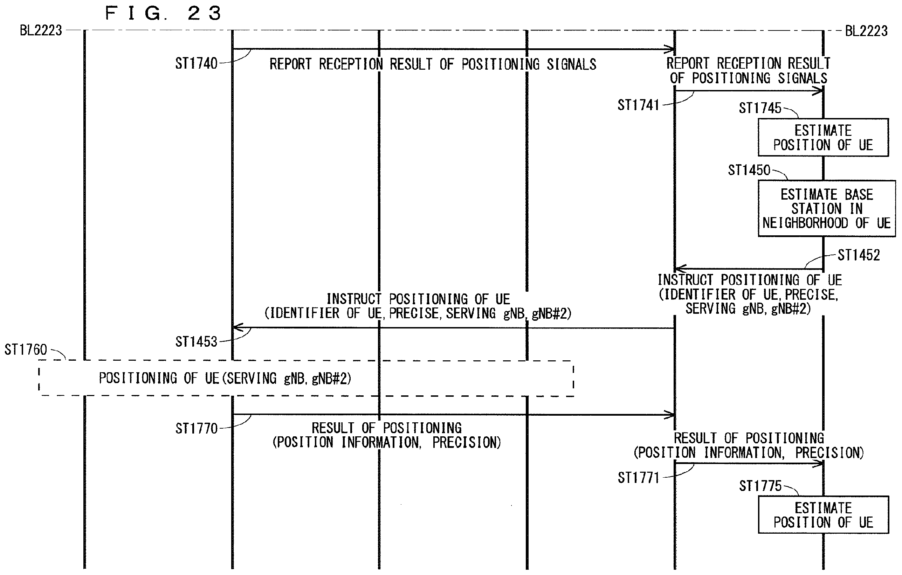

In Steps ST1740 and ST1741 in FIG. 23, the serving gNB reports the reception result of the positioning signals in the UE to the LMF through the AMF. Step ST1740 indicates notification of the report from the serving gNB to the AMF, and Step ST1741 indicates notification of the report from the AMF to the LMF. The reports in Steps ST1740 and ST1741 may include information indicating a result of the preliminary positioning, similarly to FIG. 16. The positioning protocol (e.g., LTE Positioning Protocol (LPP) or NR Positioning Protocol A (NRPPa)) may be used for the reports in Steps ST1740 and ST1741.

In Step ST1745 in FIG. 23, the LMF estimates the position of the UE, using information obtained in Step ST1741.

Steps ST1450 to ST1453 in FIG. 23 are identical to those in FIG. 16.

In a procedure ST1760 in FIG. 23, positioning of the UE is performed. The procedure ST1760 may be a procedure obtained by reading the gNB #1 as the gNB #2 in the procedure ST1710. In the procedure ST1760, the UE estimates the position of the UE.

In Steps ST1770 and ST1771 in FIG. 23, the serving gNB reports the reception result of the positioning signals in the UE to the LMF through the AMF. Step ST1770 indicates notification of the report from the serving gNB to the AMF, and Step ST1771 indicates notification of the report from the AMF to the LMF. The reports in Steps ST1770 and ST1771 may include information indicating a result of the precise positioning, similarly to Steps ST1470 and ST1471 in FIG. 16. The positioning protocol (e.g., LTE Positioning Protocol (LPP) or NR Positioning Protocol A (NRPPa)) may be used for the reports in steps ST1770 and ST1771.

In Step ST1775 in FIG. 23, the LMF estimates the position of the UE, using information obtained in Step ST1771.

The positioning of the UE may be semi-statically performed. Examples of the semi-static positioning of the UE may include periodic positioning of the UE, and positioning of the UE which is triggered by a predetermined event. The predetermined event may be, for example, handover, switching between the DUs, or switching between the TRPs. The period may be defined in a standard, determined and notified to the serving base station and/or the UE by the LMF, or determined and notified to the UE and/or the LMF by the serving base station. This enables, for example, the LMF to understand the position of the UE by following the movement of the UE.

As another example, the positioning of the UE may be dynamically performed. Examples of the dynamic positioning of the UE may include positioning of the UE only once and positioning of the UE a plurality of times. The LMF may notify the serving base station of information on the number of times positioning of the UE is performed. This enables, for example, flexible positioning in the communication system.

The result of the positioning may be notified to the LMF. The LMF may obtain the position of the UE from the notification. The notification may be given, for example, when the serving gNB performs positioning of the UE or when the UE performs positioning of its own UE. This enables, for example, the LMF to aggregate pieces of information on the positions of UEs being served thereby. This can avoid the complexity in the service using information on the positions of the UEs.

The result of the positioning may be notified to the UE. The UE may obtain the position of its own UE from the notification. The notification may be given, for example, when the serving gNB or the LMF performs positioning of the UE. This can increase the precision of the position of its own UE when the UE executes a system using the position information of its own UE.

The serving gNB may notify the UE of information on the position of the UE. The serving gNB may give the notification, for example, via the RRC signaling. As another example, the LMF may notify the UE of information on the position of the UE. The LMF may give the notification, for example, via the signaling under the LPP and/or the NRPPa.

The result of the positioning may be notified to the base station. The base station may be, for example, a serving base station. The base station may obtain the positions of UEs being served thereby from the notification. The notification may be given, for example, when the UE performs positioning of its own UE or when the LMF performs positioning of the UE. The base station may, for example, perform scheduling using the position information. This enables, for example, the base station to promptly perform beamforming appropriate for the position of the UE.

The notification of information on the position of the UE to the LMF, the serving base station and/or the UE may include information on the reception result of the positioning signals, or information on the time at which the positioning has been performed. The information on the time may be, for example, information on the time at which the positioning signal has been received or the time at which the position of the UE has been estimated. This can, for example, increase the precision of information on the position of the UE that varies in time.

The UE may start positioning of its own UE. The UE may request the LMF to start positioning of its own UE. The UE may make the request, for example, via the signaling under the LPP and/or the NRPPa.

As another example, the serving base station may start positioning of the UE. The serving base station may request the LMF to start positioning of the UE. The request may include, for example, information for identifying the UE. The serving base station may make the request, for example, via the signaling under the LPP and/or the NRPPa.

The entity that needs information on the position of the UE may perform positioning of the UE. For example, when the UE needs information on the position of its own UE, the UE itself may perform positioning of the UE. This saves, for example, the signaling of information on the position in the communication system. Consequently, the amount of signaling in the communication system can be reduced.

The positioning of the UE may be performed using an uplink signal. The base station that performs positioning may report a reception result of an uplink positioning signal to the serving base station. Application of the uplink signal to the positioning can, for example, increase the flexibility of the positioning in the communication system.

The positioning of the target UE may be performed using another UE. The other UE may be replaced with a base station that knows the position of the target UE. The positioning may be performed, for example, when the other UE receives the positioning signal from the target UE or when the target UE receives the positioning signal from the other UE. For example, when the other UE is closer to the target UE than the base station, the positioning precision can be increased. The entity that determines the other UE may be the LMF or the base station. The entity that determines the other UE may be different for each positioning step.

The LMF may notify the other UE of information on the time, frequency, and/or code resources for the positioning signal. The LMF may notify the target UE of information on the time, frequency, and/or code resources for the positioning signal. The base station, for example, the serving base station may determine the resources, and notify the target UE and/or the other UE of the resources.

The positioning using the other UE may be performed via the Uu interface or the PC5 interface. When the PC5 is used, the SideLink Synchronization Signal (SLSS), the CSI-RS, the DM-RS, or the SRS may be used as the positioning signal, or a new positioning signal in the sidelink may be provided as the positioning signal. For example, the communicating UE in the sidelink may configure the resources for the positioning signal for the UE. This enables, for example, positioning outside the coverage of the base station.

The base station that configures the DC may perform positioning of the UE. For example, the master base station may determine the secondary base station as a base station to be used for positioning. As another example, the LMF may determine, as the base stations to be used for positioning, the master base station and/or the secondary base station to which the UE is connected. As another example, the positioning in the first step may be performed using the master base station and/or the secondary base station. This can, for example, accelerate the signaling between the base station that performs positioning and the UE. Consequently, the positioning can be promptly performed in the communication system.

The number of base stations to be used for positioning may be variable. For example, when distances between the UE and base stations are shorter, the positioning may be performed using the fewer base stations. This enables, for example, securing the positioning precision and efficient use of the communication resources.

The positioning using a side lobe may be performed. For example, the reception time of a downlink signal by the UE may be used in the positioning using the side lobe. For example, the UE may measure the reception time of the DM-RS to be transmitted in association with data to be transmitted from the serving base station to the other UE. The UE may notify the serving base station of information on the reception time. The serving base station may estimate a distance from the UE, using the time.

The positioning using the side lobe may be used in combination with information on the direction of the UE when viewed from the base station. Furthermore, positioning may be performed using side lobes from a plurality of base stations. This enables, for example, the base stations to perform positioning of the target UE while the base stations can transmit and receive data to and from the other UEs. Consequently, the communication resources can be efficiently used.

The positioning types need not be provided in the first embodiment. For example, the preliminary positioning may be the positioning in the first step, whereas the precise positioning may be the positioning in the second step. In the first embodiment, the preliminary positioning may be read as the positioning in the first step, whereas the precise positioning may be read as the positioning in the second step. This can, for example, increase the flexibility of the positioning.

The first embodiment enables the LMF to select a base station that can communicate with the UE via direct waves as a base station to be used for positioning of the UE. Consequently, the positioning precision of the UE can be increased.

### The first modification of the first embodiment

The first embodiment discloses a method for performing positioning of the UE using a base station that can communicate with the UE via direct waves. The first modification discloses a method for estimating whether the communication between the UE and the base station is communication using direct waves.

The communication system estimates whether the communication is communication using direct waves, using combined information of propagation losses (path losses) and propagation delay in the communication between the base station and the UE.

The estimation method using the information may be, for example, a method for checking a mismatch between a position estimated from path losses of a serving beam and an adjacent beam and a distance determined from the propagation delay. For example, in the absence of the mismatch, the use of direct waves may be estimated. For example, in the presence of the mismatch, the use of reflected waves may be estimated.

A method for estimating a position of the UE from the path losses of the serving beam and the adjacent beam may be, for example, a method for estimating, as a position of the UE, an overlapping position between a contour (i.e., an isosurface) of a path loss of the serving beam and a contour (i.e., an isosurface) of a path loss of the adjacent beam.

As another example of the estimation method using the information, combinations of values of the path losses of the serving beam, the path losses of the adjacent beam, and the propagation delay may be associated in advance with estimation results indicating whether direct waves are used. The association may be given, for example, in a table. The table may be provided for each band to be used for the communication between the base station and the UE. The association may be predefined in a standard, or determined by the base station. The base station may notify the UE of information on the association determined by its own base station. The UE may estimate, using the information, whether the communication between its own UE and the base station is the communication using direct waves.

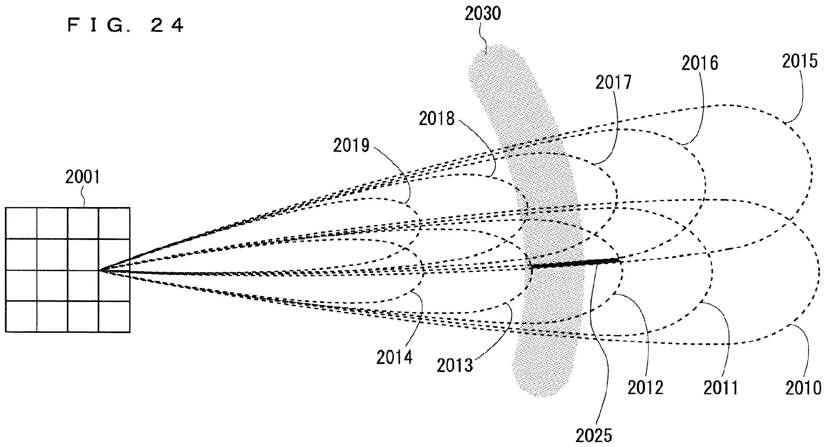

FIG. 24 illustrates an example where the communication between the base station and the UE via direct waves is estimated from a combination of path losses and propagation delay.

In FIG. 24, a serving beam to be used for the communication between a base station 2001 and the UE includes contours 2010, 2011, 2012, 2013, and 2014 of path losses. The contours of the serving beam in FIG. 24 are illustrated as the contours 2010, 2011, 2012, 2013, and 2014 in descending order of the path losses. A beam adjacent to the serving beam includes contours 2015, 2016, 2017, 2018, and 2019 of path losses. The contours of the adjacent beam in FIG. 24 are illustrated as the contours 2015, 2016, 2017, 2018, and 2019 in descending order of the path losses.

Assume that the path losses of the serving beam fall within a range of values between the contours 2012 and 2013 in the example of FIG. 24. Furthermore, assume that the path losses of the adjacent beam fall within a range of values between the contours 2015 and 2016. In the example of FIG. 24, the position of the UE estimated from the path losses of the serving beam and the adjacent beam falls within a range enclosed by an area 2025.

Furthermore, assume that a distance between the base station and the UE estimated from the propagation delay falls within a range indicated by an area 2030 in the example of FIG. 24.

Since there is an overlapping area between the areas 2025 and 2030 in the example of FIG. 24, it is determined that there is no mismatch between the position of the UE estimated from the path losses and the distance from the UE estimated from the propagation delay. It is estimated, in the example of FIG. 24, that the base station 2001 communicates with the UE via direct waves.

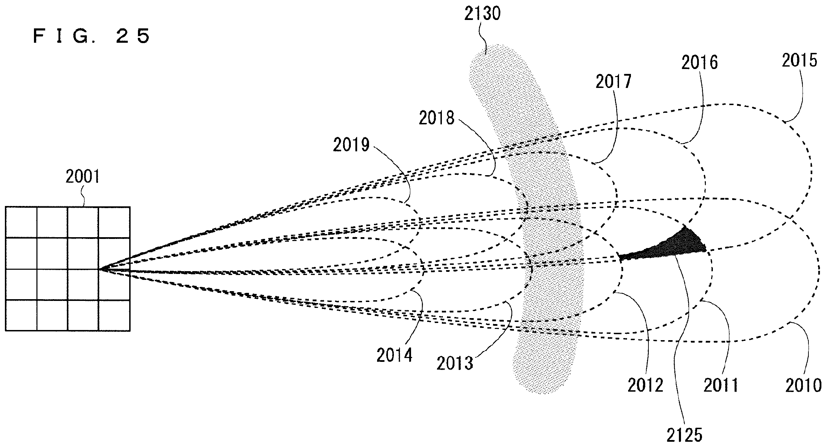

FIG. 25 illustrates an example where the communication between the base station and the UE via reflected waves is estimated from the combination of the path losses and the propagation delay. In FIG. 25, the same numbers are applied to the elements identical to those in FIG. 24, and the common description thereof is omitted.

Assume that the path losses of the serving beam fall within a range of values between the contours 2011 and 2012 in the example of FIG. 25. Furthermore, assume that the path losses of the adjacent beam fall within a range of values between the contours 2015 and 2016. In the example of FIG. 25, the position of the UE estimated from the path losses of the serving beam and the adjacent beam falls within a range enclosed by an area 2125.

Furthermore, assume that a distance between the base station and the UE estimated from the propagation delay falls within a range indicated by an area 2130 in the example of FIG. 25.

Since there is no overlapping area between the areas 2125 and 2130 in the example of FIG. 25, it is determined that there is a mismatch between the position of the UE estimated from the path losses and the distance from the UE estimated from the propagation delay. It is estimated, in the example of FIG. 25, that the base station 2001 communicates with the UE via reflected waves.

Whether direct waves are used may be estimated using a downlink signal. Upon receipt of a downlink signal, the UE may make the estimation. Examples of the downlink signal may include the PRS, the SS block, the DM-RS, and the CSI-RS.

The UE may determine the propagation delay from the base station, using the reception time of the downlink signal. As another example, the base station may determine the propagation delay between its own base station and the UE, using the reception time in the UE. The UE may notify the base station of the reception time. As another example, the base station may determine the propagation delay, using the uplink signal from the UE. The base station may notify the UE of the propagation delay. The UE may estimate a distance from the base station, using the propagation delay calculated or notified from the base station.

Upon receipt of the downlink signal, the UE may calculate the downlink path losses. The path losses calculated by the UE may include path losses in a downlink-transmission serving beam of the base station, and path losses in a downlink-transmission beam adjacent to the serving beam.

To measure the downlink path losses in the UE, the UE may use a plurality of downlink-reception beams. For example, the UE may estimate an angle of each of the downlink-reception beams in a direction of radio waves arriving from the base station with respect to the center of the beams, using the reception intensity of the downlink-reception beam. This can, for example, increase the precision of the path losses. Consequently, the path losses can increase the positioning precision.

The base station may estimate whether direct waves are used. The UE may notify the base station of a measurement result of the downlink path losses or the downlink propagation delay. The measurement result may include path losses in the serving beam of the base station, and path losses in a beam adjacent to the serving beam. The base station may estimate the position of the UE, using the measurement result of the path losses. The base station may estimate a distance between its own base station and the UE, using the downlink propagation delay. The base station may estimate whether direct waves are used with the UE, using the position of the UE estimated from the path losses and the distance estimated from the propagation delay. As another example, the base station may estimate whether direct waves are used with the UE, using the information on the association.

As another example, the UE may estimate whether direct waves are used. The UE may request, from the base station, information on the contours of the path losses of the serving beam and the adjacent beam. The base station may notify the UE of the information on the contours. The UE may estimate the position of its own UE from the information on the contours. The UE may estimate a distance from the base station, using information on the propagation delay from the base station. The UE may estimate whether direct waves are used with the base station, using the estimated position and the estimated distance. As another example, the UE may estimate whether direct waves are used with the base station, using the information on the association.

Whether direct waves are used may be estimated using an uplink signal. Upon receipt of an uplink signal, the base station may make the estimation. Examples of the uplink signal may include the SRS, the PRACH, and the DM-RS.

The base station may determine the propagation delay from the UE, using the reception time of the uplink signal. As another example, the UE may determine the propagation delay between its own UE and the base station, using the reception time in the base station. The base station may notify the UE of the reception time. As another example, the UE may determine the propagation delay, using the downlink signal from the base station. The UE may notify the base station of the propagation delay. The base station may estimate a distance from the UE, using the propagation delay calculated or notified from the UE.

Upon receipt of the uplink signal, the base station may calculate the uplink path losses. The path losses calculated by the base station may include path losses in an uplink-reception serving beam of its own base station, and path losses in an uplink-reception beam adjacent to the serving beam.

To measure the uplink path losses in the base station, the UE may use a plurality of uplink-transmission beams. For example, the base station may estimate an angle of each of the uplink-transmission beams of the UE in a direction of transmitting radio waves to the base station with respect to the center of the beams, using the reception intensity of the uplink-transmission beam. As another example, the base station may measure the reception intensity of each of the uplink-transmission beams of the UE, and report the reception intensity to the UE. The UE may calculate the uplink path losses, using the report. The UE may report the calculated uplink path losses to the base station. The UE may calculate the uplink path losses, using both of reception results of an uplink-reception serving beam of the base station and an uplink-reception beam adjacent to the serving beam. This can, for example, increase the precision of the uplink path losses. Consequently, the path losses can increase the positioning precision.

The base station may estimate whether direct waves are used. The base station may estimate the position of the UE, using the measurement result of the path losses. The base station may estimate a distance between its own base station and the UE, using the uplink propagation delay. The base station may estimate whether direct waves are used with the UE, using the position of the UE estimated from the path losses and the distance estimated from the propagation delay. As another example, the base station may estimate whether direct waves are used with the UE, using the information on the association.

As another example, the UE may estimate whether direct waves are used. The base station may notify the UE of a measurement result of the uplink path losses or the uplink propagation delay. The measurement result may include path losses in the uplink-reception serving beam of the base station, and path losses in an uplink reception beam adjacent to the serving beam. The UE may request, from the base station, information on the contours of the path losses of the serving beam and the adjacent beam. The base station may notify the UE of the information on the contours. The UE may estimate the position of its own UE from the information on the contours. The UE may estimate a distance from the base station, using information on the propagation delay from the base station. The UE may estimate whether direct waves are used with the base station, using the estimated position and the estimated distance. As another example, the UE may estimate whether direct waves are used with the base station, using the information on the association.

The base station may notify the UE of configuration on the downlink signal. The configuration may include information on the time, frequency, and/or code resources for the downlink signal. The configuration may include information on transmission using the serving beam, information on transmission using the adjacent beam, or information for identifying the adjacent beam. The UE may receive, using the configuration, the downlink signals from the serving beam and/or the adjacent beam of the base station. For example, inclusion of the information on the transmission using the adjacent beam and/or the information for identifying the adjacent beam in the configuration enables the UE to discriminate between the serving beam and the adjacent beam.

The base station may notify the UE of configuration on the uplink signal. The configuration may include information on the time, frequency, and/or code resources for the uplink signal. The configuration may include information on reception using the serving beam, information on reception using the adjacent beam, or information for identifying the adjacent beam. The UE may transmit, using the configuration, the uplink signals to the serving beam and/or the adjacent beam of the base station. For example, inclusion of the information on the reception using the adjacent beam and/or the information for identifying the adjacent beam in the configuration enables the UE to discriminate between transmission to the serving beam and transmission to the adjacent beam.

The base station may notify the LMF of a result of estimation of whether direct waves or reflected waves are used. The result of estimation may be included in the signaling on a result of the estimated position of the UE to be notified from the base station to the LMF, or the signaling for reporting the reception result of the positioning signals to be notified from the base station to the LMF. Alternatively, new signaling including the result of estimation of whether direct waves or reflected waves are used may be provided. The LMF may determine, using the result, a base station to be used for the precise positioning disclosed in the first embodiment. This can, for example, enhance the reliability of information indicating whether the base station and the UE are in line-of-sight positions. Furthermore, the LMF can promptly obtain the information.

As another example, the base station may estimate the position of the UE, using the result of estimation of whether direct waves or reflected waves are used. For example, a measurement result from a base station estimated as a base station that communicates via reflected waves in the preliminary positioning and/or the positioning in the first step which are disclosed in the first embodiment may be excluded. The base station may notify another base station of the result of estimation of whether direct waves or reflected waves are used between its base station and the UE. This can, for example, increase the precision of the preliminary positioning and/or the positioning in the first step which are disclosed in the first embodiment.

The base station may continue to estimate whether the communication with the UE is performed via direct waves or reflected waves. For example, the base station may periodically make the estimation. The base station may notify the LMF of the estimation result. The base station may notify the LMF of the estimation result, for example, when the estimation result is changed (e.g., change from direct waves to reflected waves or change from reflected waves to direct waves). This enables, for example, the LMF to promptly understand a communication state between the UE and the base station, and consequently promptly perform positioning with high precision.

The base station may continue to make the estimation, using only the propagation delay. The base station may continue to obtain information on the propagation delay from the UE. For example, when the propagation delay from the UE with which the base station communicates via direct waves is suddenly changed, the base station may estimate that the communication with the UE has been switched to the communication via reflected waves. Information on the determination of sudden change may be predefined in a standard, determined by its own base station, determined and notified to the base station by the AMF, or determined and notified to the base station by the LMF. This enables, for example, the base station to make the estimation with less amount of processing.

When the base station makes the estimation, the UE may notify the base station of information on change in the position of its own UE. The UE may obtain the information on change in the position of its own UE, for example, using an acceleration sensor or another sensor (e.g., a GPS sensor) of the UE. The base station may make the estimation, using the information notified from the UE. This can, for example, increase the precision of the estimation in the base station.

The base station may estimate the position of the UE, using three or more beams. The base station may make the estimation, for example, using a plurality of adjacent beams. For example, even when the adjacent beams are reflected waves in the estimation, the base station can make the estimation using other adjacent beams. This can increase the precision of the estimation.

The first modification enables the estimation of whether the base station and the UE communicate via direct waves or reflected waves. Consequently, the positioning precision of the UE can be increased.

### The second modification of the first embodiment

Worsening of a radio environment is presumed in the indoor positioning. The worse environment causes problems of the interference with a positioning signal to be received by the UE and/or the base station, and decrease in the positioning precision.

The second modification discloses a method for solving the problems.

Transmission from another UE is terminated when positioning of the target UE is performed. For example, the same method as that for a measurement gap may be applied to the termination of transmission. As another method, the same method as that for a configured grant may be applied to the termination of transmission. The base station may notify another UE of information on the termination of transmission. The information may include, for example, information indicating the termination of transmission due to positioning. The UE may terminate the transmission using the information indicating the termination of transmission due to positioning. This can, for example, reduce the interference from another UE in the positioning of the target UE.

The information may include information on time and/or frequency resources for terminating uplink transmission, or the information indicating the termination of transmission due to positioning.

The LMF, the AMF, or the base station may configure the termination of uplink transmission. The base station may notify the LMF of information on the uplink resources to be used for communication with the UE. This enables, for example, the LMF to appropriately select the frequency and/or time resources for terminating the uplink transmission of the UE.

The base station may give the notification using, for example, broadcast information. The broadcast information may be, for example, the SIB for positioning. This enables, for example, the base station to simultaneously notify a plurality of UEs to terminate the uplink transmission. Consequently, the amount of signaling between the UEs and the base station can be reduced. As another example, the base station may give the notification via the NAS signaling, the RRC dedicated signaling, the MAC signaling, or the L1/L2 signaling. The L1/L2 signaling may be, for example, the UE-dedicated L1/L2 signaling or the L1/L2 signaling common to a UE group (e.g., a group-common PDCCH). As another example, the signaling may be signaling under the positioning protocol (e.g., LTE Positioning Protocol (LPP) or NR Positioning Protocol A (NRPPa)) disclosed in Non-Patent Document 30 (3GPP TS38.305 V15.2.0).

Another solution is disclosed. A base station other than the base station that performs positioning (hereinafter may be referred to as a non-positioning base station) may terminate transmission when positioning of the target UE is performed. The AMF may instruct the non-positioning base station to terminate the transmission. As another example, the LMF may instruct the non-positioning base station to terminate the transmission. As another example, the serving base station for the positioning target UE may instruct the non-positioning base station to terminate the transmission.

A DU other than the DU that performs positioning or a TRP other than the TRP that performs the positioning may terminate the transmission. Hereinafter, the non-positioning base station may be a non-positioning DU or a non-positioning TRP.

The instruction for terminating the transmission to the non-positioning base station may include information on the frequency and/or time resources for terminating the downlink transmission by the non-positioning base station, or information on a period with which the termination is repeated. In response to the instruction, the non-positioning base station may terminate the downlink transmission. This can, for example, reduce the interference from the base station in the positioning of the UE.

The instruction may include the information on the frequency and/or time resources for terminating the downlink transmission by the non-positioning base station, or the information on the period with which the termination is repeated. In response to the instruction, the non-positioning base station may terminate the downlink transmission. This can, for example, reduce the interference from the base station in the positioning of the UE.

The instruction may be given, for example, through the interface between the base stations (e.g., the Xn interface), via the signaling under the positioning protocol (e.g., LTE Positioning Protocol (LPP) or NR Positioning Protocol A (NRPPa)) disclosed in Non-Patent Document 30 (3GPP TS38.305 V15.2.0), or via the CU-DU signaling.

The transmission using a predetermined beam may be possible with the timing of terminating the transmission. The predetermined beam may be, for example, a beam not directed at a measurement target UE. This can, for example, reduce the interference with the positioning target UE and increase the efficiency in the communication system. The UE may be, for example, the UE that has completed the preliminary positioning and/or the positioning in the first step in the first embodiment. This enables, for example, appropriately selection of the predetermined beam in the communication system.

The predetermined beam may be, for example, a beam of the base station. The LMF may determine the predetermined beam. The LMF may notify the non-positioning base station of information on the predetermined beam, information on the beam directed at the positioning target UE, or information on the position of the target UE. The non-positioning base station may obtain information on the predetermined beam from the notification. As another example, the AMF or the serving base station may determine the predetermined beam.

The information on the predetermined beam may be replaced with information on the position of the target UE. The information on the position of the target UE may be on, for example, the position of the UE obtained in the preliminary positioning and/or the positioning in the first step. The LMF may notify the non-positioning base station of information on the position of the target UE. The non-positioning base station may calculate the predetermined beam, using information on the position of the target UE. The AMF or the serving base station may notify the position of the target UE. This can, for example, avoid the complexity in the communication system.

As another example, the predetermined beam may be a beam of a UE other than the positioning target UE. The predetermined beam may be determined and/or notified similarly to the determining and/or notifying of the beam of the base station. For example, the LMF, the AMF, and/or the serving base station may determine information on the beam, and notify the UE of the information. The same may apply to notification of information on the position of the target UE. For example, the LMF, the AMF, and/or the serving base station may notify a UE other than the positioning target UE of information on the position of the positioning target UE.

The transmission at a predetermined frequency may be possible with the timing of terminating the transmission. The predetermined frequency may be, for example, a frequency that is not allocated to the positioning signal. This can, for example, reduce the interference with the positioning target UE and increase the efficiency in the communication system. The predetermined frequency may be, for example, a frequency lower than a frequency allocated to the positioning signal. This enables, for example, securing the precision in positioning, and increase in an area where data can be transmitted and received in the communication system. The predetermined frequency may be in, for example, a band or a bandwidth part (BWP) different from that of the frequency allocated to the positioning signal.

The LMF may notify the non-positioning base station of information on the predetermined frequency or information on the frequency allocated to the positioning signal. The non-positioning base station may obtain information on the predetermined frequency, using the information. As another example, the entity that notifies the non-positioning base station may be the AMF or the serving base station.

The LMF may notify the UE other than the positioning target UE of information on the predetermined frequency or information on the frequency allocated to the positioning signal. The UE other than the positioning target UE may obtain the information on the predetermined frequency, using the information. As another example, the entity that notifies the UE other than the positioning target UE may be the AMF or the serving base station.

The timing of terminating the transmission may be notified to a base station, a DU, and/or a TRP asynchronous with the serving base station. The aforementioned timing of terminating the transmission may be, for example, longer than the timing for notifying a base station, a DU, and/or a TRP synchronous with the serving base station. This can, for example, reduce the interference from the base station, the DU, and/or the TRP asynchronous with the serving base station in the positioning.

The UE and/or the base station may transmit the positioning signal with the frequency and/or time resources scheduled for another UE. The UE may receive and/or transmit the positioning signal with the resources. The frequency and/or time resources scheduled for the other UE may be resources scheduled by a configured grant or resources scheduled by a dynamic grant. The other UE may terminate the uplink transmission in the scheduled resources. This can, for example, reduce the interference on the positioning signal, and consequently increase the positioning precision. The base station may instruct the other UE to terminate the uplink transmission in the resources. The instruction may be included in, for example, the L1/L2 signaling. The instruction may be included in, for example, preemption notification (preemption indication).

As another example, the positioning signal need not be transmitted with the frequency and/or time resources scheduled for the other UE. The base station may notify the LMF of information indicating that the resources have already been scheduled for the other UE. The base station may give the notification, for example, via the signaling under the LPP and/or the NRPPa. The base station may give the notification, for example, when the LMF determines the resources. The LMF may reconfigure the frequency and/or time resources for the positioning signal, using the notification. This can, for example, increase the efficiency in the communication system.

As another example of the configuration of the frequency and/or time resources for the positioning signal, the base station may reconfigure, for the UE, the frequency and/or time resources to be used for the positioning signal. The base station may make the reconfiguration when determining the resources. This produces, for example, the same advantages as previously described.

The transmission of the positioning signal with the frequency and/or time resources scheduled for the other UE by the UE and/or the base station may be applied when the frequency and/or time resources scheduled for its own UE are used. This produces, for example, the same advantages as previously described.

The preemption may be applied to the positioning signal. For example, another data may be preferentially transmitted over the positioning signal. The base station may notify the positioning target UE of information indicating the preemption. The information may be, for example, preemption notification (preemption indication). The UE may receive the positioning signal again, using the notification. The base station may notify the UE of information on the frequency, time, and/or code resources for receiving the positioning signal again. As another example, the base station may notify the LMF of the preemption. The notification may be included in, for example, the signaling under the LPP and/or the NRPPa. The LMF may reconfigure the frequency, time, and/or code resources for the positioning signal, using the notification. This can, for example, increase the positioning precision.

As another example on application of the preemption in the positioning signal, the positioning signal may be preferentially transmitted over the other data. The base station may notify the UE that transmits and receives the other data of the information indicating the preemption. This enables, for example, prompt positioning.

The second modification can reduce the interference in the positioning. Consequently, the positioning precision can be increased.

### The Second Embodiment

The PRS, the SSB, or the CSI-RS may be used for the positioning in NR.

The CSI-RS is transmitted via thin beams. However, the positioning using the CSI-RS in the positioning in NR has not yet been discussed in detail. Thus, the positioning using the CSI-RS cannot be performed in the communication system. This causes a problem of failing to perform positioning with high precision.

The second embodiment discloses a method for solving the problem.

The base station transmits the CSI-RS in combination with the PRS. The base station may combine the CSI-RS with the SS block. The base station may, for example, match the transmission timings of the PRS and the CSI-RS. The timed transmission may be, for example, transmission in the same subframe or in the same slot. Considering a plurality of subframes as one bundle, the PRS and the CSI-RS may be transmitted in the same bundle. A plurality of slots or a plurality of symbols may be assumed as one bundle, instead of the plurality of subframes.

The PRS and the CSI-RS may be transmitted in different symbols. The UE may receive both of the PRS and the CSI-RS. This can, for example, reduce the interference between the signals. Consequently, the positioning precision can be increased.

The PRS and the CSI-RS may be transmitted in different symbols. This can, for example, reduce the interference between the signals, and consequently increase the positioning precision.

The UE may report, to the serving gNB, reception results of the CSI-RS and/or the PRS. The serving gNB may calculate a direction of the UE, using the reception results, for example, the reception result of the CSI-RS. The serving gNB may calculate, as the direction of the UE, a direction of the beam of the CSI-RS received by the UE. The serving gNB may notify the LMF of the calculated direction of the UE. This can, for example, increase the precision of the angle of the UE when viewed from the base station in positioning of the UE. Consequently, the positioning precision can be increased.

The PRS may be provided as one mode of the CSI-RS. This enables, for example, transmission of the PRS via thin beams, and consequently increase in the positioning precision of the UE. The CSI-RS may be used.

As another example, the beam width in which the PRS is transmitted may be controllable. For example, the PRS may be transmittable via thin beams. The PRS may be transmitted via a beam that can be digitally precoded. This produces, for example, the same advantages as previously described.

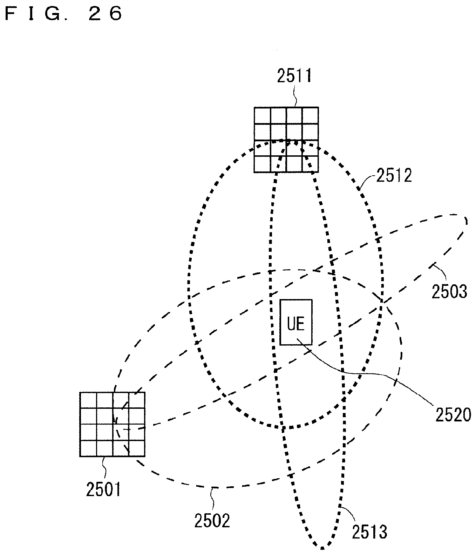

FIG. 26 illustrates an outline of operations of transmitting the CSI-RS in combination with the PRS. In the example in FIG. 26, a base station 2501 is a serving base station for a UE 2520, and base stations to be used for positioning of the UE 2520 are the serving base station 2501 and a base station 2511. In FIG. 26, receiving coverages of the PRS and the CSI-RS to be transmitted by the serving base station 2501 are an area 2502 and an area 2503, respectively. In FIG. 26, receiving coverages of the PRS and the CSI-RS to be transmitted by the base station 2511 are an area 2512 and an area 2513, respectively.

In the example in FIG. 26, the serving base station 2501 transmits the PRS and the CSI-RS to the UE 2520. The serving base station 2501 may transmit the PRS and the CSI-RS with the same timing, for example, in the same subframe or in the same slot. Alternatively, considering a plurality of subframes, a plurality of slots, or a plurality of symbols as one bundle, the serving base station 2501 may transmit the PRS and the CSI-RS in the same bundle. The UE 2520 receives the PRS and/or the CSI-RS from the serving base station 2501 with the aforementioned timing.

In the example in FIG. 26, the base station 2511 transmits the PRS and the CSI-RS to the UE 2520. The base station 2511 may transmit the PRS and the CSI-RS in the same manner as the PRS and the CSI-RS transmitted from the serving base station 2501.

The serving base station 2501 and the base station 2511 may perform the transmission with different timings or with the same timing. For example, the transmission with the same timing enables prompt positioning of the UE.

The serving base station may notify the target UE of information on the configuration of the CSI-RS for positioning. The information may be, for example, information on the time resources and/or frequency resources of the CSI-RS or information on the code of the CSI-RS. The information may include information on the CSI-RS to be transmitted by a base station other than the serving base station.

Information to be notified from the serving base station to the target UE may include information indicating that the CSI-RS is used for positioning. The UE may receive the CSI-RS for positioning, using the information. The UE may report the reception result of the CSI-RS to the base station. The report may include, for example, information indicating that the received CSI-RS is used for positioning. The serving base station may estimate the position of the target UE, using the information. This enables, for example, the base station to promptly understand that the report is on the reception result of the CSI-RS for positioning. Consequently, the positioning can be promptly performed in the communication system.

The base station may notify the target UE of information on the CSI-RS to be transmitted to another UE. The target UE may receive the CSI-RS to be transmitted to the other UE, using the information. This can, for example, reduce the resources in the communication system.

The UE may receive the CSI-RS using the information. The UE may report the reception result of the CSI-RS to the serving base station. The report may include information on the reception intensity of the CSI-RS, information on the path losses of the CSI-RS, information on the propagation delay of the CSI-RS, or information on the beam via which the CSI-RS has been transmitted. As another example on the report of the reception result of the CSI-RS, the UE may give the report to the base station that has transmitted the CSI-RS.

The entirety or a part of the configuration of the CSI-RS may be common among the base station, the DU, and/or the TRP. For example, the code sequence of the CSI-RS, or the frequency and/or time resources of the CSI-RS may be common. When the code sequence of the CSI-RS is common, the frequency and/or time resources of the CSI-RS may vary. When the frequency and/or time resources of the CSI-RS are common, the code sequence of the CSI-RS may vary. This can, for example, save the transmission resources for the CSI-RS in the communication system.

The entirety or the part of the configuration of the CSI-RS may be common among UEs. For example, the code sequence of the CSI-RS, or the frequency and/or time resources of the CSI-RS may be common. When the code sequence of the CSI-RS is common, the frequency and/or time resources of the CSI-RS may vary. When the frequency and/or time resources of the CSI-RS are common, the code sequence of the CSI-RS may vary. This can, for example, save the transmission resources for the CSI-RS in the communication system.

As another example of positioning using the CSI-RS, the SS block, and/or the PRS in combination, sweep directions of these signals may vary. For example, the beam via which the PRS is transmitted may be swept in the elevation/depression angle direction, or the beam via which the CSI-RS is transmitted may be swept in the horizontal direction. This can, for example, shorten the beam sweeping time in the communication system. Consequently, the positioning can be promptly performed.

The method disclosed in the second embodiment may be used in combination with the first embodiment. For example, the base station that can communicate with the UE via direct waves may be the base station that can communicate using the CSI-RS. This enables, for example, application of a base station distant from the UE in the positioning. Consequently, a number of base stations that can use direct waves can be reserved, and thus the positioning precision can be increased.

As another example, the PRS may be used for the preliminary positioning, and the CSI-RS may be used for the precise positioning. As another example, the PRS may be used for the positioning in the first step, and the CSI-RS may be used for the positioning in the second step. This can, for example, increase the flexibility of the positioning.

The method disclosed in the second embodiment may be used in combination with the first modification of the first embodiment. For example, the estimation method on whether direct waves or reflected waves are used, which is disclosed in the first modification of the first embodiment, may be applied to the CSI-RS. The base station that performs positioning may notify the target UE of configuration of the CSI-RS in a plurality of beams. This enables, for example, estimation of whether direct waves or reflected waves are used, using the beams for transmitting the CSI-RS. Consequently, the positioning precision can be increased.

The method disclosed in the second embodiment may be applied to the ECID or the OTDOA. For example, the positioning using the PRS and the CSI-RS in combination may be performed in the OTDOA. The UE may notify the serving base station of information on the propagation delay of the PRS and/or the CSI-RS. The serving base station may estimate the position of the UE, using the information. As another example, the serving base station may notify the LMF of the information. The LMF may estimate the position of the UE using the information. This can, for example, increase the positioning precision.

The second embodiment enables the base station to perform positioning of the UE via thin beams for transmitting the CSI-RS. Consequently, the positioning precision of the UE can be increased.

### The First Modification of the Second Embodiment

The following problem occurs when the thin beams for transmitting the CSI-RS are used for positioning of the UE in the communication system. Specifically, the base station that performs positioning of the target UE needs to sweep beams to capture the target UE. Since the beams for transmitting the CSI-RS are thin, it takes time to sweep the beams. This causes a problem of failing to perform prompt positioning.

The first modification discloses a method for solving the problem.

The base station that performs positioning sweeps beams in a beam coverage of the serving base station for communicating with the UE.

The serving base station may sweep beams for positioning, using information on beams to be used for transmitting and receiving user data. This enables, for example, the serving base station to promptly perform the positioning.

The beams may be, for example, beams to be used by the base station (e.g., a serving beam). The beams may be downlink-transmission beams or uplink-reception beams. For example, even when the downlink-transmission beams do not correspond to the uplink-reception beams (no beam correspondence), application of the uplink-reception beams enables positioning with high precision.

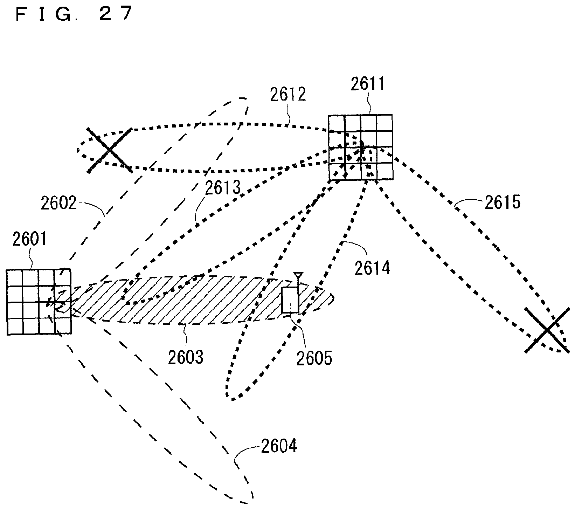

FIG. 27 illustrates operations of the base station that performs positioning when sweeping beams, in a beam coverage of a serving base station for communicating with the UE. FIG. 27 illustrates an example where a serving base station 2601 and a base station 2611 perform positioning of a UE 2605.

In the example of FIG. 27, the serving base station 2601 can use beams 2602, 2603, and 2604, and communicates with the UE 2605 via the beam 2603.

In the example of FIG. 27, the base station 2611 can use beams 2612, 2613, 2614, and 2615. The beams 2613 and 2614 out of these beams overlap a coverage in which the serving base station 2601 can communicate with the UE 2605 via the beam 2603. Thus, the base station 2611 performs positioning of the UE 2605 via the beams 2613 and 2614 including the coverage in which the serving base station 2601 can communicate via the beam 2603. In other words, the beams 2612 and 2615 are not used when the base station 2611 performs positioning of the UE 2605.

The serving base station may notify the base station that performs positioning of information on the serving beam to be used for communication with the target UE.

The following (1) to (6) are disclosed as information on the serving beam.
(1) Information on the position of the serving base station
(2) Information on a direction of the center of the serving beam
(3) Information on a traveling distance of a beam
(4) Information on a width of a beam
(5) Information on a radiation range of the serving beam
(6) Combinations of (1) and (5) above

The information in (1) may be, for example, a latitude, a longitude, an altitude of the serving base station, or a combination of some of these. This enables, for example, the base station that performs positioning to understand the position of the serving base station with high precision.

Another example of the information in (1) may be information indicating in which area determined by predefined segmentation the serving base station is located. The predefined segmentation may be, for example, the one defined in a standard or determined by the LMF. The segmentation may be performed, for example, using a latitude and a longitude, or using an altitude. The areas segmented by the segmentation may be, for example, triangular, rectangular, or hexagonal. This enables, for example, the serving base station to notify information on the position of its own base station in a smaller size.

Another example of the information in (1) may be information on a difference in position between the serving base station and the base station that performs positioning. The information on the difference may be, for example, combined information on differences in an east-west direction, a north-south direction, and an altitude direction, combined information on differences in a distance, an azimuth angle, and an altitude between the base stations, or combined information on a distance, an azimuth angle, and an elevation/depression angle between the base stations. This, for example, enables the serving base station to notify information on the position of its own base station in a smaller size, and enables the base station that performs positioning to understand the position of the serving base station with high precision.

The information in (2) may be, for example, combined information on an azimuth angle at which the center of the serving beam is oriented (e.g., information on how many degrees in a clockwise direction from the north) and the elevation/depression angle, or information on a vector described using horizontal components (e.g., a combination of the north-south direction and the east-west direction). The vector may include vertical components. This enables, for example, the base station that performs positioning to understand a direction of the serving beam.

The information in (3) may be, for example, a traveling distance of the serving beam. The distance may be, for example, expressed in a predetermined unit (e.g., in meters), or given as information for associating a predetermined parameter with the distance. This enables, for example, the base station that performs positioning to estimate a range of the serving beam within reach of the serving base station. Consequently, the base station that performs positioning can narrow down the range for sweeping beams, and promptly sweep the beams.

The information in (4) may be, for example, a full width at half maximum of the serving beam. This enables, for example, the base station that performs positioning to estimate a range of the serving beam within reach of the serving base station with high precision.

The information in (5) may be, for example, information indicating to which area determined by predefined segmentation the coverage of the serving beam belongs. The predefined segmentation may be, for example, the segmentation disclosed in (1). This enables, for example, the serving base station to notify information on the coverage of the serving beam in a smaller size.

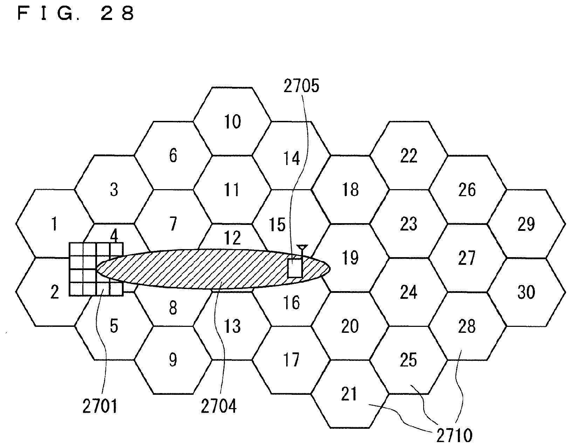

FIG. 28 illustrates an example where the serving base station notifies overlapping areas with a coverage of a serving beam among a plurality of predefined areas as information on the serving beam. In the example of FIG. 28, a communication area is partitioned into areas 2710 of a predetermined shape (exemplified by a hexagon herein). The numbers of the areas 2710 overlapping a coverage of a serving beam 2704 are used as information on the serving beam 2704.

In the example of FIG. 28, a serving base station 2701 communicates with a UE 2705 via the serving beam 2704. The numbers of the areas 2710 overlapping the coverage of the serving beam 2704 are 4, 7, 8, 12, 15, 16, and 19. The serving base station 2701 notifies the base station that performs positioning of 4, 7, 8, 12, 15, 16, and 19 as the numbers of the areas 2710. In the example of FIG. 28, the areas 2710 with the numbers of 4, 7, 8, 12, 15, 16, and 19 overlap a part of the coverage of the serving beam (in other words, include the part). For example, depending on the size of the serving beam 2704 and the size and the shape of the area 2710, one of the areas 2710 may include the entire coverage of the serving beam 2704.

The serving base station 2701 may notify information on the serving beam through the interface between the base stations (e.g., the Xn interface), through the AMF, or through the LMF. The serving base station 2701 may sweep beams for positioning, using information on the beams to be used for transmitting and receiving user data. This enables, for example, the serving base station to promptly perform the positioning.

The base station that performs positioning may calculate, using the information, a range for sweeping beams via which the CSI-RS for positioning is transmitted. For example, the base station may determine one or more beams via which the CSI-RS for positioning is transmitted.

The base station that performs positioning may notify the UE that performs positioning of information on the CSI-RS to be transmitted for positioning. The base station may give the notification through the serving base station, the LMF, or the AMF This enables, for example, the target UE to obtain information necessary for receiving the CSI-RS to be used for positioning. Consequently, the positioning can be performed with high precision in the communication system.

The information on the CSI-RS may be, for example, information on the code sequence of the CSI-RS, or information on the time and/or frequency resources of the CSI-RS. The information may be provided for each beam via which the CSI-RS is transmitted.

Another solution is disclosed. The base station to be used for positioning may transmit the CSI-RS via an available beam in the base station. The available beam may be, for example, a beam that is not used by the base station to communicate with the UEs being served thereby. The positioning base station may notify the serving base station of information on the available beam of its own base station. The serving base station may notify the UE of information on the available beam of the positioning base station. The UE may receive the CSI-RS from the positioning base station, using the information. This can, for example, shorten the beam sweeping time in the positioning base station, and reduce the interference from the positioning base station to the UEs being served thereby.

A beam with less interference may be used instead of the available beam. The interference may be interference with the UEs under the beam, or interference received by the base station through the beam. The UEs being served thereby may measure the interference power of the beam. The UEs may report the measurement results of the interference power to the base station. The base station may determine, using the reports, beams to be used for the positioning. This produces, for example, the same advantages as previously described.

The aforementioned two solutions may be used in combination. The base station that performs positioning may sweep available beams, in a beam coverage of the serving base station for communicating with the UE. This can, for example, further shorten the beam sweeping time in the positioning base station, and reduce the interference from the positioning base station to the UEs being served thereby.

The method disclosed in the first modification may be applied to handover, switching between DUs, and/or switching between TRPs. For example, the source base station may notify the target base station of information on the serving beam to be used for establishing a connection with the UE. The information may be identical to that disclosed in the first modification. The source base station may determine, using the information, beams to be used for positioning of the UE. The same may apply to the switching between DUs and/or the switching between TRPs. This can, for example, accelerate the positioning after handover.

The first modification enables the base station that performs positioning to reduce the number of sweeping beams. This can accelerate the positioning of the UE in the communication system.

### The Third Embodiment

In 3GPP, the sidelink (SL) is supported for the Device-to-Device (D2D) communication and the Vehicle-to-Vehicle (V2V) communication (see Non-Patent Document 1). The SL is defined by the PC5 interface.

Physical channels (see Non-Patent Document 1) to be used for the SL are described. A physical sidelink broadcast channel (PSBCH) carries information related to systems and synchronization, and is transmitted from the UE.

A physical sidelink discovery channel (PSDCH) carries a sidelink discovery message from the UE.

A physical sidelink control channel (PSCCH) carries control information from the UE for the sidelink communication and the V2X sidelink communication.

A physical sidelink shared channel (PSSCH) carries data from the UE for the sidelink communication and the V2X sidelink communication.

Transport channels (see Non-Patent Document 1) to be used for the SL are described. A sidelink broadcast channel (SL-BCH) has a predetermined transport format, and is mapped to the PSBCH that is a physical channel.

A sidelink discovery channel (SL-DCH) has periodic broadcast transmission of a fixed size and a predetermined format. The SL-DCH supports both of the UE autonomous resource selection and the resource allocation scheduled by the eNB. The SL-DCH has collision risk in the UE autonomous resource selection. The SL-DCH has no collision when the eNB allocates dedicated resources to the UE. The SL-DCH supports the HARQ combining. The SL-DCH does not support the HARQ feedback. The SL-DCH is mapped to the PSDCH that is a physical channel.

A sidelink shared channel (SL-SCH) supports broadcast transmission. The SL-SCH supports both of the UE autonomous resource selection and the resource allocation scheduled by the eNB. The SL-SCH has collision risk in the UE autonomous resource selection. The SL-SCH has no collision when the eNB allocates dedicated resources to the UE. The SL-SCH supports the HARQ combining. The SL-SCH does not support the HARQ feedback. The SL-SCH supports dynamic link adaptation by varying the transmission power, modulation, and coding. The SL-SCH is mapped to the PSSCH that is a physical channel.

Logical channels (see Non-Patent Document 1) to be used for the SL are described. A Sidelink Broadcast Control Channel (SBCCH) is a sidelink channel for broadcasting sidelink system information from one UE to other UEs. The SBCCH is mapped to the SL-BCH that is a transport channel.

A Sidelink Traffic Channel (STCH) is a point-to-multipoint sidelink traffic channel for transmitting user information from one UE to other UEs. This STCH is used only by sidelink communication capable UEs and V2X sidelink communication capable UEs. The point-to-point communication between two sidelink communication capable UEs is realized with the STCH. The STCH is mapped to the SL-SCH that is a transport channel.

In 3GPP, support of the V2X communication in NR has also been studied. Study of the V2X communication in NR has been pursued based on the LTE system and the LTE-A system. There are changes and additions from the LTE system and the LTE-A system in the following points.

In LTE, the SL communication relies only on broadcasts. In NR, support of not only broadcasts but also unicasts and groupcasts has been studied as the SL communication (see Non-Patent Document 29 (3GPP RP-182111)).

Support of, for example, the HARQ feedback (Ack/Nack) or the CSI report in the unicast communication or the groupcast communication has been studied.

To satisfy the Ultra-Reliable and Low Latency Communication (URLLC) requirements, support of the Time Sensitive Network (TSN) has been studied in 3GPP (see Non-Patent Document 22 (3GPP RP-182090)). The Time Sensitive Network requires clock synchronization between a plurality of UEs (see Non-Patent Document 25 (3GPP TR22.804 V16.1.0)). Clock synchronization between a base station and each UE has been studied as a method for synchronizing the clocks of a plurality of UEs (see Non-Patent Document 26 (3GPP R3-185808), Non-Patent Document 27 (3GPP TS36.331 V15.3.0), and Non-Patent Document 28 (3GPP R2-1817173)).

In the clock synchronization between the base station and the UE in the TSN, the base station may broadcast information on the clock synchronization to the UEs, or dedicatedly notify each of the UEs of the information. The information may be included in system information, or in the RRC signaling, for example, the signaling for downlink information notification (DLInformationTransfer). The information may include, for example, time reference information (hereinafter timing reference) and uncertainty. The timing reference may be combined information of a time (reference time) and information on a predetermined system frame, for example, information indicating the time at the end of the predetermined system frame. The UE may configure its own UE time, using the information.

In information included in the timing reference, combined information of a time and information on a predetermined subframe instead of the predetermined system frame, for example, information indicating the time at the end of the subframe may be used. Alternatively, combined information of a time and information on a predetermined slot, for example, information indicating the time at the end of the slot may be used in the information included in the timing reference. The time at each of the ends may be replaced with the time at the beginning. This can, for example, shorten the waiting time for the UE until the time. Consequently, the UE can promptly configure the time for its own UE.

The base station may generate the timing reference to be transmitted from the base station to the UE using, for example, time information obtained from a global navigation satellite system (GNSS) or the Regional Navigation Satellite System (RNSS), time information signaled from a location information server to the base station, time information signaled from the high-level NW device (e.g., AMF and/or SMF) to the base station, or time information obtained from a time server. For example, the base station transmits, to the UE, the timing reference generated using the time information signaled from the high-level NW device to the base station to allow the clock synchronization in the overall communication system.

The UE may correct its own UE time calculated using the timing reference. The correction may be, for example, correction of the propagation delay between the base station and the UE. The correction may be performed, using, for example, the timing advance (TA). In the communication system, for example, the TA may be regarded as the round trip propagation delay time between the base station and the UE. The UE may use, as the corrected UE time, a value obtained by adding a value of half the TA to its own UE time.

As described above, support of the TSN has been studied in 3GPP. The UEs that perform the SL communication sometimes need to coincide in time with each other. This occurs, for example, when automated driving control is performed on the in-vehicle UEs that perform the unicast communication in the SL or the in-vehicle UE groups driving in a platoon by synchronizing the clocks. In such a case, the UEs or the UE groups need to perform clock synchronization.

However, the clock synchronization method for the UEs that perform the SL communication is not disclosed or unknown. Thus, the UEs have a problem of failing to perform the SL communication requiring the clock synchronization. This causes a problem of failing to use the SL in the TSN. The third embodiment discloses a method for solving such a problem.

The gNB notifies the UEs for the SL communication of clock synchronization information. The gNB includes the clock synchronization information in the SIB to be used for the TSN, and broadcasts the information via the TSN. For example, the SIB16 is used in LTE. Similarly, the gNB may include the clock synchronization information in the SIB, and broadcast the information in NR. The UEs that perform the SL communication should receive the SIB including the clock synchronization information to obtain the clock synchronization information from the gNB.

All the UEs that perform the SL communication need not receive the SIB to be used for the TSN. When performing a service of the TSN using the SL communication, the UE should receive the SIB to be used for the TSN. In response to a request from the upper layer, the UE that performs the service of the TSN using the SL communication receives the SIB to be used for the TSN to obtain the clock synchronization information.

Consequently, the UEs which are located within the coverage of the gNB supporting the TSN and which perform the SL communication can obtain the clock synchronization information. This enables the control under which the UEs coincide in time with each other.

Another method for the gNB to notify the UEs for the SL communication of the clock synchronization information is disclosed. The gNB includes the clock synchronization information in the SIB to be used for the SL communication, and broadcasts the information via the TSN. For example, the SIB 18 or the SIB21 is used in LTE. Similarly, the gNB may include the clock synchronization information in the SIB, and broadcast the information in NR. The UEs that perform the SL communication should receive the SIB including the clock synchronization information to obtain the clock synchronization information from the gNB.

In response to a request from the upper layer, the UEs that perform the service of the TSN using the SL communication obtain the clock synchronization information included in the SIB to be used for the SL communication. Consequently, the UEs which are located within the coverage of the gNB supporting the TSN and which perform the SL communication can obtain the clock synchronization information. This enables the control under which the UEs coincide in time with each other.

The UEs outside the coverage of the gNB supporting the TSN cannot receive the clock synchronization information held by the gNB. A method for solving such a problem is disclosed. The UE that has the clock synchronization information and performs the SL communication may transmit the clock synchronization information. Examples of the UE that has the clock synchronization information include a UE that receives the clock synchronization information from the gNB supporting the TSN and a UE that receives the clock synchronization information from another UE.

Upon receipt of the clock synchronization information from the gNB, the UE may notify the UE that performs another SL communication of the obtained clock synchronization information via the PC5 signaling. Upon receipt of the clock synchronization information from the gNB, the UE may include the obtained clock synchronization information in the broadcast information for SL and transmit the information. A new physical channel may be provided for transmitting the broadcast information for SL including the clock synchronization information. Alternatively, the PSBCH may be used for transmitting the broadcast information for SL including the clock synchronization information. Application of the PSBCH enables the use of the existing channel, and avoidance of complexity in the control. Furthermore, the clocks of UEs can be synchronized even when the data communication is not performed in the SL.

The information previously disclosed should be applied to the clock synchronization information. For example, information corrected using the time error in the UE, such as the clock precision of the UE, may be used as time error information. This enables not the gNB but the UE to transmit the clock synchronization information in the TSN.

When the UE that performs the SL communication is located within the coverage of the gNB, the UE establishes timing synchronization with the gNB and transmits the SLSS. When the gNB with which the UE establishes timing synchronization is different from the gNB that receives the clock synchronization information, the UE that performs the SL communication should correct information on a predetermined slot, a predetermined subframe, or a predetermined system frame in the clock synchronization information, into information on the slot, subframe, or system frame which has been obtained from the timing synchronization. For example, the timing reference may be information on the time in the leading edge of the SLSS or information on the time in the trailing edge of the SLSS. Consequently, the UE that performs the SL communication can configure and transmit the clock synchronization information using the timing obtained by its own UE through the timing synchronization.

The gNB with which the UE establishes timing synchronization may be the gNB supporting the TSN. For example, when the UE is located within the coverages of both of the gNB supporting the TSN and the gNB that does not support the TSN, the gNB with which the UE establishes timing synchronization may be the gNB supporting the TSN. Even when the received power from the gNB with which the UE establishes timing synchronization is higher than that from the gNB supporting the TSN, the gNB supporting the TSN is selected.

Consequently, the gNB supporting the TSN can be identical to the gNB with which the UE establishes timing synchronization. The slot timing, the subframe timing, and the system frame timing in the UE can synchronize with those in the gNB supporting the TSN. Thus, the information on the predetermined slot, subframe, or system frame in the clock synchronization information is available. The processes for transmitting the clock synchronization information in the UE can be facilitated.

A predetermined threshold may be provided for the received power or the reception quality from the gNB supporting the TSN so that the UE determines whether to be able to receive the clock synchronization information. For example, when the received power or the reception quality is higher than the predetermined threshold, the UE should determine to be able to receive the clock synchronization information. In other words, the UE is located within the coverage of the gNB supporting the TSN. When the received power or the reception quality from the gNB supporting the TSN is lower than or equal to the predetermined threshold, the UE determines that its own UE is outside the coverage of the gNB supporting the TSN.

When the UE can receive pieces of clock synchronization information from a plurality of gNBs supporting the TSN, the UE may obtain and use the clock synchronization information from the gNB with a higher received power or a higher reception quality. This enables the UE to more reliably obtain the clock synchronization information.

Alternatively, when the UE can receive the pieces of clock synchronization information from the plurality of gNBs supporting the TSN, the UE may obtain and use the clock synchronization information from the gNB with a less time error in the clock synchronization information. Consequently, the information with a less time error can be configured even when its own UE transmits the clock synchronization information. The TSN can be supported with a less time error.

Consequently, when the UE is located within the coverage of the gNB supporting the TSN, the UE can receive the clock synchronization information from the gNB, and appropriately correct the clock synchronization information and transmit the corrected clock synchronization information.

The UE which is located outside the coverage of the gNB supporting the TSN and which performs the SL communication receives a channel including the clock synchronization information transmitted from another UE, and obtains the clock synchronization information.

A predetermined threshold may be provided for the received power or the reception quality from another UE for determining whether to be able to receive the clock synchronization information. For example, when the received power or the reception quality is higher than the predetermined threshold, the UE should determine to be able to receive the clock synchronization information. Otherwise, the UE determines that its own UE cannot receive the clock synchronization information. When the UE cannot receive the clock synchronization information, the UE may try to receive a channel including the clock synchronization information to be transmitted from yet another UE.

When the UE can receive pieces of clock synchronization information from a plurality of UEs each of which transmits the clock synchronization information, the UE may obtain and use the clock synchronization information from the UE with a higher received power or a higher reception quality. This enables the UE to more reliably obtain the clock synchronization information.

Alternatively, when the UE can receive the pieces of clock synchronization information from a plurality of UEs each of which transmits the clock synchronization information, the UE may obtain and use the clock synchronization information from the UE with a less time error in the clock synchronization information. Consequently, the information with a less time error can be configured even when its own UE transmits the clock synchronization information. The TSN can be supported with a less time error.

The UE that has obtained the clock synchronization information from another UE may include the obtained clock synchronization information in the broadcast information for SL and transmit the information. The processes in receiving the clock synchronization information from the gNB should be appropriately applied to this method. This can produce the same advantages as previously described. Consequently, the UE that performs the SL communication can receive and transmit the clock synchronization information.

Thus, even when the UE that performs the SL communication is not located within the coverage of the gNB supporting the TSN, the UE can obtain the clock synchronization information from another UE.

Another method for the UE that performs the SL communication to transmit the clock synchronization information is disclosed. The UE that performs the SL communication may include, in the sidelink control information (SCI), the clock synchronization information and transmit the information in the PSCCH. The UE that performs the SL communication receives the PSCCH from the transmission UE to obtain the clock synchronization information. Such use of the PSCCH in receiving data for the SL communication enables the reception UE to obtain the clock synchronization information from the PSCCH necessary for receiving the data. The clock synchronization information can be transmitted and received earlier. Since there is no need to receive the PSBCH or another channel for obtaining the clock synchronization information, the clock synchronization processes in the UE can be simplified.

The SCI may be divided into two. The SCI is divided into, for example, SCI1 and SCI2. Two different channels for transmitting the respective SCIs may be provided. For example, the two different channels are a PSCCH1 and a PSCCH2. All the UEs for each of which a resource pool has been configured can receive one of the PSCCHs, for example, the PSCCH1 similarly to the conventional PSCCH. Only one UE or a UE group can receive the other PSCCH, for example, the PSCCH2 unlike the conventional PSCCH.

The clock synchronization information may be included in the SCI1 previously disclosed. The UE may include the clock synchronization information in the SCI1, and notify the information in the PSCCH1. All the UEs for each of which the resource pool has been configured in the SL communication can receive the clock synchronization information. Alternatively, the clock synchronization information may be included in the SCI2. The UE may include the clock synchronization information in the SCI2, and notify the information in the PSCCH2. The peer UE in the unicast communication or only the UE in a peer UE group in the groupcast communication can receive the information. This is effective when the number of UEs on which the control for synchronizing the clocks is performed through reception of clock synchronization is limited.

Another method for the UE that performs the SL communication to transmit the clock synchronization information is disclosed. The UE that performs the SL communication may transmit the clock synchronization information via the RRC signaling in the SL communication. For example, when the RRC connection is established between the UEs in the unicast communication or the groupcast communication, the UE may transmit the clock synchronization information via the RRC signaling that occurs with the peer UE. The transmission UE in the SL communication includes the clock synchronization information in the RRC signaling and transmits the information to the reception UE. The reception UE obtains the clock synchronization information included in the RRC signaling from the transmission UE.

Consequently, when the RRC connection is established, the control for synchronizing the clocks of the UEs that perform the unicast communication or the groupcast communication becomes possible. Since the RRC signaling is used, the amount of information on the clock synchronization can be increased.

Another method for the UE that performs the SL communication to transmit the clock synchronization information is disclosed. The UE may transmit the clock synchronization information via the MAC signaling in the SL communication. For example, the UE may transmit the clock synchronization information to the peer UE via the MAC signaling in the unicast communication or the groupcast communication. The transmission UE in the SL communication includes the clock synchronization information in the MAC signaling and transmits the information to the reception UE. The reception UE obtains the clock synchronization information included in the MAC signaling from the transmission UE. The MAC signaling may support the HARQ feedback. This can reduce the reception error rate of the clock synchronization information.

Consequently, the UE outside the coverage of the gNB supporting the TSN can receive the clock synchronization information, from the UE that has received the clock synchronization information from the gNB supporting the TSN or from the UE having another clock synchronization information. This enables the control for synchronizing the clocks of the UEs inside or outside the coverage of the gNB supporting the TSN.

A plurality of TSNs may be configured using the RAN. Examples of the RAN include RANs in LTE and NR. For example, one gNB may support the plurality of TSNs in NR. One eNB may support the plurality of TSNs in LTE. When the plurality of TSNs are supported, the aforementioned method should be applied to each of the TSNs. For example, the clocks may be synchronized for each of the TSNs.

When the gNB supports the plurality of TSNs, the UE does not know information on clock synchronization of which TSN has been received. A method for solving such a problem is disclosed. An identifier for identifying each of the TSNs is provided. The information on clock synchronization may include an identifier for identifying the TSN. The gNB may associate the information on clock synchronization with the identifier for identifying the TSN, and transmit them.

Furthermore, data to be communicated for each of the TSNs may include the identifier for identifying the TSN. The gNB may associate, with the data to be communicated for each of the TSNs, the identifier for identifying the TSN, and transmit them.

The SL may be used in the plurality of TSNs. The aforementioned method should be applied to the SL communication between UEs. The UE that transmits the information on clock synchronization may associate, with the information on clock synchronization for each of the TSNs or the data to be communicated for each of the TSNs, the identifier for identifying the TSN, and transmit them. Upon receipt of the identifier for identifying the TSN, the UE that receives the information on clock synchronization can recognize that information or data on the clock synchronization is information or data for which TSN.

When the SL is used in the plurality of TSNs, the RRC connection may be established for each of the TSNs. The RRC connection should be associated with the TSN. For example, the signaling to be used for the RRC connection may include the identifier for identifying the TSN.

This enables the clock synchronization for each of the TSNs even when the plurality of TSNs are configured. A plurality of services for each of which the TSN has been configured can be provided.

### The Fourth Embodiment

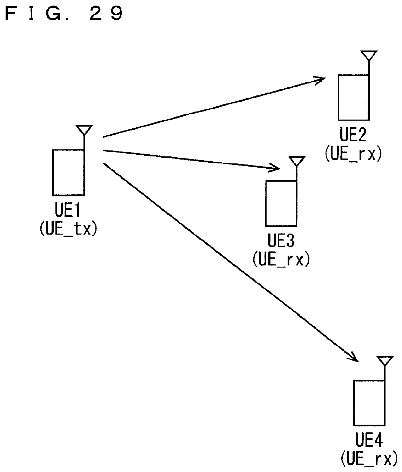

The method disclosed in the third embodiment may cause differences in radio propagation range between the UEs that perform the SL communication. FIG. 29 is a conceptual diagram illustrating the differences in radio propagation range between the UEs that perform the SL communication. The UE 1 and the UE 2, the UE 1 and the UE 3, and the UE 1 and the UE 4 perform the SL communication. The radio propagation ranges between the UE 1 and the UE 2, between the UE 1 and the UE 3, and between the UE 1 and the UE 4 are different. In the SL communication, UE_tx denotes a UE that performs transmission, and UE_rx denotes a communication target UE.

When the UE 1 transmits the information on clock synchronization to each of the UE 2, the UE 3, and the UE 4, the radio propagation delay times to the respective UEs are different. Thus, the precision of the clock synchronization deteriorates. For example, a method using the timing advance (TA) has been proposed as a method, when the gNB and the UE synchronize their clocks, for correcting the clocks according to a radio propagation range between the UEs. However, the conventional SL communication lacks the TA. Thus, when the clocks are synchronized between the UEs using the SL communication, a problem of unavailability of the TA to correction of the clocks according to the radio propagation range between the UEs occurs. The fourth embodiment discloses a method for solving such a problem.

A timing correction signal is provided. A timing correction channel may be provided The timing correction signal is configured using a predetermined sequence, and mapped to the frequency-time resources in a predetermined frequency band and with a predetermined time length. Examples of the unit of frequency for representing the resources may include the unit of subcarrier, the unit of RB, the unit of sub-channel frequency used in the SL, and the unit of BWP. The examples of the unit of time for representing the resources may further include the unit of Ts (= sampling frequency (fs)), the unit of sub-symbol, the unit of symbol, the unit of slot, the unit of subframe, and the unit of TTI. The frequency-time resources to which the timing correction signal is mapped may include one or more repeated resources or resources periodically configured.

The timing correction signal may be dedicatedly configured for each UE. For example, the sequence of the timing correction signal and/or the frequency-time resources for the timing correction signal may be configured for each UE that transmits the timing correction signal. Upon receipt of the timing correction signal transmitted from the UE in the SL, the UE can identify the UE that has transmitted the signal, from the sequence and/or the resources. Furthermore, the timing correction signal may be configured dedicatedly for each group consisting of one or more UEs. This can identify a group to which the UE that has transmitted the timing correction signal belongs.

Alternatively, the timing correction signal common to the transmission UEs in the SL communication may be configured. When a UE uses the timing correction signal configured in common among the UEs as transmission partners, the UE as the transmission partner can identify that the signal is the timing correction signal transmitted to its own UE.

As another example of the timing correction signal, the timing correction signal may be configured using an identifier of the UE that transmits the signal. The identifier of the UE should be a UE-identifiable identifier. Upon receipt of the timing correction signal, the UE can identify from which UE the signal has been transmitted. Similarly, the timing correction signal may be configured using a group identifier of a group from which the signal is transmitted.

In the SL communication, the SRS may be transmitted between the UEs. Application of the SRS for allocating resources to be used for transmitting the feedback in the SL communication can increase the communication quality in the transmission of the feedback. The sequence to be used for the SRS and the frequency-time resources to which the SRS is mapped may be configured dedicatedly for each UE or dedicatedly for each group.

The SRS may be used as the timing correction signal. Consequently, resources for the timing correction signal need not be separately configured. Thus, the use efficiency of the resources can be increased.

Introduction of the Physical Sidelink Feedback CHannel (PSFCH) has been proposed as a channel for transmitting the Ack/Nack or the CQI in the SL communication. The frequency-time resources to which the PSFCH is mapped may be configured dedicatedly for each UE or dedicatedly for each group. The PSFCH may be used as the timing correction signal. Consequently, resources for the timing correction signal need not be separately configured. Thus, the use efficiency of the resources can be increased.

The PRACH in the Uu interface defined between the gNB and the UE may be used as the timing correction signal. Aside from the configuration of the PRACH for the Uu, a PRACH for the PC5 may be configured and used as the timing correction signal. The gNB may notify the UE that performs the SL communication of the configuration of the PRACH for the SL communication. Consequently, a new timing correction signal need not be provided. The configuration of the UE for the SL communication can be simplified.

UE_tx that transmits the information on clock synchronization notifies UE_rx that receives the information on clock synchronization of a request for transmitting the timing correction signal. The following (1) to (6) are disclosed as examples of information included in the request for transmitting the timing correction signal.
(1) Timing correction signal transmission instructing information
(2) Timing information for transmitting the timing correction signal
(3) A structure of the timing correction signal
(4) An identifier of UE_tx
(5) An identifier of UE_rx
(6) Combinations of (1) to (5) above

Information for identifying the transmission timing should be used as (2). For example, the frame number, the slot number, or the symbol number may be used as (2). Furthermore, each of these may include an offset value. Furthermore, a time difference from the timing of receiving the request for transmitting the timing correction signal to the timing of transmitting the timing correction signal may be used as (2). The unit of the offset value or the time difference may be the disclosed unit representing the time resources to which the timing correction signal is mapped. UE_rx can identify the timing of transmitting the timing correction signal.

For example, the aforementioned sequence or the frequency-time resources to which the timing correction signal is mapped may be used as the structure of the timing correction signal in (3). UE_rx can transmit the timing correction signal using the received structure of the timing correction signal.

An identifier allowing the identification of UE_tx may be used as the identifier of UE_tx in (4). UE_rx can identify to which UE the timing correction signal is to be transmitted.

An identifier allowing the identification of UE_rx may be used as the identifier of UE_rx in (5). Upon receipt of the request for transmitting the timing correction signal, the UE can determine whether to transmit the timing correction signal.

The request for transmitting the timing correction signal may include a plurality of pieces of information. UE_tx may notify, for example, a plurality of pieces of the information in (2) or a plurality of pieces of the information in (3). UE_rx may transmit a plurality of timing correction signals. Alternatively, UE_rx may select one or more pieces of information from among the plurality of pieces of information notified from UE_tx, and transmit one or more timing correction signals corresponding to the selected one or more pieces of information.

The structure of the timing correction signal may consist of one or more structures. The structure of the timing correction signal may be statically predetermined, for example, in a standard. The nodes that perform the V2X communication, for example, the gNB, UE_tx, and UE_rx can recognize the structure of the timing correction signal.

UE_tx may configure the timing correction signal. UE_tx may select the timing correction signal from a predetermined structure and configure the timing correction signal. The predetermined structure of the timing correction signal may be a structure of the timing correction signal for the SL. The predetermined structure of the timing correction signal may consist of one or more structures. The predetermined structure of the timing correction signal may be statically predetermined, for example, in a standard.

UE_tx notifies UE_rx of a structure in which the timing correction signal has been configured (configuration of the timing correction signal). UE_rx transmits the timing correction signal, using the configuration of the timing correction signal notified from UE_tx. UE_rx may select one of the configurations of the timing correction signal that have been notified from UE tx, and transmit the timing correction signal using the selected configuration.

The configuration of the timing correction signal made by UE_tx enables, for example, configuration of the timing correction signal for UE_rx even when the UEs perform the SL communication outside the coverage of the cell. This enables UE_rx to transmit the timing correction signal.

The gNB may configure the timing correction signal. The gNB may select the timing correction signal from a predetermined structure and configure the timing correction signal. The predetermined structure of the timing correction signal may be a structure of the timing correction signal for the SL. The predetermined structure of the timing correction signal may consist of one or more structures. The predetermined structure of the timing correction signal may be statically predetermined, for example, in a standard. The gNB notifies UE_tx of the structure in which the timing correction signal has been configured (configuration of the timing correction signal).

UE_tx notifies UE_rx of the structure of the timing correction signal notified from the gNB. UE_tx may notify UE_rx of a part or the entirety of the structure of the timing correction signal notified from the gNB. UE_rx transmits the timing correction signal, using the configuration of the timing correction signal notified from UE_tx. UE_rx may select one of the configurations of the timing correction signal that have been notified from UE_tx, and transmit the timing correction signal using the selected configuration.

The configuration of the timing correction signal made by the gNB enables configuration of a different timing correction signal for a different UE_tx. This can vary the structure of the timing correction signal to be transmitted by UE_rx, and reduce the collision on the timing correction signal. A probability of successfully receiving the timing correction signal from UE_rx can be increased in UE_tx.

UE_rx may configure the timing correction signal. UE_rx may select the timing correction signal from a predetermined structure and configure the timing correction signal. The predetermined structure of the timing correction signal may be statically predetermined, for example, in a standard.

UE_rx configures the timing correction signal, so that the signaling for notifying the configuration of the timing correction signal from UE_tx to UE_rx or the signaling for notifying the configuration of the timing correction signal from the gNB to UE_rx through UE_tx can be reduced. The amount of signaling and the latency time until transmission of the timing correction signal can be reduced.

A method for notifying the request for transmitting the timing correction signal is disclosed. UE_tx may notify UE_rx of the request for transmitting the timing correction signal via the PC5 control signaling in the SL communication. Alternatively, UE_tx may give the notification via the RRC signaling in the SL communication. UE_tx may notify the request for transmitting the timing correction signal via the RRC signaling for the SL communication as an RRC message for the SL communication. UE_tx may include the request for transmitting the timing correction signal in the SCCH that is a logical channel in the SL, and transmit the request. This enables UE_tx to notify UE_rx of the request for transmitting the timing correction signal.

Another method for notifying the request for transmitting the timing correction signal is disclosed. UE_tx may notify UE_rx of the request for transmitting the timing correction signal via the MAC signaling in the SL communication. UE_tx may include the request for transmitting the timing correction signal in the MAC control information, and notify the request. Since UE_rx need not perform a process of receiving the request for transmitting the timing correction signal via the RRC, UE_rx can perform the receiving process earlier.

Another method for notifying the request for transmitting the timing correction signal is disclosed. UE tx may include, in the SCI in the SL communication, the request for transmitting the timing correction signal, and transmit the request to UE_rx in the PSCCH in the SL communication. UE_tx may include the request for transmitting the timing correction signal in the SCI1. UE_tx may include the request for transmitting the timing correction signal in the SCI1, and notify the request in the PSCCH1. Alternatively, UE_tx may include the request for transmitting the timing correction signal in the SCI2. UE_tx may include the request for transmitting the timing correction signal in the SCI2, and notify the request in the PSCCH2. The notification of the request for transmitting the timing correction signal in the PSCCH enables UE_rx to perform the receiving process earlier. Thus, transmission of the timing correction signal from UE_rx can be configured earlier.

Another method for notifying the request for transmitting the timing correction signal is disclosed. UE_tx may transmit the request for transmitting the timing correction signal to UE_rx, using the PSCCH and the PSSCH in the SL communication. For example, UE_tx may include, in the SCI, information indicating the request for transmitting the timing correction signal and the identifier of UE_rx out of information included in the request for transmitting the timing correction signal, transmit the information and the identifier in the PSCCH, and transmit the other information in a PSSCH associated with the PSCCH. When the request for transmitting the timing correction signal includes many pieces of information, UE_tx can transmit such pieces of information in the PSSCH for which many resources can be reserved.

The aforementioned methods for notifying the request for transmitting the timing correction signal may be used in combination. For example, UE_tx may transmit, via the RRC signaling, a part of information to be included in the request for transmitting the timing correction signal, and include the other information in the PSCCH and transmit the information. For example, UE_tx may transmit the structure of the timing correction signal via the RRC signaling, and transmit the other information in the PSCCH. For example, when a plurality of structures of the timing correction signal are configured, UE_tx can transmit many pieces of information via the RRC signaling.

UE_tx may notify a plurality of structures of the timing correction signal, separately from one of the structures of the timing correction signal to be actually transmitted by UE_rx. Furthermore, UE_tx may give the notification using the aforementioned combination. For example, UE_tx may notify the plurality of structures of the timing correction signal via the RRC signaling, and notify one of the structures of the timing correction signal to be actually transmitted by UE_rx, in the PSCCH together with information on the request for transmitting the timing correction signal. Application of the RRC signaling enables transmission of many pieces of information. Application of the PSCCH enables notification of the request for transmitting the timing correction signal to transmission of the timing correction signal, with low latency.

UE_tx may broadcast the structure of the timing correction signal as broadcast information in the SL communication. For example, UE_tx may include the structure of the timing correction signal in the MIB in the SL, and transmit the structure in the PSBCH. Consequently, UE_tx need not dedicatedly notify a plurality of UE_rxs of the structure of the timing correction signal. This can increase the use efficiency of the resources for the signaling. This is effective, for example, when the structure of the timing correction signal is configured for each UE_tx.

UE_rx transmits the timing correction signal with a predetermined timing. UE_rx may use, as the predetermined timing, the timing information for transmitting the timing correction signal which has been received from UE_tx. Alternatively, UE_rx may transmit the timing correction signal with the predetermined timing, using the frequency-time resources indicated by the latest structure of the timing correction signal after receiving the timing correction signal transmission instructing information. Alternatively, the predetermined timing may be the timing statically predetermined, for example, in a standard. Alternatively, the predetermined timing may be the timing configured by UE_tx. UE_rx transmits the timing correction signal, using the structure in which the timing correction signal has been configured.

Consequently, UE_tx can recognize the timing with which UE_rx has transmitted the timing correction signal.

UE_tx receives the timing correction signal transmitted by UE_rx. UE_tx calculates a round-trip time (RTT) in the SL communication between UE_tx and UE_rx, using the transmission timing of its own UE, the timing with which UE_rx has transmitted the timing correction signal, and the timing with which its own UE has received the timing correction signal from UE_rx. UE_tx calculates the RTT dedicated for each UE_rx.

When UE_rx performs multipath transmission of the timing correction signal, UE_tx may use the signal received the earliest for calculating the RTT. Alternatively, UE_tx may use the signal whose received power is the highest for calculating the RTT.

UE_tx calculates a clock synchronization correction value dedicated for each UE_rx, from the RTT dedicated for the UE_rx.The clock synchronization correction value should be half the RTT. UE_tx notifies UE_rx of the clock synchronization correction value dedicated for the UE_rx. UE_tx may notify UE_rx of clock synchronization correcting information dedicated for the UE_rx.The clock synchronization correcting information may include not only the clock synchronization correction value but also the identifier of UE_rx to which the clock synchronization correction value is applied. This enables UE_rx to receive, from UE_tx, the clock synchronization correction value in its own UE.

UE_rx corrects the information on clock synchronization notified from UE_tx, using the clock synchronization correction value. For example, UE_rx should add the clock synchronization correction value to the clock information. This corrects the radio propagation delay time between UE_tx and UE_rx.

UE_tx may notify UE_rx of the RTT. UE_rx calculates the clock synchronization correction value from the RTT. The clock synchronization correction value should be half the RTT. This can reduce a process of calculating the clock synchronization correction value by UE_tx. When UE_tx performs the SL communication with many UE_rxs, the processes in UE_tx can be reduced.

UE_tx may correct the clock synchronization information using the clock synchronization correction value, and notify UE_rx of the corrected clock synchronization information. UE_tx should dedicatedly notify UE_rx to which the clock synchronization correction value is applied of the clock synchronization information corrected using the clock synchronization correction value. UE_tx should perform the process of calculating the clock synchronization correction value before notifying UE_rx of the clock synchronization information. Since UE_rx can receive the corrected clock synchronization information, the clock synchronization process in UE_rx can be reduced.

The disclosed methods for notifying the request for transmitting the timing correction signal should be appropriately applied to a method for UE_tx to notify UE_rx of the clock synchronization correction value, the clock synchronization correcting information, and the clock synchronization information corrected using the clock synchronization correction value. This can produce the same advantages as previously described.

UE_tx may dedicatedly notify UE_rx of the corrected clock synchronization information, using the broadcast communication in the SL communication. UE_tx transmits, to the upper layer, the corrected clock synchronization information. UE tx may include, in an upper layer message, the corrected clock synchronization information, and dedicatedly notify UE_rx of the information. As another method, UE_tx transmits, to the upper layer, the clock synchronization correcting information. The upper layer corrects the clock synchronization, using the clock synchronization correcting information and the clock synchronization information. UE_tx may include, in the upper layer message, the clock synchronization information corrected in the upper layer, and dedicatedly notify UE_rx of the information. This is effective, for example, when the clock synchronization information is configured in the upper layer, and is notified to UE_rx through the upper layer message.

In the unicast communication or the groupcast communication in the SL communication, UE_tx may notify UE_rx of the clock synchronization information after the UEs establish the RRC connection. UE_tx may dedicatedly notify UE_rx of the clock synchronization information. The disclosed methods for notifying the request for transmitting the timing correction signal should be appropriately applied to a method for UE_tx to notify UE_rx of the clock synchronization information. This can produce the same advantages as previously described.

A transmission disabling section is prepared before and/or after the frequency-time resources to which the timing correction signal is mapped, with the slot timing in UE_tx. The transmission disabling section may be statically predetermined, or configured and notified to UE_tx by the gNB. Alternatively, UE_tx may configure the transmission disabling section. Even when the timing correction signal transmitted by UE_rx deviates from the slot timing in UE_tx due to the radio propagation delay, UE_tx can receive the timing correction signal.

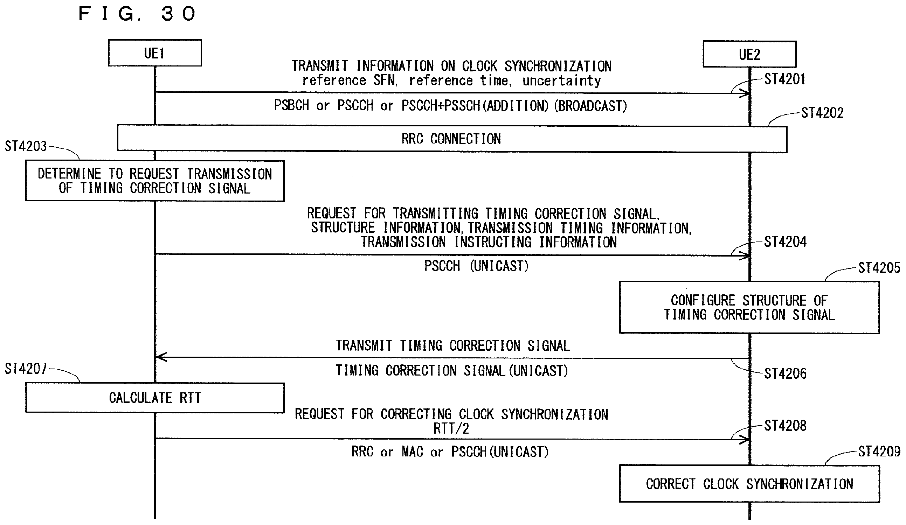

FIG. 30 illustrates the first example sequence in performing a process of correcting the clock synchronization. FIG. 30 illustrates an example where the UE 1 (UE_tx) transmits information on clock synchronization to the UE 2 (UE_rx) in the SL communication. Although FIG. 30 illustrates the example where the UE 1 transmits the information on clock synchronization to the one UE 2, the UE 1 can transmit the information on clock synchronization to a plurality of UEs 2.

In Step ST4201, the UE 1 transmits the information on clock synchronization to the UE 2. The method disclosed in the third embodiment should be applied to a method for transmitting the information on clock synchronization. The information on clock synchronization may include, for example, information on the system frame, clock information (reference time), and uncertainty. The UE 2 can receive the information on clock synchronization. This enables the clock synchronization with the UE to which the clock synchronization information has been notified from the UE 1. However, when the radio propagation range from the UE 1 differs for each UE, a problem of deterioration in the synchronization precision occurs. Thus, the clock synchronization process is performed herein.

In Step ST4202, the UEs 1 and 2 establish the RRC connection. The unicast communication may be used as the SL communication between the UEs 1 and 2. In Step ST4203, the UE 1 determines to request the UE 2 to transmit the timing correction signal. For example, the communication quality from the UE 2 may be used as the decision criterion. The UE 1 may determine to request the UE 2 to transmit the timing correction signal when the communication quality from the UE 2 deteriorates below a predetermined threshold. This is effective when the communication quality deteriorates due to the timing offset between the UEs 1 and 2.

Alternatively, for example, information on the position of the UE 2 may be used. Examples of the information on the position may include position information, area or zone information, and speed information. The UE 2 notifies the UE 1 of the information on the position. The UE 1 may determine to request the UE 2 to transmit the timing correction signal, when the information on the position received from the UE 2 indicates that the UE 2 is located outside a predetermined area.

In Step ST4204, the UE 1 transmits the request for transmitting the timing correction signal to the UE 2. For example, the UE 1 may include the structure of the timing correction signal, the transmission timing information, and the transmission instructing information in the request for transmitting the timing correction signal, and notify the information. In the example of FIG. 30, the UE 1 notifies the request for transmitting the timing correction signal, using the PSCCH.

In Step ST4205, the UE 2 configures, for example, the sequence and the frequency-time resources of the timing correction signal, using the structure of the timing correction signal notified in Step ST4204. In Step ST4206, the UE 2 transmits the timing correction signal to the UE 1. Upon receipt of the timing correction signal from the UE 2, the UE 1 calculates the RTT of the UE 2 according to the aforementioned method in Step ST4207. Furthermore, the UE 1 calculates the clock synchronization correction value of the UE 2 from the RTT.

In Step ST4208, the UE 1 transmits, to the UE 2, the clock synchronization correcting information for the UE 2. The UE 1 may transmit a request for correcting the clock synchronization to the UE 2. The UE 1 may include, in the request for correcting the clock synchronization, the clock synchronization correcting information for the UE 2 and notify the information. For example, the UE 1 transmits the clock synchronization correcting information in the PSCCH. In Step ST4209, the UE 2 corrects the clock synchronization information, using the clock synchronization information received from the UE 1 in Step ST4201 and the clock synchronization correcting information for its own UE received in Step ST4208. For example, the UE 2 should add the clock synchronization correction value to the clock information. This corrects the radio propagation delay time between the UEs 1 and 2.

What is disclosed is that the information on clock synchronization in the SL may be notified in the broadcast communication. What is further disclosed is that the process of correcting the clock synchronization may be performed in the unicast communication. The information on clock synchronization may be notified in LTE, and the process of correcting the clock synchronization may be performed in NR. This is effective for the UE that supports both of the RATs of LTE and NR

Although FIG. 30 discloses the example when the number of the UEs 2 is one, the number of the UEs 2 may be two or more. Each of the UEs should dedicatedly perform the process of correcting the clock synchronization. Each of the UEs to which the UE 1 has transmitted the information on clock synchronization may dedicatedly perform the process of correcting the clock synchronization. This enables the clock synchronization between the UEs in the SL communication with high precision.

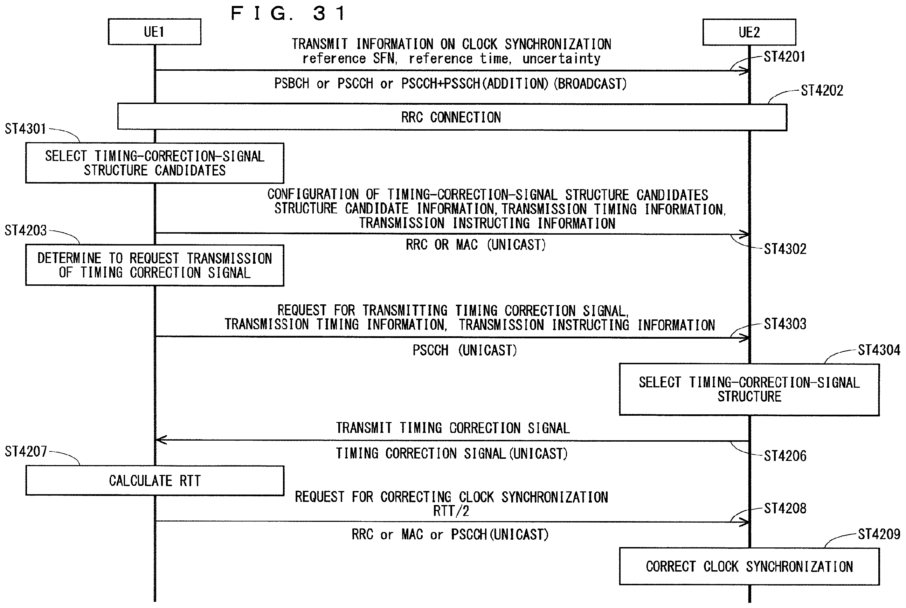

FIG. 31 illustrates the second example sequence in performing the process of correcting the clock synchronization. In FIG. 31, the same step numbers are applied to the steps common to those in FIG. 30, and the common description thereof is omitted. Unlike the example of FIG. 30, FIG. 31 illustrates an example of separately notifying a timing-correction-signal structure and a request for transmitting the timing correction signal. FIG. 31 also illustrates an example of selecting a plurality of timing-correction-signal structures and configuring the structures as candidates.

In Step ST4301, the UE 1 selects one or more timing-correction-signal structures. The UE 1 may select the one or more timing-correction-signal structures as timing-correction-signal structure candidates. In Step ST4302, the UE 1 notifies the UE 2 of the timing-correction-signal structure candidates. Configuration information on the timing-correction-signal structure candidates may include information on the one or more timing-correction-signal structures (structure candidate information), the transmission timing information associated with each of the structures, and the transmission instructing information. What is described herein is an example where the UE 1 gives the notification in Step ST4302 via the RRC signaling or the MAC signaling. The UE 2 receives the timing-correction-signal structure candidates from the UE 1.

In Step ST4203, the UE 1 determines to request the UE 2 to transmit the timing correction signal similarly to FIG. 30. In Step ST4303, the UE 1 notifies the UE 2 of the request for transmitting the timing correction signal. Here, the UE 1 includes, in the request, the transmission timing information and the transmission instructing information. What is described herein is an example where the UE 1 gives the notification in Step ST4303 using the PSCCH. Upon receipt of the request for transmitting the timing correction signal from the UE 1, the UE 2 selects, in Step ST4304, a timing-correction-signal structure from among the timing-correction-signal structure candidates received from the UE 1 in Step ST4302. In Step ST4206, the UE 2 transmits the timing correction signal to the UE 1 using the selected timing-correction-signal structure.

As such, the UE 1 notifies the UE 2 of the timing-correction-signal structure candidates, and the UE 2 selects the timing-correction-signal structure to be used for actual transmission from among the structure candidates. This enables, for example, the UE 2 to transmit the timing correction signal using the timing-correction-signal structure that can be transmitted with the earliest timing since receipt of the request for transmitting the timing correction signal. This enables the timing correction with low latency.

The UE 1 should receive transmission from the UE 2, using all the timing-correction-signal structures selected as the candidates. Using whichever structure the UE 2 transmits the timing correction signal, the UE 1 can receive the signal. The UE 2 may select a plurality of timing-correction-signal structures to be used for actual transmission from among the timing-correction-signal structure candidates. The UE 2 may transmit the timing correction signals using the selected timing-correction-signal structures. The transmission using the plurality of timing-correction-signal structures can increase the probability of successfully receiving the timing correction signal in the UE 1. For example, even when the UE 1 cannot receive one timing correction signal, the UE 1 has only to receive the other one timing correction signal.

The timing-correction-signal structure candidates may be dedicatedly selected for each of plurality of UEs to which the information on clock synchronization is transmitted from the UE 1. This can avoid an overlap in timing-correction-signal structure between the UEs. As another method, the timing-correction-signal structure candidates may be selected so that the plurality of UEs to which the information on clock synchronization is transmitted from the UE 1 share a part or the entirety of the timing-correction-signal structure candidates. Although there may be an overlap in timing-correction-signal structure between the UEs, the use efficiency of resources can be increased.

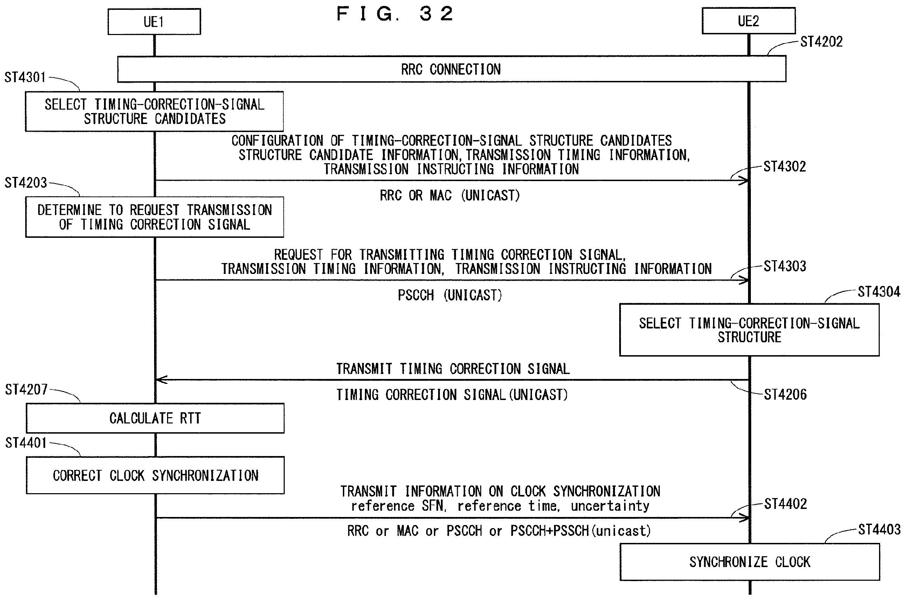

FIG. 32 illustrates the third example sequence in performing the process of correcting the clock synchronization. In FIG. 32, the same step numbers are applied to the steps common to those in FIGS. 30 and 31, and the common description thereof is omitted. Unlike the example of FIG. 31, FIG. 32 illustrates an example where the UE 1 corrects the clock synchronization and notifies the UE 2 of the information on the corrected clock synchronization.

In the example of FIG. 32, Step ST4201 in the examples of FIGS. 30 and 31 is not performed. Specifically, the UE 1 does not perform the step for transmitting the information on clock synchronization to the UE 2 before correction of the clock synchronization. In Step ST4401, the UE 1 calculates the clock synchronization correction value, using the RTT of the UE 2 calculated in Step ST4207. The UE 1 corrects the clock synchronization information, using the information on clock synchronization and the clock synchronization correction value of the UE 2. For example, the UE 1 should add the clock synchronization correction value of the UE 2 to the clock information. This produces the information on clock synchronization of the UE 2 (after correcting the clock synchronization) in which the radio propagation delay time between the UEs 1 and 2 has been corrected.

In Step ST4402, the UE 1 transmits the information on clock synchronization (after correcting the clock synchronization) to the UE 2. The UE 1 notifies combined information of the clock information after correcting the clock synchronization, information on the corresponding system frame, and uncertainty. The UE 1 may transmit the information on clock synchronization (after correcting the clock synchronization) dedicatedly to each UE. For example, when the radio propagation range between UE_tx and UE_rx in the SL communication and the information on clock synchronization (after correcting the clock synchronization) are different for each UE, the dedicated notification to each UE enables application of the information on clock synchronization (after correcting the clock synchronization) dedicatedly to each UE.

In Step ST4403, the UE 2 synchronizes the clock using the received information on clock synchronization (after correcting the clock synchronization). This enables the UEs that receive the information on clock synchronization to synchronize their clocks after correcting the clock synchronization. Consequently, the precision of the clock synchronization can be increased. Furthermore, there is no need to separately notify the information on clock synchronization and the clock synchronization correcting information. This enables notification of the information on clock synchronization after correcting the clock synchronization once. This can reduce the amount of signaling.

When the UE 1 selects the timing-correction-signal structure candidates so that a plurality of UEs 2 to which the information on clock synchronization is transmitted from the UE 1 share a part or the entirety of the timing-correction-signal structure candidates and each of the UEs 2 selects the timing correction signal for actual transmission from among the structure candidates, a collision in timing correction signal occurs between the plurality of UEs 2. When the collision occurs, the UE 1 has a problem of failing to receive the timing correction signal from at least one of the UEs 2. A method for solving such a problem is disclosed.

The UE 2 retransmits the timing correction signal. The UE 2 determines whether to perform the retransmission. The UE 2 that has determined to perform the retransmission selects another timing-correction-signal structure from among the timing-correction-signal structure candidates, and transmits the timing correction signal in the selected structure to the UE 1. The UE 1 may notify the UE 2 of information on the retransmission timing in advance. The UE 1 may configure the retransmission timing for each timing-correction-signal structure. The UE 1 may include information on the retransmission timing in the notification of the timing-correction-signal structure, and notify the information. This enables, for example, the UE 1 to cause the UE 2 to retransmit the timing correction signal without waiting for the next timing-correction-signal structure.

A method for the UE 2 to determine whether to perform the retransmission is disclosed. When the UE 2 cannot receive clock correction information within a predetermined period, the UE 2 determines to retransmit the timing correction signal. Alternatively, when the UE 2 cannot receive the information on clock synchronization within a predetermined period, the UE 2 may determine to retransmit the timing correction signal.

A timer may be provided for managing the predetermined period. The predetermined period may be statically predetermined, for example, in a standard, or configured and notified to the UE 2 by the UE 1. Alternatively, the predetermined period may be configured and notified to the UE 1 by the gNB, and then notified from the UE 1 to the UE 2. This enables the UE 2 to determine to retransmit the timing correction signal when the UE 1 cannot receive the time correction signal. Retransmission of the timing correction signal from the UE 2 can increase the probability of successfully receiving the timing correction signal in the UE 1. Consequently, the clock synchronization can be corrected for the UE 2.

As another method, the UE 1 may notify the UE 2 of a request for the timing correction signal again. When the UE 1 cannot receive the time correction signal from the UE 2 with a predetermined timing configured by its own UE, the UE 1 notifies the UE 2 of the request for the timing correction signal again. When the UE 1 cannot receive the time correction signal from the UE 2 with the predetermined timing configured by its own UE within a predetermined period, the UE 1 may notify the UE 2 of the request for the timing correction signal again. A timer may be provided for managing the predetermined period. This is effective when the timing correction signal is periodically transmitted.

The disclosed method may be applied only to the UE that establishes a TSN link. The disclosed method need not be applied to the UE that does not establish the TSN link. This prevents increase in processes of the UE that does not establish the TSN link.

The disclosed method on the process of correcting the clock synchronization need not be implemented for all the UEs to which the information on clock synchronization has been notified. The disclosed method on the process of correcting the clock synchronization may be implemented for a part of the UEs to which the information on clock synchronization has been notified. The disclosed method on the process of correcting the clock synchronization may be implemented for the UE requiring correction of the clock synchronization. For example, the disclosed method on the process of correcting the clock synchronization may be implemented when a distance between UE_tx and UE_rx is long.

The disclosed method may be repeatedly implemented. The process of correcting the clock synchronization may be periodically performed. UE_tx may request UE_rx to periodically transmit the timing correction signal. UE_tx may include the periodical information in the request for transmitting the timing correction signal, and notify UE_rx of the information. For example, when the UEs move, the process of correcting the clock synchronization is repeatedly performed. This can correct the clock synchronization even when a distance between UEs varies due to the movement of the UEs.

The method disclosed in the fourth embodiment can establish the TSN link between the UEs with high synchronization precision.

Although transmission of the timing correction signal from UE_rx to UE_tx is disclosed, the timing correction signal may include scheduling request information. Furthermore, the timing correction signal may include BSR information. When UE_rx needs to transmit information to UE_tx, UE_rx can request a schedule from UE_tx, using the timing correction signal in the transmission.

### The first modification of the fourth embodiment

Support of groupcasts in the SL communication has been studied in 3GPP. In the groupcast communication, a UE group is formed, and UEs in the group perform the SL communication. A problem is that none discloses a method for establishing the TSN link when such a UE group is formed. Furthermore, operations using both of Radio Access Technologies (RATs) of LTE and NR have been studied in 3GPP. A problem is that none discloses a method for establishing the TSN link in the operations using both of the RATs. The first modification of the fourth embodiment discloses a method for solving such problems.

A method for one UE in a UE group that performs the groupcast communication to allocate resources for the SL communication to another UE has been proposed. The UE that allocates the resources for the SL communication may be referred to as a head UE, and the other UE may be referred to as a member-UE. UE_tx in the methods disclosed in the third and fourth embodiments should be applied to the head UE, as the method for establishing the TSN link when the UE group is formed. Furthermore, UE_rx should be applied to the member-UE. The TSN link with high synchronization precision can be established in the UE group.

The UEs in the UE group need not perform a process of correcting the clocks. This is effective, for example, when the UEs in the UE group are close to each other. The same clock synchronization correction value may be configured for the member UEs in the UE group. For example, the head UE performs the process of correcting the clock synchronization with one of the member UEs in the UE group, and notifies all the member UEs in the UE group of the calculated clock synchronization correction value, using the clock synchronization correction value. The method for dedicatedly notifying each UE or the notification method using the broadcast communication may be applied to a method for notifying all the member UEs in the UE group of the same clock synchronization correction value. The broadcast communication can reduce the UE dedicated signaling.

The member UEs correct the clock synchronization, using the clock synchronization correction value received from the head UE. This is effective when the member UEs in the UE group are close by.

The UEs may be grouped based on the position information of the UEs. For example, a group of UEs is formed for each particular area (zone). A resource pool for each zone may be configured, so that the resource pool corresponding to the zone may be used. One or more UE groups may be formed for each zone. As previously described, the methods disclosed in the third and fourth embodiments should be applied to the method for establishing the TSN link when such UE groups are formed.

The UEs in the UE group configured in a zone need not perform the process of correcting the clocks. This is effective, for example, when the zone is narrow and the UEs are close to each other.

The member UEs may be grouped based on the position information of the member UEs. Furthermore, one UE group may be divided into sub-groups based on the position information of the member UEs. For example, the UEs in one UE group are divided into sub-groups for each zone to which the UEs belong. The aforementioned methods should be applied to the clock synchronization method and the method on the process of correcting the clock synchronization when such sub-groups are formed.

The UE may notify the gNB of the position information of the UE, or the gNB may calculate the position information of the UE. The gNB notifies the UE of to which UE group the UE belongs. A UE group identifier may be provided. The gNB may notify the UE of a UE group identifier of a UE group to which the UE belongs. This can form a UE group based on the position information of the UEs.

As another method, the position information of the member UEs may be notified to the head UE. The head UE may calculate the position information of the member UEs. The head UE notifies the member UE of to which sub-group the UE belongs. A sub-group identifier may be provided. The head UE may notify the member UE of a sub-group identifier of a sub-group to which the UE belongs. This can form a sub-group based on the position information of the UEs in one UE group.

When the TSN link is established in the SL communication, the UEs that establish the TSN link may be limited to UEs in the same UE group. Specifically, establishment of the TSN link only within the UE group should be enabled. Establishment of the TSN link between different UE groups should be disabled. The TSN link is established only within the UE group. The UEs that establish the TSN link are UEs within the same UE group. The methods disclosed in the third and fourth embodiments should be applied to a method for the UEs in the UE group to establish the TSN link.

When one UE belongs to a plurality of UE groups, the one UE may be capable of establishing a plurality of TSN links. When the TSN link is established for each plurality of UE groups, the one UE synchronizes the clock via the established plurality of TSN links. When a UE group is formed for each plurality of services of one UE, the TSN link can be established for each UE group, and the TSN link can be established for each of the services. The methods disclosed in the third and fourth embodiments should be applied to a method for establishing the TSN link between the UEs in the UE group.

Similarly, when the TSN link is established in the SL communication, the UEs that establish the TSN link may be limited to UEs using the same RAT. Specifically, establishment of the TSN link only using the same RAT should be enabled. Establishment of the TSN link using different RATs should be disabled. The TSN link is established only using the same RAT. The UEs that establish the TSN link are UEs using the same RAT. The methods disclosed in the third and fourth embodiments should be applied to a method for the UEs using the same RAT to establish the TSN link.

Limiting the UEs that can establish the TSN link to UEs in a UE group or using the same RAT enables the establishment of the TSN link using the SL communication as a system with ease.

A method for establishing the TSN link between different UE groups using the SL communication is disclosed. Head UEs in respective UE groups synchronize their clocks. The head UEs mutually notify the information on clock synchronization in advance. The head UEs may mutually notify the clock synchronization correcting information. The methods disclosed in the third and fourth embodiments should be applied to these methods.

The gNB may notify the UE of a validity time limit of the clock synchronization. When the head UEs synchronize their clocks, the validity time limit of the clock synchronization received from the gNB may be synchronous with the latest time from the UE. The UE may include the validity time limit of the clock synchronization received from the gNB in the information on clock synchronization and transmit the validity time limit. Upon receipt of the clock synchronization information of another head UE, the head UE may determine with which head UE the clock is synchronized within the validity time limit. This enables the clock synchronization between the head UEs for a longer period.

The aforementioned methods should be applied to the establishment of the TSN link in the UE group. This enables the establishment of the TSN link between different UE groups using the SL communication. Since the TSN link can be established between different UE groups, the TSN link can be established, for example, between many UEs, between various UEs, and between UEs in a wide range.

### The Fifth Embodiment

Support of unicasts and groupcasts in the SL communication in NR has been studied in 3GPP. Support of, for example, the HARQ feedback (Ack/Nack) or the CSI report in the unicast communication or the groupcast communication has been studied. As such, the bidirectional communication is performed in the unicast communication or the groupcast communication.

In the normal communication via the Uu interface between the gNB and the UE, the UL transmission timing from the UE to the gNB is adjusted in consideration of the radio propagation delay. The UE synchronizes with the DL signal from the gNB, adjusts the transmission timing of the UL signal to the gNB, and transmits the UL signal. Meanwhile, the conventional SL communication relies only on broadcasts. Since the broadcasts do not require feedback transmission, the transmission timing of the feedback transmission need not be considered.

However, the bidirectional communication and the feedback transmission are performed in the unicasts and the groupcasts in the SL communication in NR. In the SL communication, the bidirectional communication is performed with UL resources. With simple application of the transmission timing of the UL signal between the gNB and the UE to the SL communication, the UEs that perform the SL communication transmit the UL signals to the gNB with different timings. This is because the radio propagation range from the gNB differs for each of the UEs that perform the SL communication.

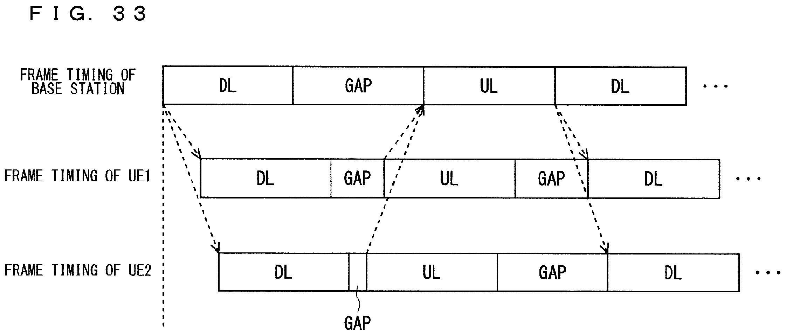

FIG. 33 is a conceptual diagram illustrating transmission timings of UEs that perform the SL communication, with application of a conventional method. A base station frame consists of the DL, a gap (GAP), and the UL. The lateral direction represents the time axis. The UE 1 receives a signal from the gNB, and synchronizes the timing of its own UE with the DL frame timing of the gNB. As described above, the UE 1 adjusts the UL frame timing of the base station in consideration of the radio propagation delay to adjust the transmission timing of its own UL signal. The same applies to the UE 2.

When the radio propagation range from the gNB to the UE 1 differs from that from the gNB to the UE 2, the transmission timings of the UL signals from the UE 1 and the UE 2 differ. Thus, when the UE 1 and the UE 2 perform the SL communication, the transmission/reception timing is out of alignment between the UEs that perform the SL communication. This causes deterioration of the communication quality between the UEs or a failure in the communication.

The fifth embodiment discloses a method for determining the transmission timing of the feedback transmission to solve such a problem.

In the SL communication, the UE that performs transmission (UE_tx) includes, in the SL control information (SCI), the scheduling information such as the resource allocation information of the PSSCH or the information of the communication target UE (UE_rx), and transmits the information in the PSCCH. Furthermore, UE_tx transmits the PSSCH according to the scheduling information. Upon receipt of the PSCCH, UE_rx recognizes that the PSCCH is for its own UE, receives the PSSCH according to the scheduling information, and obtains the data.

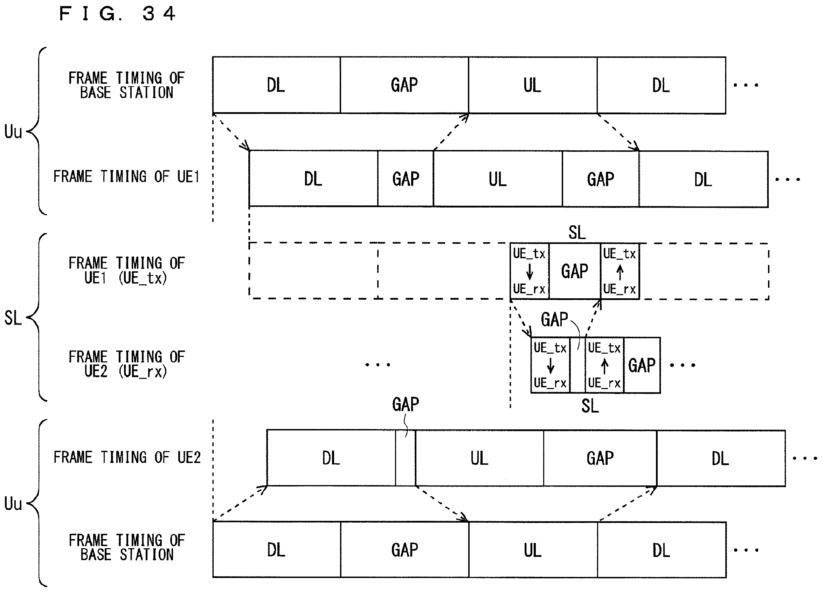

UE_tx transmits the SL signal with reference to the DL frame timing received from the gNB. The SL transmission timing in UE_tx is based on the DL frame timing received from the gNB. FIG. 34 illustrates the transmission timings of the UEs that perform the SL communication according to the fifth embodiment. A base station frame consists of the DL, a non-transmission section (a gap (GAP)), and the UL. The lateral direction represents the time axis. Each duration of the DL, the gap, and the UL may consist of, for example, one or more subframes, one or more slots, one or more symbols, one or more Ts periods, or a combination of some of these. The unit of time may be, for example, the unit of Ts (= sampling frequency (fs)), the unit of sub-symbol, the unit of symbol, the unit of slot, the unit of subframe, or the unit of TTI.

The UE 1 is connected to the gNB through the Uu interface. The UE 1 receives a signal from the gNB, and synchronizes the timing of its own UE with the DL frame timing of the gNB. As described above, the UE 1 adjusts the UL frame timing of the base station in consideration of the radio propagation delay to adjust the transmission timing of its own UL signal. The same applies to the UE 2. When the radio propagation range from the gNB to the UE 1 differs from that from the gNB to the UE 2, the transmission timings of the UL signals from the UE 1 and the UE 2 differ.

A case where the UE 1 performs the SL communication with the UE 2, the UE 1 is UE_tx, and the UE 2 is UE_rx is exemplified. The UE 1 transmits the SL signal with reference to the DL frame timing received from the gNB. The UE 1 performs the SL transmission with the UL frame timing calculated from a predetermined slot format of the DL, the GAP, and the UL with reference to the DL frame timing received from the gNB.

The peer UE 2 in the SL communication receives the SL transmission signal from the UE 1, and synchronizes the timing of its own UE with the frame timing of the UE 1. The UEs 1 and 2 perform the SL communication with this timing.

Even when the radio propagation range from the gNB to the UE 1 differs from that from the gNB to the UE 2, this method can remove the timing offset in transmission/reception between the UEs that perform the SL communication. Accordingly, deterioration of communication quality or interruption of communication between the UEs can be reduced.

Another method is disclosed. UE_tx receives a signal from the gNB, and synchronizes the timing of its own UE with the DL frame timing of the gNB. As described above, UE_tx adjusts the UL frame timing of the base station in consideration of the radio propagation delay to adjust the transmission timing of its own UL signal. UE_tx transmits the SL signal with reference to the transmission timing of the UL signal to the gNB. The SL transmission timing in UE_tx is based on the UL frame timing to the gNB.

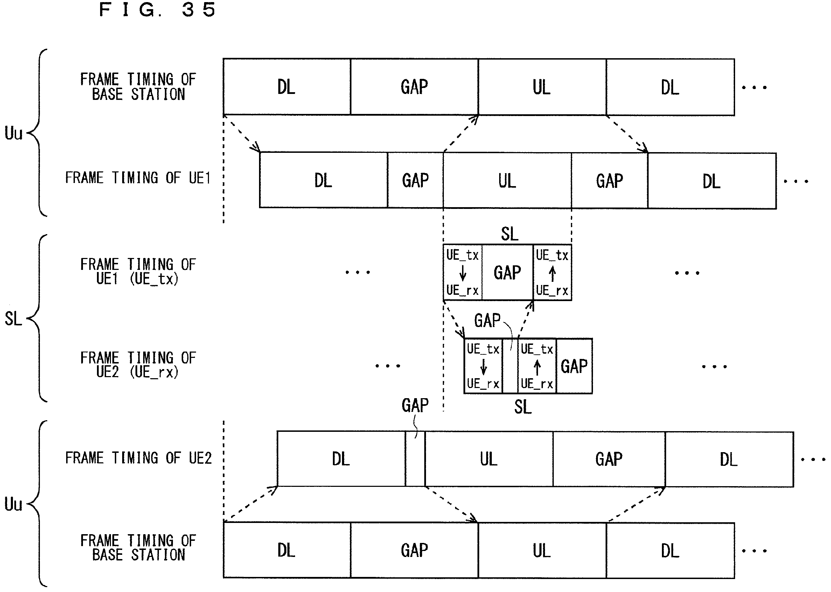

FIG. 35 illustrates the transmission timings of the UEs that perform the SL communication according to the fifth embodiment. The UE 1 is connected to the gNB through the Uu interface. The UE 1 receives a signal from the gNB, and synchronizes the timing of its own UE with the DL frame timing of the gNB. As described above, the UE 1 adjusts the UL frame timing of the base station in consideration of the radio propagation delay to adjust the transmission timing of its own UL signal. The same applies to the UE 2. When the radio propagation range from the gNB to the UE 1 differs from that from the gNB to the UE 2, the transmission timings of the UL signals from the UE 1 and the UE 2 differ.

A case where the UE 1 performs the SL communication with the UE 2, the UE 1 is UE_tx, and the UE 2 is UE_rx is exemplified. The UE 1 receives a signal from the gNB, and synchronizes the timing of its own UE with the DL frame timing of the gNB. As described above, the UE 1 adjusts the UL frame timing of the base station in consideration of the radio propagation delay to adjust the transmission timing of its own UL signal. The UE 1 transmits the SL signal with reference to the transmission timing of the UL signal to the gNB. The SL transmission timing in the UE 1 is based on the UL frame timing to the gNB.

The peer UE 2 in the SL communication receives the SL transmission signal from the UE 1, and synchronizes the timing of its own UE with the frame timing of the UE 1. The UEs 1 and 2 perform the SL communication with this timing.

The SL transmission timing may be configured using, in combination, a method based on the DL frame timing received by UE_tx from the gNB and a method based on the UL frame timing to the gNB. For example, the timing of the leading edge of a frame is based on the UL frame timing to the gNB, and the timing of the trailing edge of the frame is based on the DL frame timing received from the gNB, as the frame timings in the SL communication. This can increase the communication duration between the UEs configured in one frame of the SL.

Even when the radio propagation range from the gNB to the UE 1 differs from that from the gNB to the UE 2, this method can remove the timing offset in transmission/reception between the UEs that perform the SL communication. Accordingly, deterioration of communication quality or interruption of communication between the UEs can be reduced.

When the UE is outside the coverage of a cell configured by the gNB, the UE cannot receive a signal from the gNB, or synchronize with the DL frame timing of the gNB. In such a case, the UE synchronizes with another nearby UE by receiving the SLSS and the PSBCH from the other UE. Here, the UE should use not the DL frame timing of the gNB but the reception timing from the other UE with which the UE synchronizes, as the reference timing of the SL communication.

The disclosed methods should be applied to a method for performing the SL communication with reference to the reception timing from the other UE with which the UE synchronizes. When the disclosed second method is applied, the UE should calculate a transmission timing in consideration of the radio propagation delay from another UE with which the UE synchronizes, with reference to the reception timing from the other UE, and transmit the SL signal with reference to the transmission timing. A method to be described later should be applied to a method for calculating the transmission timing in consideration of the radio propagation delay between the UEs in the SL communication.

Even when the UE is outside the coverage configured by the gNB, this method can remove the timing offset in transmission/reception between the UEs that perform the SL communication. Accordingly, deterioration of communication quality or interruption of communication between the UEs can be reduced.

When the bidirectional communication is performed between the UEs in the SL communication, the radio propagation range between the UEs causes the radio propagation delay. Thus, even when the frame timing of the SL communication is determined in the aforementioned method, UE_tx has problems of failing to identify the reception timing of the feedback signal transmitted from UE_rx and receive the feedback signal. A method for solving such problems is disclosed.

A gap is provided in a slot to be used for the SL communication. For example, a gap is inserted between resources to be used for transmission from UE_tx to UE_rx and resources to be used for transmission from UE_rx to UE_tx. UE_tx may configure a gap for UE_rx by scheduling. For example, UE_tx may notify the configuration of the gap via the RRC signaling or the MAC signaling in the SL communication between the UEs. Alternatively, UE_tx may include the configuration of the gap in the SCI, and transmit the configuration in the PSCCH. Alternatively, UE_tx may transmit the configuration of the gap in the PSSCH to be transmitted from UE_tx to UE_rx. Consequently, the UEs that perform the SL communication can configure the gap.

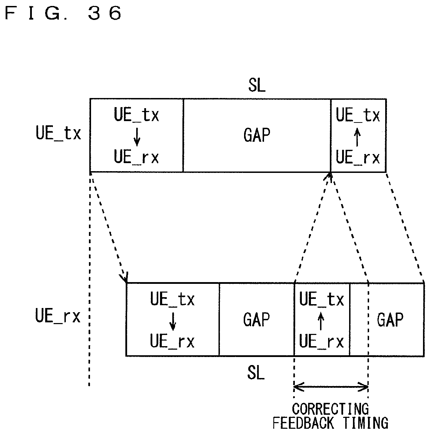

FIG. 36 illustrates the slots for the SL communication according to the fifth embodiment. The slots for the SL communication include gaps. The slots in the SL communication include resources from UE_tx to UE rx, the gaps, and/or resources from UE_rx to UE_tx. UE_tx performs transmission to UE_rx with the resources from UE_tx to UE_rx. UE_tx does not perform transmission in a section of GAP. UE_tx performs reception from UE_rx with the resources from UE_rx to UE_tx.

UE_rx performs reception from UE_tx with the resources from UE_tx to UE_rx. Here, the radio propagation delay occurs. UE_rx performs transmission to UE_tx, using the resources from UE_rx to UE_tx with the feedback timing corrected. The feedback timing is corrected so that UE_tx can perform reception from UE_rx with the resources from UE_rx to UE_tx. A method to be described later should be applied to a method for correcting the feedback timing.

UE_tx may configure, for UE_rx, the resources from UE_tx to UE_rx and/or the resources from UE_rx to UE_tx by scheduling. The configuration of the resources may be combined with the configuration of the gaps. These configurations may be made as the slot format in the SL. The number of slot formats is not limited to one but may be two or more. A plurality of slot formats may be combined. The aforementioned methods should be applied to a method for notifying the configuration of the slot format between the UEs.

These configurations may be made dedicatedly for each UE. This is effective, for example, in the unicast communication. Alternatively, these configurations may be made for each UE group. This is effective, for example, in the groupcast communication.

Each duration of the gap, the resources from UE_tx to UE_rx, and the resources from UE_rx to UE_tx may consist of, for example, one or more subframes, one or more slots, one or more symbols, one or more Ts periods, or a combination of some of these. The unit of time may be, for example, the unit of Ts (= sampling frequency (fs)), the unit of sub-symbol, the unit of symbol, the unit of slot, the unit of subframe, or the unit of TTI.

The gaps, the resources from UE_tx to UE_rx, and the resources from UE_rx to UE_tx cam be flexibly configured according to an SL communication state, for example, the communication capacity from UE_tx to UE_rx, the communication capacity to be fed back from UE_rx to UE_tx, a distance between UE_tx and UE_rx, or the number of UE_rxs that perform the SL communication with UE_tx.

The configurable resources may be appropriately allocated as the gaps, the resources from UE_tx to UE_rx, and the resources from UE_rx to UE_tx in the slot format in the SL. Such resources may be referred to as the configurable resources.

The slot format may be configured a plurality of times. For example, UE_tx configures the slot format for UE_rx separately twice. In the first notification of the slot format configuration, UE_tx notifies UE_rx of the gaps, the resources from UE_tx to UE_rx, the resources from UE_rx to UE_tx, and the slot format configuration using the configurable resources. In the second notification of the slot format configuration, UE_tx may change a part or the entirety of the configurable resources for UE_rx. For example, UE_tx may change the configurable resources into the gaps, the resources from UE_tx to UE_rx, or the resources from UE_rx to UE_tx.

When the slot format is configured a plurality of times, methods for notifying the configurations may vary. For example, the first notification is given via the RRC signaling in the SL communication, and the second and subsequent notifications are given in the PSCCH.

This can increase or decrease the amount of the gaps, the resources from UE_tx to UE_rx, or the resources from UE_rx to UE_tx, according to an SL communication state. The communication optimal for the SL communication state becomes possible.

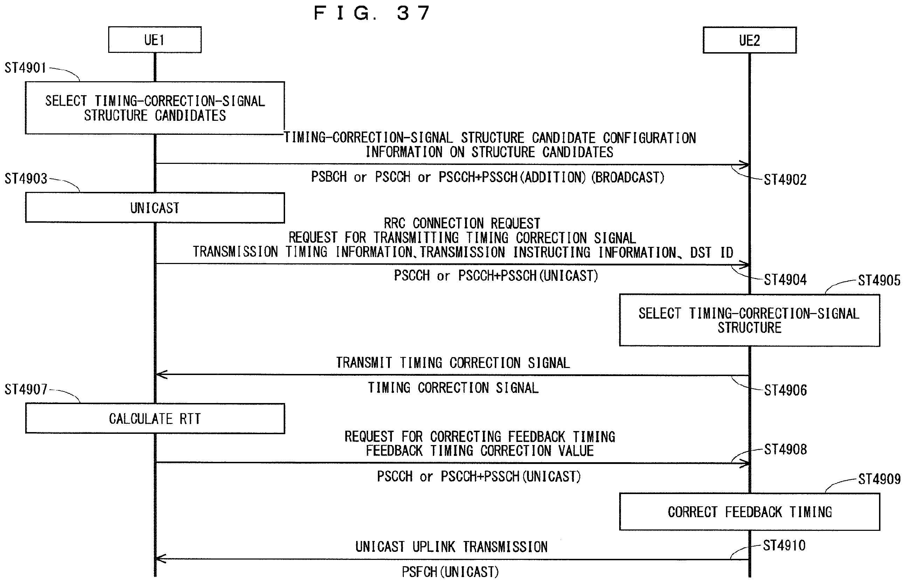

As described above, when the bidirectional communication is performed between the UEs in the SL communication, the feedback timing should be corrected. The method disclosed in the fourth embodiment should be appropriately applied to a method for correcting the feedback timing. FIG. 37 illustrates an example sequence of the method for correcting the feedback timing with application of the method disclosed in the fourth embodiment. FIG. 37 illustrates a case where the UEs 1 and 2 perform the SL communication.

In Step ST4901, the UE 1 (UE_tx) selects one or more timing-correction-signal structures, and determines the selected structures as timing-correction-signal structure candidates. In Step ST4902, the UE 1 transmits the timing-correction-signal structure candidate configuration to the UE 2 (UE_rx). Information on the timing-correction-signal structure candidate configuration should be information on the timing-correction-signal structure candidates. The UE 1 may notify the information via the PC5 signaling in the SL communication. Alternatively, the UE 1 may give the notification via the MAC signaling. Alternatively, the UE 1 may include the information in the MIB for the SL communication, and transmit the information in the PSBCH. Alternatively, the UE 1 may include the information in the SCI, and transmit the information in the PSCCH. Alternatively, the UE 1 may transmit the information in the PSSCH. The UE 1 may notify the resource allocation information of the PSSCH in the PSCCH.

The UE 1 should give the notification using the broadcast communication. Consequently, the UE 1 can transmit the timing correction signal structure to the peer UE while the unicast communication between the UEs 1 and 2 has not yet been configured. Consequently, the UE 2 can receive the timing correction signal structure transmitted from the UE 1.

In Step ST4903, data for the unicast communication is generated in the UE 1. In Step ST4904, the UE 1 notifies the UE 2 of a request for transmitting the timing correction signal. Information to be included in the request should be, for example, the transmission timing information, the transmission instructing information, or an identifier of the UE 2 (an identifier of the peer UE with which the unicast communication is performed (DST ID)). The UE 1 may transmit the notification in the PSCCH or the PSSCH. Consequently, the UE 2 receives the request for transmitting the timing correction signal.

The UE 1 may notify the RRC Connection Request as the request for transmitting the timing correction signal. The UE 1 may include the request for transmitting the timing correction signal in the RRC Connection Request and notify the request. The UE 1 may include the request for transmitting the timing correction signal in the first signal or message to be notified when starting the unicast communication, and notify the UE 2 of the request. This enables correction of the feedback timing before the unicast communication is started.

Upon receipt of the request for transmitting the timing correction signal from the UE 1, the UE 2 selects, in Step ST4905, a timing-correction-signal structure from among the timing-correction-signal structure candidates received from the UE 1 in Step ST4902. In Step ST4906, the UE 2 transmits the timing correction signal to the UE 1 using the selected timing-correction-signal structure. Upon receipt of the timing correction signal from the UE 2, the UE 1 calculates the RTT of the UE 2 in Step ST4907. Furthermore, the UE 1 calculates the feedback timing correction value of the UE 2 from the RTT.

The feedback timing correction value should be a value including the radio propagation delay from the UE 1 to the UE 2 and the radio propagation delay from the UE 2 to the UE 1. Thus, the feedback timing correction value should be the RTT. In Step ST4908, the UE 1 transmits the feedback timing correction information of the UE 2 to the UE 2. The UE 1 may transmit a request for correcting the feedback timing to the UE 2. The UE 1 may include the feedback correction request information of the UE 2 in the request for correcting the feedback timing and notify the information. For example, the UE 1 may transmit the feedback timing correction information in the PSCCH.

In Step ST4909, the UE 2 corrects the feedback timing using the feedback timing correction information. For example, as illustrated in FIG. 36, the UE 2 uses the timing obtained by subtracting the feedback timing correction value from the transmission timing calculated with reference to the timing of the signal received from the UE 1, as the actual transmission timing. This corrects the radio propagation delay time between the UEs 1 and 2. In Step ST4910, the UE 2 performs the feedback transmission with the corrected transmission timing. The UE 2 may perform the feedback transmission, for example, in the PSFCH.

Consequently, even when the bidirectional communication is supported in the SL communication, the UEs that perform the SL communication can perform the feedback transmission without any timing offset in transmission/reception. The collision between the transmission timing and the reception timing in the UEs that perform the SL communication can be reduced. Even when the radio propagation range from the gNB to each UE is different in the SL communication, the timing offset in transmission/reception between the UEs that perform the SL communication can be reduced. Accordingly, deterioration of communication quality or interruption of communication between the UEs can be reduced.

### The Sixth Embodiment

A method on the HO processes during the SL communication in conventional LTE is described. The eNB notifies, with an HO command, the UE of a reception resource pool (RX RP) and an exceptional resource pool (exceptional RP) in the target cell (T-cell). The UE that performs transmission (transmission UE) in the SL communication performs transmission using the exceptional RP during the HO. When the HO is completed, the transmission UE obtains a transmission resource pool (TX RP) in the target cell, and performs transmission using the transmission RP. The UE that performs reception (reception UE) in the SL communication searches for the reception RP notified with the HO command during the HO, and receives data from the transmission UE. When the HO is completed, the reception UE obtains the reception resource pool (RX RP) in the target cell, searches for the reception RP, and receives data from the transmission UE.

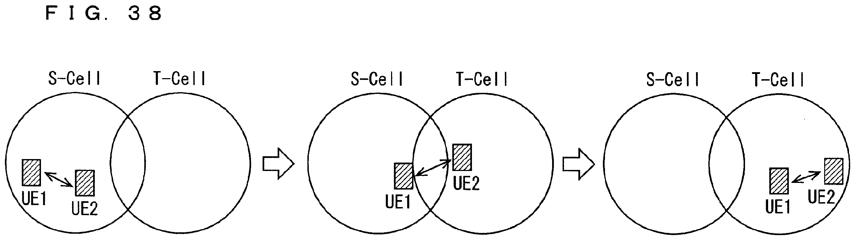

FIG. 38 is a conceptual diagram illustrating states where the UEs that perform the SL communication move between two cells. The UE 1 and the UE 2 perform the SL communication. In a state to the left of FIG. 38, the UE 1 and the UE 2 are in the S-cell. Suppose that the UEs move as illustrated in the middle of FIG. 38. Here, the UE 2 performs the HO from the S-cell to the T-cell, and the UE 1 is in the S-cell. Then, suppose that the UEs move as illustrated to the right of FIG. 38. Here, the UE 1 performs the HO from the S-cell to the T-cell, and the UE 2 is in the T-cell.

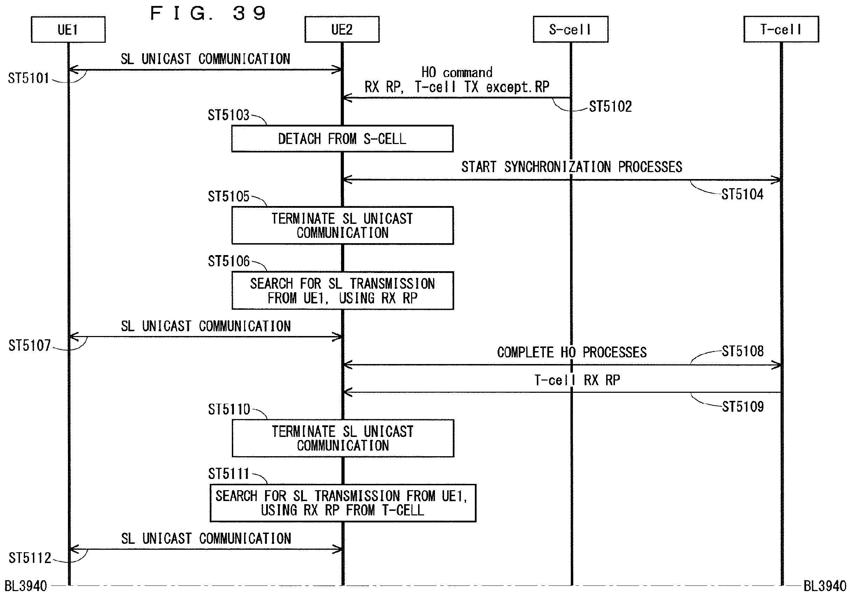

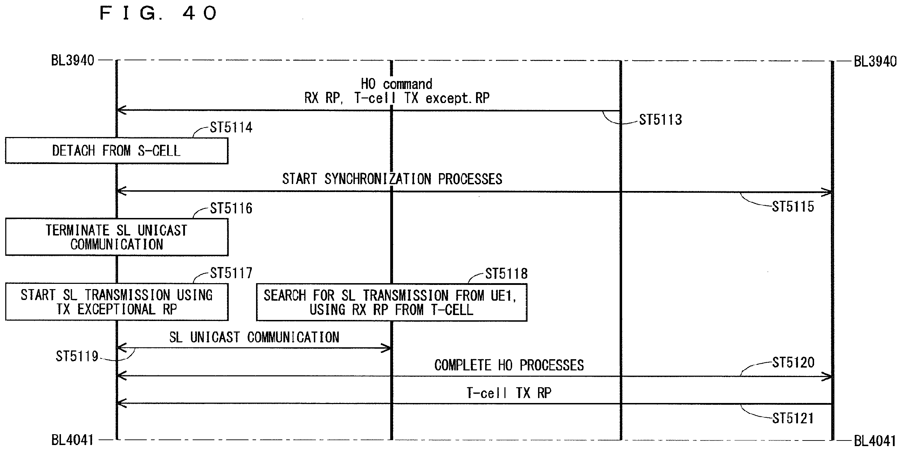

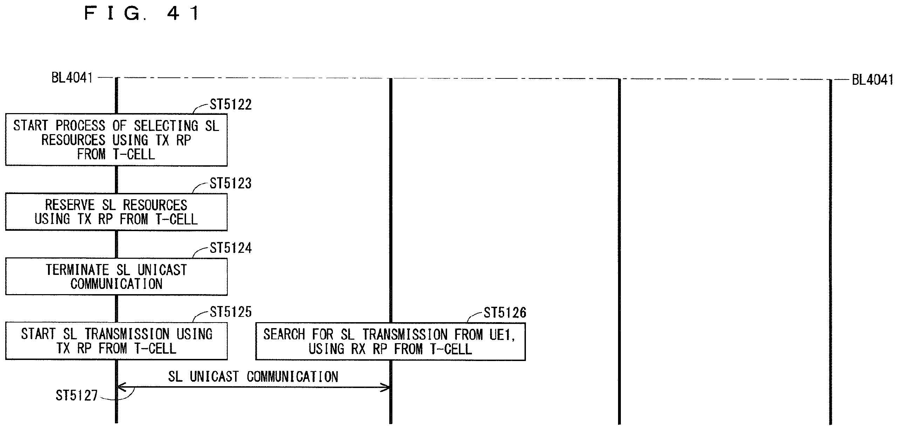

FIGS. 39 to 41 illustrate an example sequence of the HO during the SL communication. FIGS. 39 to 41 are connected across locations of borders BL3940 and BL4041. FIGS. 39 to 41 illustrate the sequence for performing the HO between the S-cell and the T-cell, using the method on the HO processes during the conventional SL communication. The UE 1 and the UE 2 perform the SL communication. The sequence in FIGS. 39 to 41 corresponds to the movement between the cells illustrated in FIG. 38. In Step ST5101, the UE 1 and the UE 2 perform the SL unicast communication. First, the UE 2 performs the HO to the T-cell. In Step ST5102, the UE 2 receives the HO command from the S-cell. The UE 2 receives, with the HO command, the reception RP information and the exceptional RP information in the target cell (T-cell).

The UE 2 detaches from the S-cell according to the HO command in Step ST5103, and performs the synchronization processes with the T-cell in Step ST5104. The UE 2 terminates the SL unicast communication in Step ST5105. In Step ST5106, the UE 2 searches for the SL transmission from the UE 1, using the reception RP received with the HO command. Upon receipt of the SL transmission from the UE 1, the UE 2 performs the SL unicast communication with the UE 1 again in Step ST5107.

The UE 2 completes the HO processes with the T-cell in Step ST5108. The UE 2 that has completed the HO to the T-cell receives the reception RP from the T-cell in Step ST5109. Upon receipt of the reception RP from the T-cell, the UE 2 terminates the SL unicast communication in Step ST5110. In Step ST5111, the UE 2 searches for the SL transmission from the UE 1, using the reception RP received from the T-cell. Upon receipt of the SL transmission from the UE 1, the UE 2 performs the SL unicast communication with the UE 1 again in Step ST5112.

Next, the UE 1 performs the HO to the T-cell. In Step ST5113, the UE 1 receives the HO command from the S-cell. The UE 1 receives, with the HO command, the reception RP information and the exceptional RP information in the target cell (T-cell).

The UE 1 detaches from the S-cell according to the HO command in Step ST5114, and performs the synchronization processes with the T-cell in Step ST5115. The UE 1 terminates the SL unicast communication in Step ST5116. The UE 1 selects the resources for the SL transmission from the exceptional RP received with the HO command, and performs the SL transmission.

The termination of the SL unicast communication in the UE 1 in Step ST5116 causes the UE 2 to terminate the SL unicast communication. Thus, the UE 2 searches for the SL transmission of the UE 1 again using the reception RP in Step ST5118. Upon receipt of the SL transmission from the UE 1, the UE 2 performs the SL unicast communication with the UE 1 again in Step ST5119.

The UE 1 completes the HO processes with the T-cell in Step ST5120. The UE 1 that has completed the HO to the T-cell receives the transmission RP from the T-cell in Step ST5121. Upon receipt of the transmission RP from the T-cell, the UE 1 performs the processes of searching for and selecting the resources for the SL transmission using the transmission RP in Step ST5122. The UE 1 reserves the resources for the SL transmission in Step ST5123. Since the UE 1 changes the resources for the SL transmission, the UE 1 terminates the ongoing SL unicast communication in Step ST5124. The UE 1 starts the SL transmission with the resources for the SL transmission reserved in Step ST5123.

The termination of the SL unicast communication in the UE 1 in Step ST5124 causes the UE 2 to terminate the SL unicast communication. Thus, the UE 2 searches for the SL transmission of the UE 1 again using the reception RP in Step ST5126. Upon receipt of the SL transmission from the UE 1, the UE 2 performs the SL unicast communication with the UE 1 again in Step ST5127.

When the UE during the SL communication performs the HO using the conventional method on the HO processes during the SL communication, the UE changes the resource pool as described above. Thus, problems of a break in the SL communication and frequent interruption of the service using the SL communication occur. The sixth embodiment discloses a method for solving such problems.

The UEs that perform the SL communication mutually notify allocation of the resources for the SL communication during the HO of the UEs. The resources for the SL communication may be the resources for the SL transmission from UE_tx to UE_rx or the resources for the SL transmission from UE_rx to UE_tx. UE_tx in the SL communication notifies UE_rx of allocation of the resources for the SL communication during the HO. UE_tx may also notify the RP information for the SL communication during the HO.

UE_tx may give the notification through the RRC connection in the unicast communication. UE_tx may give the notification using the PSCCH in the unicast communication. Alternatively, UE tx may give the notification via the MAC signaling or the RRC signaling.

UE_rx in the SL communication receives the transmission from UE_tx, using the resource allocation information for the SL communication during the HO which has been received from UE_tx. This can reduce the interruption of the SL communication due to change in the RP during the HO.

UE_rx may request UE_tx to change the allocation of resources. UE_rx may notify UE_tx of a request for changing the allocation of resources. UE_rx may provide cause information for requesting change in the allocation of resources, and include the information in the request for changing the allocation of resources. Examples of the cause information include information indicating a request for changing the allocation of resources for the HO processes and information indicating a request for changing the allocation of resources due to deterioration of communication quality. This enables UE_tx to change the allocation of resources according to a state of UE_rx.

UE_rx may notify UE_tx that its own UE has started the HO. The notification may include information indicating to which cell its own UE has started the HO. The notification may include an identifier of the cell. UE_rx may notify UE_tx of the RP information to be used for changing the allocation of resources. For example, the notification indicating that UE_rx has started the HO may include the exceptional RP information of the T-cell which has been received with the HO command. UE_tx may select the resources for the SL communication from the RP notified from UE_rx, and allocate the resources to UE_rx. UE_tx notifies UE_rx of the allocation of resources.

Consequently, UE_tx can recognize that UE_rx has started the HO processes, and determine using which RP the resources for the SL communication during the HO are reserved.

UE_rx may notify UE_tx that its own UE has completed the HO. The notification may include information indicating to which cell its own UE has completed the HO. The notification may include an identifier of the cell. UE_rx may notify UE_tx of the RP information to be used for changing the allocation of resources. For example, the notification indicating that UE_rx has completed the HO may include the transmission RP information of the T-cell. UE_tx may select the resources for the SL communication from the RP notified from UE_rx, and allocate the resources to UE_rx. UE_tx notifies UE_rx of the allocation of resources.

Consequently, UE_tx can recognize that UE_rx has completed the HO processes, and determine using which RP the resources for the SL communication during the HO are reserved.

What is previously disclosed is that UE_rx notifies UE_tx that its own UE has started and/or has completed the HO. Conversely, UE_tx may notify UE_rx that its own UE has started and/or has completed the HO. Information on the resource pool to be notified from UE_tx to UE_rx may be the reception RP information. This is effective when UE_tx performs the HO earlier.

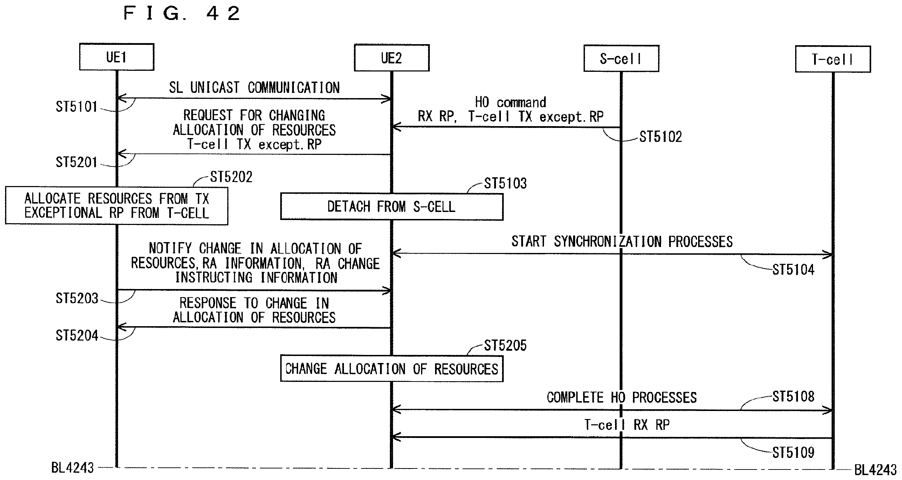

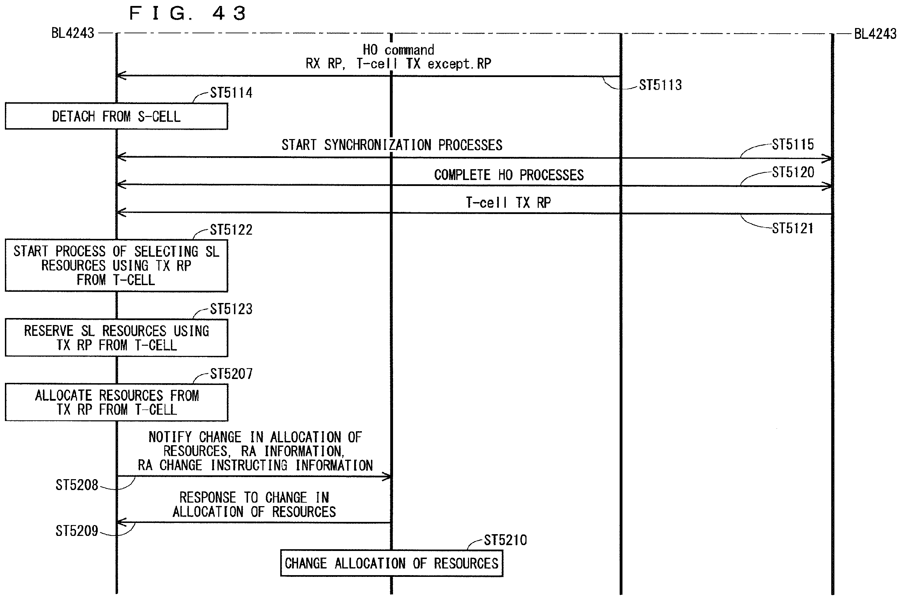

FIGS. 42 and 43 illustrate the first example sequence of the HO during the SL communication according to the sixth embodiment. FIGS. 42 and 43 are connected across a location of a border BL4243. In FIGS. 42 and 43, the same step numbers are applied to the steps common to those in FIGS. 39 to 41, and the common description thereof is omitted. First, the UE 2 performs the HO to the T-cell. In Step ST5102, the UE 2 receives the HO command from the S-cell. The UE 2 receives, with the HO command, the reception RP information and the exceptional RP information in the target cell (T-cell).

In Step ST5201, the UE 2 may notify the UE 1 of a request for changing the allocation of resources. The UE 2 may include, in the request, the exceptional RP information of the T-cell which has been received with the HO command, and notify the information. Upon receipt of the HO command, the UE 2 performs the HO to the T-cell. In Step ST5202, the UE 1 selects the resources for the SL communication from the exceptional RP of the T-cell, and allocates the resources to the UE 2.

In Step ST5203, the UE 1 notifies the UE 2 to change the allocation of resources. Information to be included in change in the allocation of resources is, for example, resource allocation information or resource allocation change instructing information. Upon receipt of the change, the UE 2 may notify the UE 1 of a response to the change in the allocation of resources in Step ST5204. Consequently, the UE 1 can recognize that the UE 2 changes the allocation of resources.

The UE 1 changes the allocation of resources, and transmits data for the SL unicast communication to the UE 2. In Step ST5205, the UE 2 changes the allocation of resources to the allocation of resources that has been notified from the UE 1, and receives the transmission from the UE 1. Consequently, the SL unicast communication between the UEs 1 and 2 can be continued during the HO of the UE 2 and after the completion of the HO.

Next, the UE 1 performs the HO to the T-cell. In Step ST5113, the UE 1 receives the HO command from the S-cell. The UE 1 receives, with the HO command, the reception RP information and the exceptional RP information in the target cell (T-cell). Upon receipt of the HO command, the UE 1 performs the HO to the T-cell. The UE 1 allocates the resources using the exceptional RP of the T-cell even during the HO, and continues the SL unicast communication with the UE 2.

The UE 1 completes the HO processes to the T-cell in Step ST5120. The UE 1 that has completed the HO to the T-cell receives the transmission RP from the T-cell in Step ST5121. Upon receipt of the transmission RP from the T-cell, the UE 1 performs the processes of searching for and selecting the resources for the SL transmission using the transmission RP in Step ST5122. The UE 1 reserves the resources for the SL transmission in Step ST5123.

In Step ST5207, the UE 1 allocates the resources for the SL unicast communication with the UE 2, using the reserved resources for the SL transmission. In Step ST5208, the UE 1 notifies the UE 2 to change the allocation of resources. Information to be included in change in the allocation of resources is, for example, the resource allocation information or the resource allocation change instructing information. Upon receipt of the change, the UE 2 may notify the UE 1 of a response to the change in the allocation of resources in Step ST5209. Consequently, the UE 1 can recognize that the UE 2 changes the allocation of resources.

The UE 1 changes the allocation of resources, and transmits data for the SL unicast communication to the UE 2. In Step ST5210, the UE 2 changes the allocation of resources to the allocation of resources that has been notified from the UE 1, and receives the transmission from the UE 1. Consequently, the SL unicast communication between the UEs 1 and 2 can be continued during the HO of the UE 1 and after the completion of the HO.

This can prevent the break in the SL communication and reduce the interruption of the service using the SL communication, even when the UE during the SL communication performs the HO.

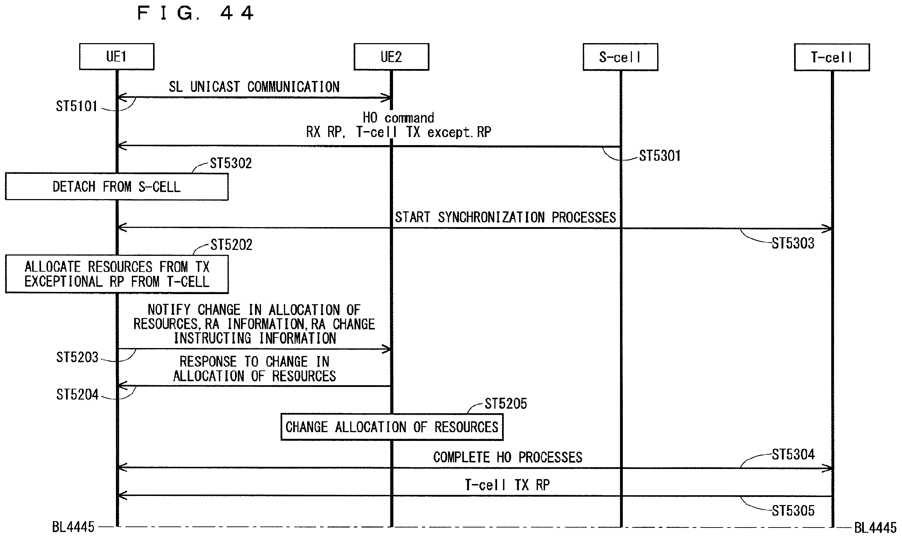

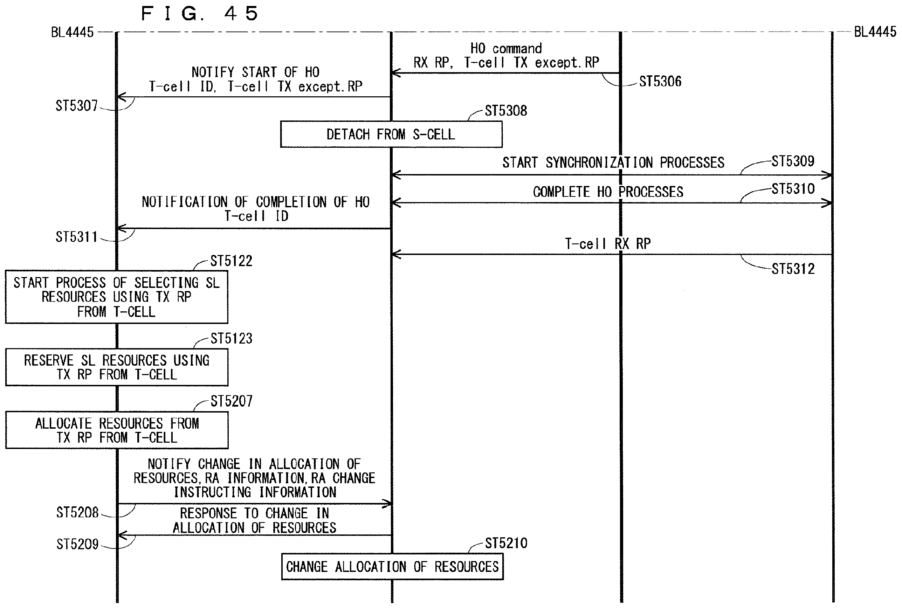

FIGS. 44 and 45 illustrate the second example sequence of the HO during the SL communication according to the sixth embodiment. FIGS. 44 and 45 are connected across a location of a border BL4445. FIGS. 44 and 45 illustrate a case where the UE 1 performs the HO earlier. In FIGS. 44 and 45, the same step numbers are applied to the steps common to those in FIGS. 39 to 41 and FIGS. 42 and 43, and the common description thereof is omitted. First, the UE 1 performs the HO to the T-cell. In Step ST5301, the UE 1 receives the HO command from the S-cell. The UE 1 receives, with the HO command, the reception RP information and the exceptional RP information in the target cell (T-cell).

The UE 1 detaches from the S-cell according to the HO command in Step ST5302, and performs the synchronization processes with the T-cell in Step ST5303. In Step ST5202, the UE 1 selects the resources for the SL communication from the exceptional RP of the T-cell, and allocates the resources to the UE 2.

In Step ST5203, the UE 1 notifies the UE 2 to change the allocation of resources. Information to be included in change in the allocation of resources is, for example, the resource allocation information or the resource allocation change instructing information. Upon receipt of the change, the UE 2 may notify the UE 1 of a response to the change in the allocation of resources in Step ST5204. Consequently, the UE 1 can recognize that the UE 2 changes the allocation of resources.

The UE 1 changes the allocation of resources, and transmits data for the SL unicast communication to the UE 2. In Step ST5205, the UE 2 changes the allocation of resources to the allocation of resources that has been notified from the UE 1, and receives the transmission from the UE 1. Consequently, the SL unicast communication between the UEs 1 and 2 can be continued during the HO of the UE 1 and after the completion of the HO.

The UE 1 completes the HO processes to the T-cell in Step ST5304. The UE 1 that has completed the HO to the T-cell receives the transmission RP from the T-cell in Step ST5305. Upon receipt of the transmission RP from the T-cell, the UE 1 may perform the processes of searching for and selecting the resources for the SL transmission and reserve the resources for the UE 2, using the transmission RP.

When the UE 1 recognizes that the UE 2 has not started the HO to the T-cell yet or the UE 2 is not in the T-cell, the UE 1 need not perform the processes of searching for and selecting the resources for the SL transmission and reserve the resources for the UE 2, using the transmission RP received from the T-cell. For example, the UE 2 may notify the UE 1 that its own UE has started and/or has completed the HO. This notification enables the UE 1 to recognize that the UE 2 has started or has completed the HO.

When the UE 1 is in the T-cell and the UE 2 is not in the T-cell yet, the use of the exceptional RP notified from the T-cell can reduce the interference to another cell.

Next, the UE 2 performs the HO to the T-cell. In Step ST5306, the UE 2 receives the HO command from the S-cell. The UE 2 receives, with the HO command, the reception RP information and the exceptional RP information in the target cell (T-cell). Upon receipt of the HO command, the UE 2 performs the HO to the T-cell. In Step ST5307, the UE 2 notifies the UE 1 of start of the HO. The UE 2 may include, in the notification of the start of the HO, an identifier of the T-cell that is a HO-target cell and the exceptional RP received with the HO command, and transmit the notification of the start of the HO. The UE 1 can recognize the cell from which the UE 2 has started the HO, and the exceptional RP. Consequently, the UE 1 can select the RP for the UE 2.

Since the UE 1 recognizes that the UE 2 starts the HO processes, the UE 1 determines to allocate the resources using the exceptional RP even during the HO, and continues the SL unicast communication with the UE 2.

The UE 2 detaches from the S-cell according to the HO command in Step ST5308, performs the synchronization processes with the T-cell in Step ST5309, and completes the HO processes to the T-cell in Step ST5310. The UE 2 that has completed the HO processes transmits the notification of completion of the HO to the UE 1 in Step ST5311. The UE 2 may include, in the notification of completion of the HO, the identifier of the T-cell that is a HO-target cell, and transmit the notification of completion of the HO. The UE 1 can recognize to which cell the UE 2 has completed the HO.

In Step ST5312, the UE 2 receives the reception RP in the T-cell. Here, the UE 2 need not search for the reception RP. Upon receipt of the notification of completion of the HO from the UE 2 in Step ST5311, the UE 1 recognizes that the UE 2 has completed the HO to the T-cell. In Step ST5122, the UE 1 performs the processes of searching for and selecting the resources for the SL transmission using the transmission RP of the T-cell. The UE 1 reserves the resources for the SL transmission in Step ST5123.

In Step ST5207, the UE 1 allocates the resources for the SL unicast communication with the UE 2, using the reserved resources for the SL transmission. In Step ST5208, the UE 1 notifies the UE 2 to change the allocation of resources. Information to be included in change in the allocation of resources is, for example, the resource allocation information or the resource allocation change instructing information. Upon receipt of the change, the UE 2 may notify the UE 1 of a response to the change in the allocation of resources in Step ST5209. Consequently, the UE 1 can recognize that the UE 2 changes the allocation of resources.

The UE 1 changes the allocation of resources, and transmits data for the SL unicast communication to the UE 2. In Step ST5210, the UE 2 changes the allocation of resources to the allocation of resources that has been notified from the UE 1, and receives the transmission from the UE 1. Consequently, the SL unicast communication between the UEs 1 and 2 can be continued during the HO of the UE 2 and after the completion of the HO.

The method disclosed in the sixth embodiment can prevent the break in the SL communication and reduce the interruption of the service using the SL communication, even when the UE during the SL communication performs the HO.

The gNB may schedule the resources to be used for the SL communication between the UEs. In such a case, the T-cell may notify the S-cell of the allocation of resources to be used for the SL communication. The S-cell notifies the UE that performs the HO of the resource allocation information in the T-cell. The S-cell may give the notification using the HO command. For example, when the UE 2 performs the HO, the UE 2 that has received the resource allocation information of the T-cell from the S-cell with the HO command notifies the UE 1 of a request for changing the allocation of resources. The notification should include the resource allocation information.

Upon receipt of the resource allocation information, the UE 1 performs the SL communication with the UE 2 using the resource allocation information. The UE 1 may transmit, to the UE 2, a notification for changing the allocation of resources including the resource allocation information. This enables earlier application of the allocation of resources scheduled by the gNB for the UE 2 to the SL communication.

For example, when the UE 1 performs the HO, the UE 1 that has received the resource allocation information of the T-cell from the S-cell with the HO command transmits, to the UE 2, the notification for changing the allocation of resources. The notification should include the resource allocation information. This enables the UE 1 to apply the allocation of resources scheduled by the gNB to the SL communication earlier.

The HO processes when the groupcast communication is performed in the SL are disclosed. The HO processes disclosed in the sixth embodiment should be applied between the head UE and the member UE that perform the groupcast communication. The head UE should correspond to the UE 1, and the member UE should correspond to the UE 2. The same applies to the presence of a plurality of member UEs. The head UE and the member UEs should perform the HO processes. The HO processes should be the ones disclosed in the sixth embodiment. This can reduce the interruption of the service using the SL communication in the HO during the groupcast communication in the SL.

The resource pool to be applied to the HO processes in the SL communication may be a resource pool that can be used by a plurality of cells or a plurality of base stations. The resource pool may be, for example, a resource pool that can be used in a RAN Notification Area (RNA). The movement within the RNA does not require change in the resource pool. This can reduce change in the allocation of resources due to change in the resource pool.

The resource pool may be statically determined, for example, in a standard or notified from the gNB to the UE using the SL. The resource pool may be included in the broadcast information to be broadcast, or notified via the RRC signaling or the MAC signaling. Alternatively, the resource pool may be included in L1/L2 control information to be notified. Furthermore, the S-cell may notify the UE of the resource pool in the HO processes. Alternatively, the T-cell may notify the UE of the resource pool through the S-cell. This enables the UE to allocate the resources from the resource pool.

### The Seventh Embodiment

The SL communication using two RATs (LTE and NR) has been studied in 3GPP. Furthermore, support of the V2X service using these two RATs (LTE RAT and/or NR RAT) has been proposed. A method for selecting the RAT by the upper layer and a method for selecting the RAT by the AS layers are disclosed as two methods for selecting the RAT (Non-Patent Document 32 (R2-1818221)).

What is disclosed is that protocol stacks of each of the RATs for the UE in the SL communication include the PDCP, the RLC, the MAC, and the PHY (Non-Patent Document 1 (TS36.300V15.4.0) and Non-Patent Document 33 (TR38.885V1.0.0)). However, a structure of protocol stacks when the two RATs are operated has not yet been disclosed. Here, the structure of protocol stacks when the two RATs are operated is disclosed.

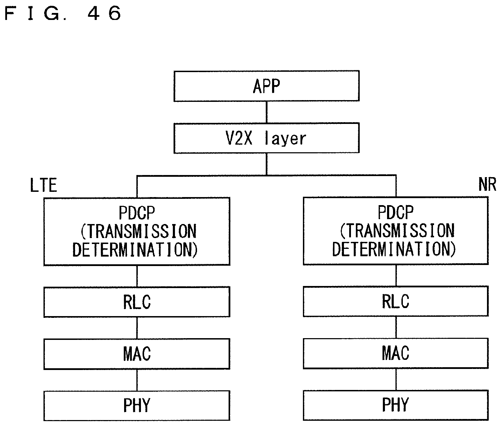

FIG. 46 illustrates a protocol structure when the AS layers select the RAT. An application layer and a V2X layer are structured. The PDCP, the RLC, the MAC, and the PHY in LTE and the PDCP, the RLC, the MAC, and the PHY in NR are structured under the V2X layer. In a transmitter, data output from the V2X layer is copied into two pieces of data in the V2X layer. Then, the copied two pieces of data separately enter the PDCP in LTE and the PDCP in NR. In a receiver, data output from the PDCP in LTE and data output from the PDCP in NR enter the application layer through the V2X layer.

Information indicating using which RAT data is transmitted (RAT information) is added to the data. The application layer or the V2X layer may add the RAT information. The application layer or the V2X layer should select using which RAT data is transmitted, according to the V2X service, and add the RAT information to the data. The PDCP in LTE determines whether to transmit the entered data using its own RAT (i.e., LTE), according to the RAT information added to the data. When the RAT information matches its own RAT, the PDCP in LTE determines to transmit the data using its own RAT, and performs the SL communication through the RLC, the MAC, and the PHY in LTE. Similarly, the PDCP in NR determines whether to transmit the entered data using its own RAT (i.e., NR), according to the RAT information added to the data. When the RAT information matches its own RAT, the PDCP in NR determines to transmit the data using its own RAT, and performs the SL communication through the RLC, the MAC, and the PHY in NR

This enables the PDCP in each RAT to determine whether to transmit data.

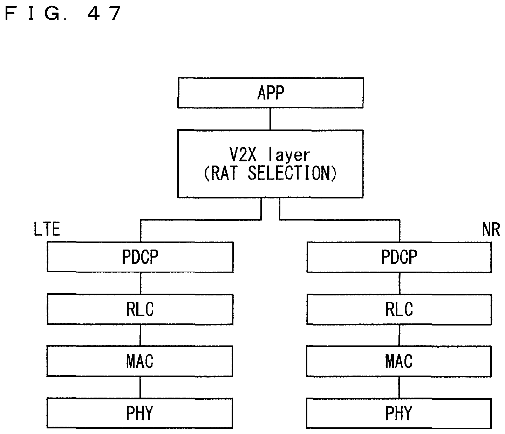

FIG. 47 illustrates a protocol structure when the V2X layer selects the RAT. In a transmitter, the V2X layer selects the RAT according to the RAT information, and enters transmission data into the PDCP in the selected RAT. In a receiver, data output from the PDCP in LTE and data output from the PDCP in NR enter the application layer through the V2X layer. The PDCP in LTE performs the SL communication (transmission) of the entered data through the RLC, the MAC, and the PHY in LTE. Similarly, the PDCP in NR performs the SL communication (transmission) of the entered data through the RLC, the MAC, and the PHY in NR

This enables the V2X layer to determine using which RAT data is transmitted.

According to the method disclosed in FIG. 46, once the PDCPs in both of the RATs receive all pieces of data from the V2X layer, the PDCPs determine whether to transmit the pieces of data. This method increases loads of the PDCPs in both of the RATs, and the power consumption. In contrast, according to the method disclosed in FIG. 47, the upper layer selects the RAT. Thus, the upper layer cannot flexibly select and change the RAT according to a state in the AS layers, for example, a radio communication quality or a load state in each RAT. Here, a method for solving such problems is disclosed.

The AS layers include a protocol stack for selecting the RAT. The AS layers include a protocol stack for changing the RAT. These protocol stacks may, for example, sit on top of the PDCPs or between the PDCPs and the V2X layer.

When both of the RATs are supported, the PDCP in each of the RATs adds the SN and the HFN. The PDCP in LTE adds the SN and the HFN, and the PDCP in NR adds the SN and the HFN. What is disclosed is that the PDCP in LTE adds the SN and the HFN when the PDCP duplicates a packet (PDCP duplication). When both of the RATs are supported, the PDCPs should add the SNs and the HFNs, irrespective of whether to duplicate a packet in the PDCPs.

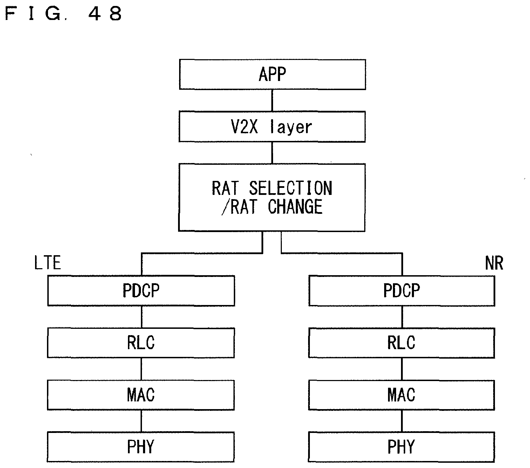

FIG. 48 illustrates a protocol structure when the AS layers include a protocol stack for selecting and/or changing the RAT (may be referred to as RAT selection/RAT change). FIG. 48 illustrates an example where the RAT selection/RAT change protocol is provided between the PDCPs and the V2X layer. The RAT selection/RAT change protocol determines using which RAT data entered from the V2X layer is transmitted, according to the RAT information added to the data.

Not only information indicating one RAT but also information indicating a plurality of RATs may be provided as the RAT information added to the data. The information indicating a plurality of RATs should be information indicating RATs allowing transmission of data. This is effective when the number of the RATs allowing transmission of data is not one but two or more. For example, when data of a predetermined V2X service may be transmitted in both of LTE and NR, the RAT information indicating LTE and NR should be used.

The RAT selection/RAT change protocol may select and/or change the RAT. For example, when the RAT information including the plurality of RATs is added to data, the RAT selection/RAT change protocol may select and/or change the RAT. The UE may notify the RAT selection/RAT change protocol of a state in the AS layers. This enables the UE to cause the RAT selection/RAT change protocol to select or change the RAT according to the state in the AS layers.

The AS layers select or change the RAT, so that the state in the AS layers can be reflected on the SL communication earlier. This can improve the communication quality of the SL communication with low latency, and satisfy the QoS required for the SL communication.

In a transmitter, the RAT selection/RAT change protocol that has determined using which RAT data is transmitted enters data into the PDCP in the determined RAT. The PDCP in LTE performs the SL communication (transmission) of the entered data through the RLC, the MAC, and the PHY in LTE. Similarly, the PDCP in NR performs the SL communication (transmission) of the entered data through the RLC, the MAC, and the PHY in NR

In a receiver, data output from the PDCP in LTE and data output from the PDCP in NR enter the RAT selection/RAT change protocol. The RAT selection/RAT change protocol sequentially enters data from the PDCP in each of the RATs into the V2X layer. Consequently, the data enters the application layer through the V2X layer.

This enables the AS layers to determine using which RAT data is transmitted. Furthermore, the data enters only the PDCP of the RAT allowing transmission of data. Consequently, increase in the loads of the PDCPs in both of the RATs and increase in the power consumption can be reduced.

When the RAT is changed, the UE that changes the RAT (UE_tx) should notify the peer UE with which the SL communication is performed (UE_rx) of change in the RAT. UE_rx can determine using which RAT data should be received. When LTE is used, UE_tx should transmit the change in the RAT via the SL signaling in LTE. When NR is used, UE_tx should transmit the change in the RAT via the SL signaling in NR. UE_tx may perform the transmission via the PC5 signaling, the RRC signaling, or the MAC signaling as the SL signaling. Alternatively, UE_tx may transmit the change in the RAT using the PSCCH, or the PSCCH and the PSSCH.

UE_tx transmits, to UE_rx, the RAT change notification. The RAT change notification may include, for example, RAT change instructing information, information on the RAT after change, or resource information in the RAT after change. The resource information may be, for example, resource pool information or the resource allocation information. This enables UE_rx to recognize change in the RAT in UE_tx.

UE_rx may transmit a request for changing the RAT to UE_tx. UE_rx may include, for example, RAT change request information in the request for changing the RAT. UE_rx may transmit, to UE_tx, information on a communication state such as communication quality information in the SL in the RAT prior to change, QoS parameter measurement value information in the RAT prior to change, or load state information in each RAT in UE_rx. UE_rx may transmit, to UE_tx, information not limited to information in the RAT prior to change but information in each RAT supported by the UE. UE_rx may include the information on a communication state in the request for changing the RAT and transmit the information.

Consequently, UE_tx can make the determination on change in the RAT, using the information received from UE_rx. When UE_tx determines to change the RAT, UE_tx and UE_rx may perform processes of releasing the SL connection in the RAT prior to change. Furthermore, UE tx may perform the SL connection processes with UE_rx in the RAT after change.

In UE_rx, both of the PDCP in the RAT prior to change and the PDCP in the RAT after change transmit data to the upper layer. The order of pieces of data is restored by reordering the pieces of data using the SNs and the HFNs added by the PDCPs in the respective RATs. However, data may be undelivered when the RAT is changed. A failure in transmission of the undelivered data in the RAT prior to change causes data loss. Here, a method for solving such a problem is disclosed.

UE_tx notifies the PDCP in the RAT prior to change of an instruction for forwarding the undelivered data. The undelivered data may be the entirety of data ranging from the oldest undelivered data to the latest undelivered data. The range may include delivered data. The PDCP in the RAT prior to change adds the SN and the HFN. The PDCP in the RAT prior to change may add an end marker indicating the end of data, into the last undelivered data. Alternatively, the PDCP in the RAT prior to change may insert the end marker behind the last undelivered data.

The PDCP in the RAT prior to change forwards the undelivered data in the RAT prior to change, to the PDCP in the RAT after change. UE_tx transmits the undelivered data in the RAT prior to change to UE_rx using the RAT after change. UE_tx may provide information indicating the PDCP data in the RAT prior to change, and add the information to the data to be forwarded. UE_tx determines whether data is undelivered data in the RAT prior to change, using the information indicating the PDCP data in the RAT prior to change. When determining that data received in the RAT after change is the undelivered data in the RAT prior to change, UE_tx forwards the undelivered data in the RAT prior to change, to the PDCP in the RAT prior to change. This enables transmission and reception of the undelivered data in the RAT prior to change, using the RAT after change.

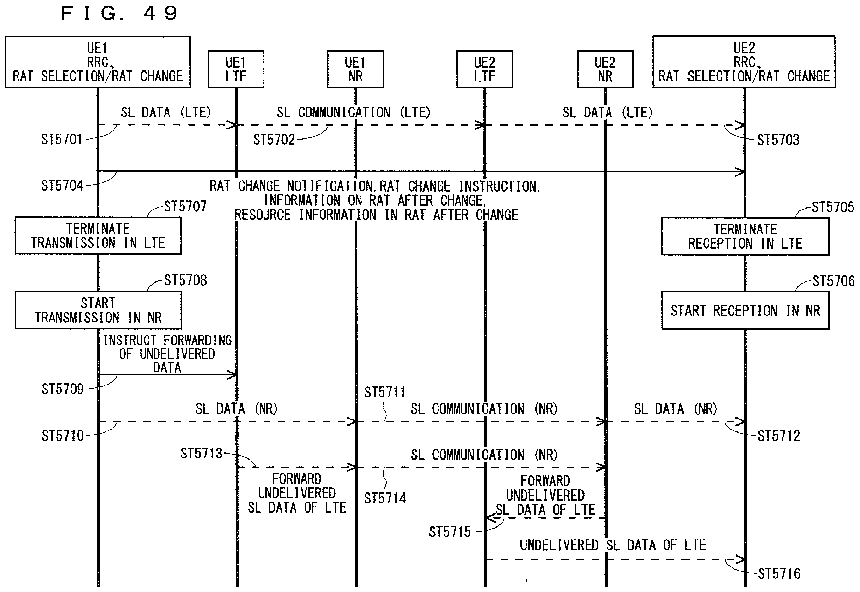

FIG. 49 illustrates an example sequence for changing the RAT. FIG. 49 illustrates an example where the UE 1 (UE_tx) and the UE 2 (UE_rx) that perform the SL communication change the RAT from LTE to NR. In FIG. 49, broken lines represent the control signaling, and solid lines represent data. FIG. 49 illustrates processes of each UE in the RRC, the RAT selection/RAT change protocol, the LTE protocol, and the NR protocol. In FIG. 49, the RAT selection/RAT change is abbreviated as RAT selection/change.

In Step ST5701, the UE 1 that performs SL transmission in LTE transmits the SL data in LTE from the RAT selection/RAT change protocol to the PDCP in LTE. The PDCP in LTE in the UE 1 adds the SN and the HFN to the entered data, and performs encryption and a header compression process on the data. In Step ST5702, the UE 1 transmits the data in LTE to the UE 2 through the LTE protocol in the SL.

In Step ST5703, the UE 2 passes the data received from the UE 1 through the LTE protocol. The PDCP in LTE in the UE 2 performs decryption and the reordering process, using the SN and the HFN. The UE 2 transmits the SL data processed by the PDCP in LTE to the RAT selection/RAT change protocol of the UE 2. The UE 2 transmits the SL data entered in the RAT selection/RAT change protocol to the V2X layer.

The RAT selection/RAT change protocol in the UE 1 changes the RAT. In Step ST5704, the RRC in the UE 1 transmits the RAT change notification to the UE 2. Here, change from LTE to NR is described. The RRC in the UE 1 may transmit the RAT change notification through the protocol of the LTE in the UE 1. The RAT change notification may include the RAT change instructing information, information on the RAT after change, and resource information in the RAT after change. The RRC in the UE 2 receives the RAT change information from the UE 1. The RRC in the UE 2 may receive the RAT change information through the protocol of the LTE in the UE 2. Consequently, the UE 2 can recognize change in the RAT.

The UE 2 may transmit, to the UE 1, a response to the RAT change notification. The UE 2 may transmit, as the response, acceptance or rejection. When the response is rejection, the UE 2 may include reason information on the rejection in the response, and notify the information. Examples of the reason information on the rejection may include overload and unsatisfactory communication quality. The reception of the response from the UE 2 enables the UE 1 to determine whether to change the RAT for the UE 2.

The UE 1 terminates the SL transmission process in LTE in Step ST5707, and starts the SL transmission process in NR in Step ST5708. The RRC in the UE 1 may notify each protocol in LTE of these processes. Each protocol in LTE in the UE 1 terminates the SL transmission process. The UE 2 terminates the SL reception process in LTE in Step ST5705, and starts the SL reception process in NR in Step ST5706. The RRC in the UE 1 may notify each protocol in LTE of these processes. Each protocol in LTE in the UE 2 terminates the SL reception process.

In Step ST5709, the RRC in the UE 1 instructs the protocol in LTE in the UE 1 to forward the SL data undelivered in LTE. The RRC in the UE 1 should instruct the PDCP in LTE to forward the SL data. The RRC in the UE 1 instructs the PDCP in LTE to forward the undelivered SL data to the PDCP in NR. The PDCP in LTE determines the undelivered data including data being transmitted as the SL data. The undelivered data should be data with a SN indicating no reception of a notification of the reception response from the UE 2. The PDCP in LTE may forward not only undelivered data with the oldest (smallest) SN and data with a SN newer (larger) than the oldest (smallest) SN, but also delivered data.

The UE 1 that has changed the RAT from LTE to NR transmits the SL data from the RAT selection/RAT change protocol to the PDCP in NR in Step ST5710. The PDCP in NR in the UE 1 adds the SN and the HFN to the data entered into the PDCP, and performs the encryption and the header compression process on the data. In Step ST5711, the UE 1 transmits the SL data to the UE 2 through the NR protocol in the SL.

In Step ST5712, the UE 2 passes the data received from the UE 1 through the NR protocol. The PDCP in NR in the UE 2 performs decryption and the reordering process, using the SN and the HFN. The UE 2 transmits the SL data processed by the PDCP in NR to the RAT selection/RAT change protocol in the UE 2. The UE 2 transmits the SL data entered in the RAT selection/RAT change protocol to the V2X layer.

The PDCP in LTE in the UE 1 that has instructed to forward the undelivered SL data to the PDCP in NR in the UE 1 forwards the undelivered SL data to the PDCP in NR in Step ST5713. The PDCP in NR of the UE 1 adds the SN and the HFN to the data entered into the PDCP, and performs the encryption and the header compression process on the data. Furthermore, the PDCP in NR may add information indicating that the data has been forwarded from the PDCP in LTE. In Step ST5714, the UE 1 transmits the forwarded undelivered data to the UE 2 through the NR protocol in the SL. The UE 1 that has forwarded the undelivered data in LTE to the PDCP in NR may discard the SL data being communicated in LTE. Since a wasteful transmission process need not be continued, the power consumption can be reduced.

The UE 2 passes the data received from the UE 1 through the NR protocol. The PDCP in NR in the UE 2 performs decryption and the reordering process, using the SN and the HFN. Furthermore, the PDCP in NR in the UE 2 can determine whether data is forwarded data or using which RAT the data has been forwarded, based on information indicating that the data has been forwarded from the PDCP in LTE. The PDCP in NR that has determined that the data has been forwarded from the PDCP in LTE forwards the undelivered data to the PDCP in LTE in Step ST5715.

The PDCP in LTE in the UE 2 performs decryption and the reordering process, using the SN and the HFN added by the PDCP in LTE in the UE 1. The UE 2 transmits the undelivered data processed by the PDCP in LTE to the RAT selection/RAT change protocol in Step ST5716.

When data is undelivered in changing the RAT or the transmission timing or the reception timing of the SL data is shifted between times before and after changing the RAT, the PDCPs in both of the RATs transmit the SL data. This may cause a problem of failing to restore the order of pieces of SL data, merely using the SNs added to the pieces of SL data. Here, a method for solving such a problem is disclosed. The undelivered data processed by the PDCP in LTE which is the RAT prior to change should be processed in preference over the data processed by the PDCP in NR which is the RAT after change.

The UE 2 that has been notified of change in the RAT may hold, in a memory, the data processed by the PDCP in NR until the PDCP in LTE processes the undelivered data in LTE and finishes transmitting the data to the RAT selection/RAT change protocol. After the PDCP in LTE processes the undelivered data in LTE and finishes transmitting the data to the RAT selection/RAT change protocol, the UE 2 should transmit the data processed by the PDCP in NR to the RAT selection/RAT change protocol. The UE 2 transmits the SL data entered in the RAT selection/RAT change protocol to the V2X layer. Consequently, the data undelivered in LTE can be transmitted in NR

This enables change in the RAT. Even when the RAT is changed, the process of forwarding the undelivered data can eliminate a loss of the SL data. Although change in the RAT from LTE to NR is disclosed in the example of FIG. 49, the RAT should be changed from NR to LTE in the similar manner. This can produce the same advantages as previously described.

The PDCP in LTE in the UE 1 may store, in a memory, the PDCP SDU after the SN indicating the SL data whose transmission cannot be verified (undelivered). The PDCP may forward the undelivered data in a state of the PDCP SDU. The PDCP in NR in the UE 1 may hold, in a memory, the data generated in NR until finishing the processes on the forwarded undelivered data. The PDCP in NR in the UE 1 should process the data generated in NR after finishing the processes on the forwarded undelivered data.

When the PDCP in LTE in the UE 1 forwards the undelivered data in a state of the PDCP SDU, the PDCP in NR in the UE 2 that has received the undelivered SL data transmitted through the UE 1 in NR may perform decryption and the reordering process on the undelivered SL data using the SN and the HFN, without forwarding the undelivered SL data to the PDCP in LTE. This is because when the PDCP in LTE in the UE 1 forwards the undelivered data in a state of the PDCP SDU, the data enters the PDCP in NR without addition of the SN and the HFN or the encryption and the header compression process performed by the PDCP in LTE, and the PDCP in NR adds the SN and the HFN and performs the encryption and the header compression process on the data. The processes of receiving the undelivered data in the UE 2 can be simplified.

The UE 2 enters the undelivered SL data processed by the PDCP in NR into the RAT selection/RAT change protocol, and transmits the data from the RAT selection/RAT change protocol into the V2X layer.

As described above, the PDCP may add an end marker to the end of the undelivered data in the RAT prior to change. The PDCP in LTE in the UE 1 adds the end marker to the end of the undelivered data, and forwards the data to the PDCP in NR. The UE 1 may preferentially process the data forwarded from the PDCP in LTE until the PDCP in NR receives the end marker, and process the data generated in NR after receiving the end marker.

Alternatively, the UE 2 may preferentially process the data forwarded from the PDCP in LTE until the PDCP in NR receives the end marker, and process the data generated in NR after receiving the end marker. The aforementioned methods should be applied to these processes. The end marker can specify the end of data requiring the forwarding process. This can reduce malfunctions caused by, for example, the timing offset in the processes in the UE 1 or the UE 2.

Another method is disclosed. The upper layer may add the sequence number (SN) to the SL data. For example, the application layer may add the SN to the SL data. Alternatively, the V2X layer may add the SN to the SL data. The upper layer in UE_tx adds the SNs to the pieces of SL data, and transmits the pieces of SL data with the SNs. The upper layer in UE_rx reorders the received pieces of SL data using the SNs. Even when the pieces of SL data are transmitted and received in a plurality of RATs, the upper layer can restore the order of the pieces of SL data using the SNs added by its own layer.

The upper layer may include information on the undelivered data in an instruction for forwarding the undelivered data, and notify the PDCP in the RAT prior to change of the information. The information on the undelivered data may be information on the oldest undelivered data or a bitmap indicating the undelivered data. The PDCP in the RAT prior to change should forward the undelivered data to the PDCP in the RAT after change, using the information on the undelivered data notified from the upper layer.

Not the upper layer but the AS layers that sit on top of the PDCP may have a function of adding the SN to the SL data. For example, the RAT selection/RAT change protocol may have the function of adding the SN to the SL data. Even when the pieces of SL data are transmitted and received in a plurality of RATs, the AS layers can restore the order of the pieces of SL data using the SNs added by its own layers.

Consequently, UE_rx can restore the order of the pieces of SL data even when the data is undelivered in changing the RAT. For example, even when the communication qualities in the RATs prior to change and after change cause a difference in retransmission time between the RATs, application of the aforementioned method enables UE_rx to restore the order of the pieces of SL data.

The method disclosed in the seventh embodiment enables the SL communication using a plurality of RATs per V2X service. Furthermore, the RAT can be changed, in the SL communication using a plurality of RATs. For example, when the communication quality in one RAT deteriorates, the RAT to be used for the SL communication can be changed to another RAT whose communication quality is better. This can improve the communication quality in the SL communication. Furthermore, the QoS required for the SL communication can be satisfied.

The first modification of the seventh embodiment

When the RAT is changed, a problem of failing to restore the order of pieces of SL data merely using the SNs added in the respective RATs occurs as described above. As a method for solving the problem, the seventh embodiment discloses, for example, a method for processing the undelivered data processed by the PDCP in LTE which is the RAT prior to change in preference over the data processed by the PDCP in NR which is the RAT after change, and a method for the upper layer or the RAT selection/RAT change protocol to add the SNs to the pieces of SL data and reordering the pieces of SL data using the SNs. However, these methods cause problems of, for example, increase in the latency time by the prioritizing process, increase in the functions of the upper layer or the RAT selection/RAT change protocol, complexity in the configuration of the UE, and increase in the power consumption. The first modification discloses a method for solving such problems.

The PDCP in each of two RATs assigns a series of SNs common to the RATs. The two RATs may be LTE and NR. The PDCP common to the two RATs (a common PDCP) may be provided. The common PDCP assigns the series of SNs common to the two RATs. The PDCP in each of the two RATs assigns a series of HFNs common to the RATs. The two RATs may be LTE and NR. The common PDCP may assign the series of HFNs common to the two RATs.

The PDCP in each of the two RATs may perform encryption common to the RATs. The common PDCP may perform the encryption common to the two RATs. Examples of the encryption include configuring an encryption key. The PDCP in each of the two RATs may configure the ROHC common to the RATs. The common PDCP may configure the ROHC common to the two RATs.

Selecting the RAT and/or changing the RAT may be functions of the common PDCP. Two PDCPs may be provided, and the PDCP functions may be allocated to the two PDCPs. For example, the PDCPs may be divided into a PDCP-1 and a PDCP-2, the PDCP-1 may have RAT common functions, and the PDCP-2 may have RAT dedicated functions. Examples of the RAT common functions may include assigning and managing the SNs, assigning and managing the HFNs, encryption, and a ROHC process.

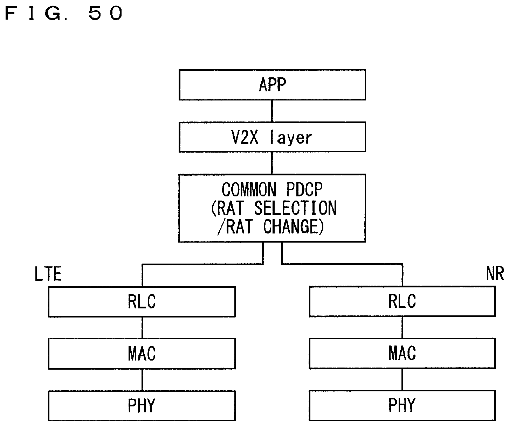

FIG. 50 illustrates a protocol structure including the common PDCP having the RAT common functions. The common PDCP is provided as a PDCP function common to LTE and NR. Furthermore, the common PDCP has a function of selecting the RAT and/or changing the RAT.

Processes of a transmitter are disclosed. The SL data to which the upper layer adds the RAT information is transmitted to the common PDCP. The common PDCP assigns a series of SNs and a series of HFNs that are common to LTE and NR, and performs common encryption, and a common ROHC process. With the function of selecting/changing the RAT of the common PDCP, the SL data is transmitted to the RLC in the RAT for performing the SL communication, using the RAT information. For example, when the RAT information of the SL data indicates LTE, the SL data is transmitted to the RLC in LTE, and the SL communication is performed on the data through the MAC and the PHY in LTE. When the RAT information of the SL data indicates NR, the SL data is transmitted to the RLC in NR, and the SL communication is performed on the data through the MAC and the PHY in NR

Processes of a receiver are disclosed. The SL data received in LTE enters the common PDCP through the PHY, the MAC, and the RLC in LTE. Furthermore, the SL data received in NR enters the common PDCP through the PHY, the MAC, and the RLC in NR. The common PDCP performs the encryption and the reordering, using a series of SNs and a series of HFNs assigned in common to LTE and NR. Since the series of SNs and the series of HFNs are assigned to LTE and NR, the common PDCP can reorder the received pieces of SL data in order of the entry, irrespective of the RATs in which the pieces of SL data are transmitted.

The pieces of SL data reordered by the common PDCP enter the V2X layer, and then enter the application layer through the V2X layer.

As such, sharing a part or the entirety of the functions of the PDCP as functions common to the two RATs enables, for example, reduction in the complexity in the configuration of the UE and reduction in increase in the power consumption when the RAT is changed.

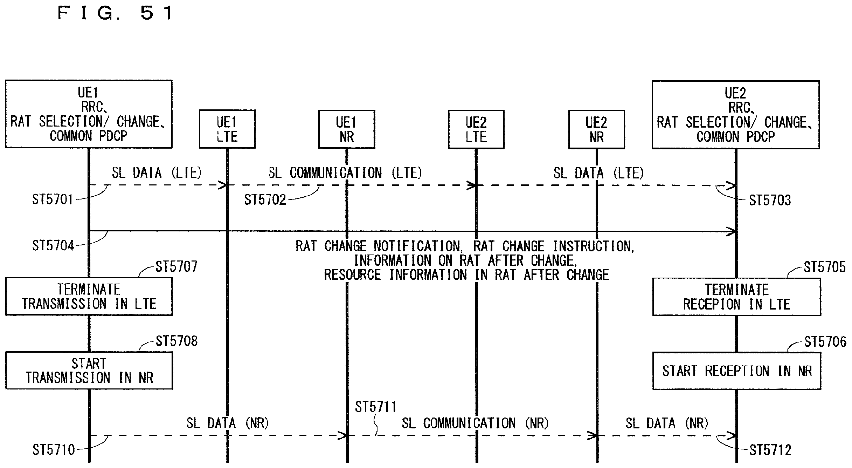

FIG. 51 illustrates an example sequence for changing the RAT according to the first modification of the seventh embodiment. In FIG. 51, the same step numbers are applied to the steps common to those in FIG. 49, and the common description thereof is omitted. FIG. 51 illustrates an example where the UE 1 (UE_tx) and the UE 2 (UE_rx) that perform the SL communication change the RAT from LTE to NR. In FIG. 51, broken lines represent the control signaling, and solid lines represent data. FIG. 51 illustrates processes of each UE in the RRC, the common PDCP, the LTE protocol, and the NR protocol. The common PDCP has the function of selecting/changing the RAT. In FIG. 51, the RAT selection/RAT change is abbreviated as RAT selection/change.

In the UE 1 that performs SL transmission in LTE, the upper layer transmits the SL data to the common PDCP. The common PDCP in the UE 1 assigns, to pieces of SL data, a series of SNs and a series of HFNs that are common to LTE and NR, and performs common encryption and a common ROHC process on the pieces of SL data. With the function of selecting/changing the RAT of the common PDCP, the RAT for performing the SL communication is identified using the RAT information added to the pieces of SL data. In Step ST5701, the common PDCP transmits the pieces of SL data to the RLC in the identified RAT. Here, the identified RAT is LTE.

The pieces of SL data transmitted to the RLC in LTE is transmitted to the UE 2 through the RLC, the MAC, and the PHY in LTE in Step ST5702 (SL transmission). In Step ST5703, the UE 2 transmits the data received from the UE 1 to the common PDCP through the LTE protocol. The common PDCP performs decryption and the reordering process, using the series of SNs and the series of HFNs assigned in common to LTE and NR. The UE 2 transmits the pieces of SL data processed by the common PDCP to the V2X layer.

The RAT selection/RAT change protocol in the UE 1 changes the RAT. In Step ST5704, the RRC in the UE 1 transmits the RAT change notification to the UE 2. The UE 1 terminates the SL transmission process in LTE in Step ST5707, and starts the SL transmission process in NR in Step ST5708. Since the common PDCP is common to LTE and NR, the processes may be continued from the termination of the SL transmission process in LTE to the start of the SL transmission process in NR. The processes need not be terminated. The UE 2 terminates the SL reception process in LTE in Step ST5705, and starts the SL reception process in NR in Step ST5706. Since the common PDCP is common to LTE and NR, the processes may be continued from the termination of the SL reception process in LTE to the start of the SL reception process in NR. The processes need not be terminated.

The common PDCP in the UE 1 that has changed the RAT from LTE to NR assigns a series of SNs and a series of HFNs that are common to LTE and NR to the pieces of SL data transmitted from the upper layer to the common PDCP, and performs the common encryption and the common ROHC process on the pieces of SL data. Specifically, the UE 1 continues the processes without any change, even when changing the RAT from LTE to NR

With the function of selecting/changing the RAT of the common PDCP, the RAT for performing the SL communication is identified using the RAT information added to the SL data. In Step ST5710, the common PDCP transmits the pieces of SL data to the RLC in the identified RAT. Here, the identified RAT is NR

The pieces of SL data transmitted to the RLC in NR are transmitted to the UE 2 through the RLC, the MAC, and the PHY in NR in Step ST5711 (SL transmission). In Step ST5712, the UE 2 transmits the data received from the UE 1 to the common PDCP through the NR protocol. The common PDCP performs decryption and the reordering process, using the series of SNs and the series of HFNs assigned in common to LTE and NR. Specifically, the processes are continues without any change, even when the RAT is changed from LTE to NR. The UE 2 transmits the pieces of SL data processed by the common PDCP to the V2X layer.

The method disclosed in the first modification enables assignment of the series of SNs and the series of HFNs to the pieces of SL data in the two RATs. Change in the RAT does not change the system of the SNs and the HFNs. Thus, the common PDCP can perform a process of reordering packets of the SL data. For example, processes of the upper layer in UE_tx for assigning different SNs with the function of selecting/changing the RAT, and processes of UE_rx for performing reordering using the SNs can be reduced. For example, the latency time, the complexity in the configuration of the UE, and increase in the power consumption can be reduced when the RAT is changed. Furthermore, the SL data can be communicated with low latency even when the RAT is changed.

According to the seventh embodiment and the first modification of the seventh embodiment, the UE may have the RRC for the SL for each RAT. Here, the RRC signaling in the RAT prior to change is performed via the RRC in the RAT prior to change. For example, when the RAT prior to change is LTE, the signaling for notifying change in the RAT is performed via the RRC in LTE. The RRC signaling in the RAT after change is performed via the RRC in the RAT after change. For example, when the RAT after change is NR, the RRC signaling is performed via the RRC in NR

The UE may have the RRC for the SL which is common to the RATs. Here, the RRC signaling in the RAT prior to change and the RRC signaling in the RAT after change are performed via the RRC common to the RATs. UE_tx performs the RRC signaling common to the RATs for UE_rx. Since a different configuration or a different signaling need not be made for each RAT, the processes in the RRC can be simplified. For example, the signaling for notifying change in the RAT should be the RRC signaling common to the RATs. Change in the RAT does not require change in the RAT to be used for the RRC signaling. This can simplify the SL communication processes between the UEs.

When the common PDCP is provided, the RRC data for each RAT may be transmitted to the common PDCP. Alternatively, the RRC data common to the RATs may be transmitted to the common PDCP. The common PDCP may process the RRC data. Application of the common PDCP can simplify the data processing via the RRC signaling.

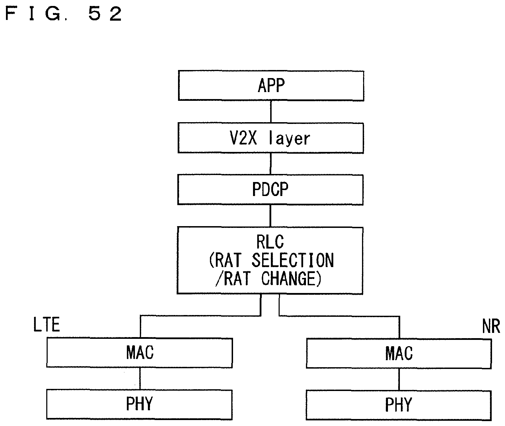

The RLC functions may be shared between the RATs. The RLC with the common RLC functions may be provided. The RLC with the common RLC functions may be hereinafter referred to as a common RLC. FIG. 52 illustrates a protocol structure including the common RLC. The common RLC for LTE and NR is provided. The common RLC is connected to the MAC in LTE and the MAC in NR. The common RLC may have the function of selecting and/or changing the RAT.

The common RLC may have a part or the entirety of the functions of the RLC. This enables, for example, reduction in the complexity in the configuration of the UE and reduction in increase in the power consumption when the RAT is changed.

### The second modification of the seventh embodiment

In LTE, the packet duplication is supported in the SL communication (Non-Patent Document 1 (TS36.300)). The PDCP layer performs the packet duplication. The packet duplication by the PDCP may be referred to as PDCP duplication. The PDCP duplication in the SL communication in NR has been studied in 3GPP. The PDCP duplication between the RATs of LTE and NR has also been studied (Non-Patent Document 35 (R2-1817107)).

As described in the seventh embodiment, the PDCP, the RLC, the MAC, and the PHY are provided as the protocol stacks of the UE in the SL communication. For example, when LTE and NR are used as the RATs, the PDCP in which one of the RATs, namely, LTE or NR performs the PDCP duplication is a problem. However, Non-Patent Document 35 fails to disclose the PDCP in which one of a plurality of RATs is used. The second modification discloses a method for solving the problem.

The PDCP in LTE performs the PDCP duplication between the RATs. The PDCP in LTE is connected to the RLC in LTE and the RLC in NR. The transmitter duplicates data to create data to be transmitted in LTE and data to be transmitted in NR, as a PDCP duplication function between the RATs. The pieces of data duplicated by the PDCP are transmitted to the RLC in LTE and the RLC in NR. The receiver detects the presence or absence of redundancy in the pieces of data transmitted from the RLC in LTE and the RLC in NR. In the presence of the redundancy, the receiver discards one of the pieces of data.

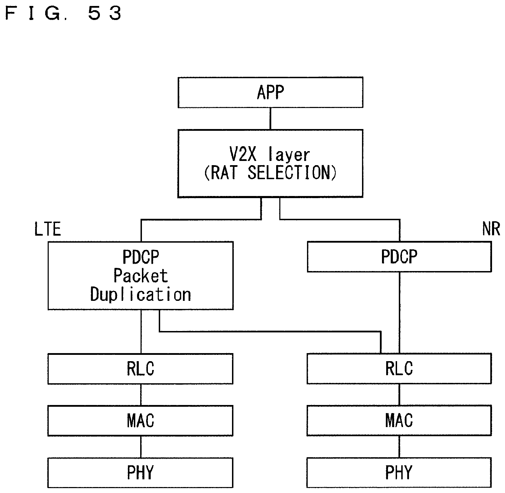

FIG. 53 illustrates a protocol structure when the PDCP in LTE performs the PDCP duplication during operations in LTE and NR. The protocol structure disclosed in the seventh embodiment when the V2X layer selects the RAT is used as a protocol structure using the two RATs (LTE and NR). The application layer and the V2X layer are structured. The PDCP, the RLC, the MAC, and the PHY in LTE, and the PDCP, the RLC, the MAC, and the PHY in NR are structured under the V2X layer. The PDCP in LTE has a packet duplication function. The PDCP in LTE is connected to the RLC in LTE and the RLC in NR

In the transmitter, the V2X layer selects the RAT according to the RAT information, and enters data into the PDCP in the selected RAT. The PDCP in LTE duplicates the received data. The PDCP should duplicate the PDCP PDU. The duplicated pieces of data have the same SN and the same HFN. The PDCP in LTE transmits the duplicated pieces of data to the RLC in LTE and the RLC in NR

The data entered into the RLC in LTE is transmitted through the MAC and the PHY in LTE (SL transmission). The data entered into the RLC in NR is transmitted through the MAC and the PHY in NR (SL transmission).

In the receiver, the PDCP-duplicated data received through the PHY, the MAC, and the RLC in LTE is transmitted to the PDCP in LTE. Furthermore, the PDCP-duplicated data received through the PHY, the MAC, and the RLC in NR is transmitted to the PDCP in LTE. The PDCP in LTE detects the presence or absence of redundancy in the pieces of PDCP-duplicated data transmitted from the RLC in LTE and the RLC in NR. In the presence of the redundancy, the PDCP discards one of the pieces of data. The PDCP enters the duplicated data into the V2X layer. The V2X layer enters the data into the application layer.

The RLC in NR in the receiver has to transmit the PDCP-duplicated data to the PDCP in LTE. Without any ingenuity, the RLC in NR ends up in transmitting the PDCP-duplicated data to the PDCP in NR. A method for solving such a problem is disclosed.

In the transmitter, the PDCP that performs the PDCP duplication adds information indicating the PDCP-duplicated data or not, to the duplicated pieces of data as the PDCP duplication function between the RATs. The RLC determines whether data is the PDCP-duplicated data, using the information indicating the PDCP-duplicated data or not. When the RLC determines that the data is the PDCP-duplicated data, the RLC adds the information indicating the PDCP-duplicated data or not, to the data. The RLC may remove the information indicating the PDCP-duplicated data or not which has been added by the PDCP, from the data.

The RLC in the receiver determines whether data is the PDCP-duplicated data, using the information indicating the PDCP-duplicated data or not which has been added by the PDCP in the transmitter. When the RLC determines that the data is the PDCP-duplicated data, the RLC transmits the data to the PDCP in the RAT in which the PDCP duplication has been performed. The RLC may remove the added information indicating the PDCP-duplicated data or not, and transmit the data to the PDCP.

Provision of such a function in each of the PDCP and the RLC enables the RLC in NR to transmit the PDCP-duplicated data to the PDCP in LTE.

Another method for enabling the RLC in NR to transmit the PDCP-duplicated data to the PDCP in LTE is disclosed. The dual connectivity (DC) between the RATs (LTE and NR) and the method on the packet duplication using the DC that are supported by the Uu interface should be applied (Non-Patent Document 1 (TS36.300) and Non-Patent Document 16 (TS38.300)). When the PDCP duplication is performed between the RATs in the SL communication, the DC should be configured between the RATs in the SL communication.

The PDCP in NR may perform the PDCP duplication between the RATs. The PDCP in NR is connected to the RLC in NR and the RLC in LTE. The transmitter duplicates data to create data to be transmitted in NR and data to be transmitted in LTE, as a PDCP duplication function between the RATs. The PDCP in NR transmits the duplicated pieces of data to the RLC in NR and the RLC in LTE. The receiver detects the presence or absence of redundancy in the pieces of data transmitted from the RLC in NR and the RLC in LTE. In the presence of the redundancy, the receiver discards one of the pieces of data.

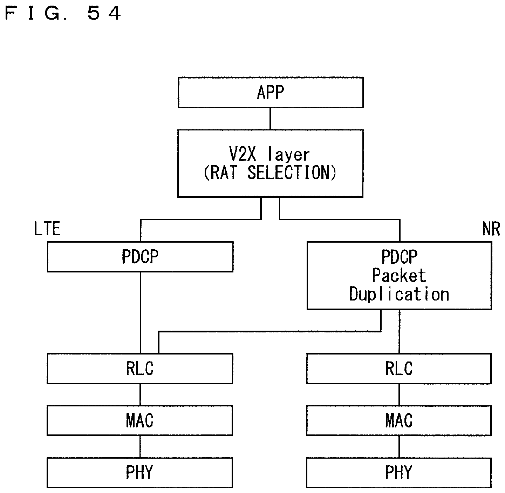

FIG. 54 illustrates a protocol structure when the PDCP in NR performs the PDCP duplication during operations in LTE and NR. The protocol structure disclosed in the seventh embodiment when the V2X layer selects the RAT is used as the protocol structure using the two RATs (LTE and NR). The application layer and the V2X layer are structured. The PDCP, the RLC, the MAC, and the PHY in LTE, and the PDCP, the RLC, the MAC, and the PHY in NR are structured under the V2X layer. The PDCP in NR has the packet duplication function. The PDCP in NR is connected to the RLC in NR and the RLC in LTE.

In the transmitter, the V2X layer selects the RAT according to the RAT information, and enters data into the PDCP in the selected RAT. The PDCP in NR duplicates the received data. The PDCP should duplicate the PDCP PDU. The duplicated pieces of data have the same SN and the same HFN. The PDCP in NR transmits the duplicated pieces of data to the RLC in NR and the RLC in LTE.

The data entered into the RLC in NR is transmitted through the MAC and the PHY in NR (SL transmission). The data entered into the RLC in LTE is transmitted through the MAC, and the PHY in LTE (SL transmission).

In the receiver, the PDCP-duplicated data received through the PHY, the MAC, and the RLC in NR is transmitted to the PDCP in NR. Furthermore, the PDCP-duplicated data received through the PHY, the MAC, and the RLC in LTE is transmitted to the PDCP in NR. The PDCP in NR detects the presence or absence of redundancy in the pieces of PDCP-duplicated data transmitted from the RLC in NR and the RLC in LTE. In the presence of the redundancy, the PDCP discards one of the pieces of data. The PDCP enters the duplicated data into the V2X layer. The V2X layer enters the data into the application layer.

The method for the RLC in NR to transmit the PDCP-duplicated data to the PDCP in LTE should be appropriately applied to a method for the RLC in LTE to transmit the PDCP-duplicated data to the PDCP in NR. This can produce the same advantages as previously described.

Although the PDCP having the PDCP duplication function between the RATs is limited to the PDCP in LTE or the PDCP in NR in the protocol structures for the SL communication in FIGS. 53 and 54, the PDCP is not limited to the ones in these examples. For example, both of the PDCPs in LTE and NR may have the PDCP duplication functions between the RATs. The PDCP in LTE with the PDCP duplication function is connected to the RLC in LTE and the RLC in NR, and the PDCP in NR with the PDCP duplication function is connected to the RLC in LTE and the RLC in NR. Consequently, the PDCP duplication can be performed on the SL data to be transmitted in LTE and the data to be transmitted in NR

Although the V2X layer selects the RAT in the examples of FIGS. 53 and 54, the selection is not limited to these examples. The aforementioned method may be applied to a protocol structure when the AS layers select the RAT. This can produce the same advantages as previously described. Examples of the protocol structure when the AS layers select the RAT include the protocol structure disclosed in the seventh embodiment.

The PDCP duplication function between the RATs may be the function of the common PDCP disclosed in the first modification of the seventh embodiment. The common PDCP may perform the PDCP duplication between the RATs. The common PDCP is connected to the RLC in NR and the RLC in LTE. The transmitter duplicates data to create data to be transmitted in NR and data to be transmitted in LTE, as the PDCP duplication function between the RATs. The common PDCP transmits the duplicated pieces of data to the RLC in NR and the RLC in LTE. The common PDCP may turn off the function of selecting/changing the RAT when performing the PDCP duplication between the RATs. The common PDCP in the receiver detects the presence or absence of redundancy in the pieces of data transmitted from the RLC in NR and the RLC in LTE. In the presence of the redundancy, the common PDCP discards one of the pieces of data.

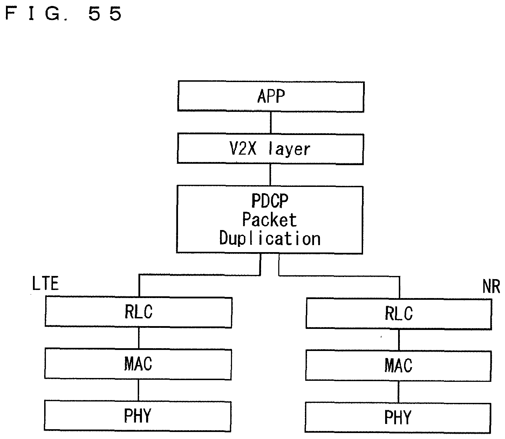

FIG. 55 illustrates a protocol structure when the common PDCP performs the PDCP duplication during operations in LTE and NR. The protocol structure including the common PDCP disclosed in the first modification of the seventh embodiment is used. The common PDCP sits under the V2X layer. The common PDCP is connected to the RLC in NR and the RLC in LTE. The common PDCP has the packet duplication function.

Information on the packet duplication may be provided as one piece of the RAT information. The RAT information indicating the packet duplication between the RATs may be provided. When the RAT information indicating the packet duplication is added to data, the common PDCP may performs the PDCP duplication. Alternatively, the AS layers may determine whether to perform the PDCP duplication between the RATs. For example, the RRC may determine whether to perform the PDCP duplication between the RATs. When it is determined that the PDCP duplication is performed, the common PDCP may perform the PDCP duplication.

In the transmitter, the V2X layer enters the SL data into the common PDCP. The common PDCP duplicates the received data. The common PDCP should duplicate the PDCP PDU. The pieces of data duplicated by the common PDCP have the same SN and the same HFN. The pieces of data duplicated by the common PDCP are transmitted to the RLC in LTE and the RLC in NR

The data entered into the RLC in LTE is transmitted through the MAC and the PHY in LTE (SL transmission). The data entered into the RLC in NR is transmitted through the MAC and the PHY in NR (SL transmission).

In the receiver, the PDCP-duplicated data received through the PHY, the MAC, and the RLC in LTE is transmitted to the common PDCP. Furthermore, the PDCP-duplicated data received through the PHY, the MAC, and the RLC in NR is transmitted to the common PDCP. The common PDCP detects the presence or absence of redundancy in the pieces of PDCP-duplicated data transmitted from the RLC in NR and the RLC in LTE. In the presence of the redundancy, the common PDCP discards one of the pieces of data. The common PDCP enters the duplicated data into the V2X layer. The V2X layer enters the data into the application layer.

As such, the PDCP duplication function between the RATs in the common PDCP enables the RLC in each RAT in the receiver to transmit the SL data to the common PDCP when the PDCP duplication between the RATs is performed, irrespective of whether the data is the PDCP-duplicated data. Functions for determining whether the SL data is the PDCP-duplicated data can be reduced. Thus, the structure for the PDCP duplication in the UE can be simplified, and increase in the power consumption can be reduced.

The configuration of the DC in the SL communication, and the signaling for configuring the PDCP duplication using the DC are disclosed. The DC and the PDCP duplication using the DC are configured via the RRC signaling in the SL. UE_tx that is a transmission UE should notify UE_rx that is a reception UE of the configuration of the DC via the RRC signaling in the SL. UE_tx should notify UE_rx of the configuration of the PDCP duplication using the DC, via the RRC signaling in the SL. This enables the PDCP duplication between the RATs, using the PDCP in LTE.

The UE may have the RRC for the SL for each RAT. Here, the RRC for each RAT configures the DC in the SL communication and the PDCP duplication using the DC. For example, the RRC in LTE configures the DC in LTE and the PDCP duplication using the DC in LTE. The RRC in NR configures the DC in NR and the PDCP duplication using the DC in NR. Furthermore, UE_tx notifies UE_rx of the configurations via the RRC signaling for each RAT.

The UE may have the RRC for the SL which is common to the RATs. Here, the RRC common to the RATs configures the DC in the SL communication and the PDCP duplication using the DC. Furthermore, UE_tx notifies UE_rx of the configuration via the RRC signaling common to the RATs. Since a different configuration or a different signaling need not be made for each RAT, the processes by the RRC can be simplified. Furthermore, the RRC common to the RATs should be applied when the common PDCP performs the PDCP duplication. The common PDCP need not be configured dedicatedly for each RAT.

A part or the entirety of RRC data for the SL may be communicated using the DC. Furthermore, a part or the entirety of the RRC data for the SL may be duplicated through the PDCP duplication using the DC. This can enhance the reliability of the RRC data.

The method disclosed in the second modification enables the PDCP duplication between a plurality of RATs including LTE and NR. The SL communication with high reliability, and the SL communication according to the QoS required for the service become possible.

The embodiments and the modifications are mere exemplifications, and can be freely combined. The arbitrary constituent elements of the embodiments and the modifications can be appropriately modified or omitted.

For example, a subframe in the embodiments and the modifications is an example time unit of communication in the fifth generation base station communication system. The subframe may be configured per scheduling. The processes described in the embodiments and the modifications as being performed per subframe may be performed per TTI, per slot, per sub-slot, or per mini-slot.

While the present invention is described in detail, the foregoing description is in all aspects illustrative and does not restrict the present invention. Therefore, numerous modifications and variations that have not yet been exemplified are devised.

### Description of References

- 200: communication system,
- 202: communication terminal device,
- 203: base station device.

## Claims

1. A communication system, comprising:
- a communication terminal;
- a plurality of base stations configured to perform radio communication with the communication terminal; and
- a host device of the plurality of base stations,
wherein one of a serving base station of the communication terminal and the host device selects, from among the plurality of base stations, a positioning base station that transmits a positioning signal for measuring a position of the communication terminal,
the positioning base station transmits the positioning signal,
the communication terminal receives the positioning signal,
one of the communication terminal, the serving base station, and the host device estimates the position of the communication terminal, based on a reception result of the positioning signal from the communication terminal, and
a specific-precision positioning base station that can communicate with the communication terminal via direct waves is selected as the positioning base station when positioning precision required for positioning of the communication terminal is higher than or equal to specific precision.

2. The communication system according to claim 1,
wherein an entity that selects the positioning base station differs according to the positioning precision.

3. The communication system according to claim 1 or 2,
wherein the specific-precision positioning base station is selected based on a result of estimating feasibility of the communication via the direct waves using propagation losses and propagation delay.

4. The communication system according to one of claims 1 to 3,
wherein another communication terminal and the other base stations terminate communication during a period when the positioning base station transmits the positioning signal and the communication terminal receives the positioning signal.

5. A base station configured to perform radio communication with a communication terminal,
wherein the base station selects a positioning base station that transmits a positioning signal for measuring a position of the communication terminal, and the base station selects, as the positioning base station, a specific-precision positioning base station that can communicate with the communication terminal via direct waves when positioning precision required for positioning of the communication terminal is higher than or equal to specific precision.

6. The base station according to claim 5,
wherein the base station estimates the position of the communication terminal, based on a reception result of the positioning signal from the communication terminal.

7. A host device of a plurality of base stations configured to perform radio communication with a communication terminal,
wherein the host device selects, from among the plurality of base stations, a positioning base station that transmits a positioning signal for measuring a position of the communication terminal, and
the host device selects, as the positioning base station, a specific-precision positioning base station that can communicate with the communication terminal via direct waves when positioning precision required for positioning of the communication terminal is higher than or equal to specific precision.

8. The host device according to claim 7,
wherein the host device estimates the position of the communication terminal, based on a reception result of the positioning signal from the communication terminal.
